# EUROPEAN PATENT APPLICATION

(11) **EP 4 830 536 A2**
(43) Date of publication of application: **28.10.2026**
(21) Application number: 26179606.4
(22) Date of filing: 08.01.2021
(51) Int. Cl.: A23L 27/30, A23L 29/30, A23L 33/21, C08B 37/00

(54) **OLIGOSACCHARIDE COMPOSITIONS AND METHODS OF MAKING THEM**

(30) Priority: 10.01.2020 US 202062959810 P
(62) Document number(s) of the earlier application(s) in accordance with Art. 76 EPC: 21701228.5 / 4 087 413
(71) Applicant: Cambridge Glycoscience Ltd, Babraham, Cambridge CB22 3AT (GB)
(72) Inventor: SIMMONS, Thomas J, Cambridge, CB1 3UG (GB); BARTOSIAK-JENTYS, Jeremy, Greater London, CH1 2QS (GB)
(74) Representative: Kutzenberger Wolff & Partner

(57) **Abstract**

Compositions that can be used in foodstuff, cosmetic, or nutraceutical products, and consumer products comprising such compositions are provided. The compositions may comprise at least one or more oligosaccharides and one or more components. The compositions may comprise a sweet taste and may be suitable to be used as sweeteners, binders, and/or fiber content enhancers in finished products such as consumable products. The compositions may provide a favorable sweet taste, a desirable texture, or other desirable characteristics.

## Description

### CROSS-REFERENCE TO RELATED APPLICATIONS

This application claims priority to US Provisional Patent Application Ser. No. 62/959,810, filed January 10, 2020. The entire contents of the aforementioned patent application are incorporated herein by reference.

### BACKGROUND

Sugary foods and drinks are generally a common part of cultural and lifestyle habits across the world, but the sugar they contain has been linked to obesity, diabetes, poor dental health, and disruptive behavior in people. Because of this, consumer preferences have been shifting away from sugar-containing foods, and governments are increasingly implementing regulations to encourage the consumption of less sugar.

As such, industry has been searching for appropriate low-calorie sweeteners for many decades to substitute for sugar in food and beverages. Unfortunately, many sugar substitutes are produced from non-natural resources, and often include bitter undertones or other unpleasant tastes along with their sweetness, both of which consumers can find unappealing. Moreover, while many sweeteners are able to mimic the sweetness of sugar in food and drinks, few are able to mimic the broad range of roles that sugar plays in food, such as adding bulk, modulating texture, providing structure, acting as a preservative, and modulating color and flavor through caramelization and Maillard reactions. In addition, many bulking sweeteners that are able to mimic these physical properties of sugar have gastrointestinal tolerance issues that limit their use well below the amount required to replace sugar in a standard Western diet.

Dietary fiber is an important part of a positive diet and helps maintain digestive health and a well-regulated gut flora. Such fiber comprises saccharides of varying chain lengths and types. In addition to being found naturally in a wide spectrum of foods, fiber can also be produced separately and added to other foods during their manufacture.

### SUMMARY

In some aspects, described herein are sweetener compositions comprising: an oligosaccharide component comprising xylo-oligosaccharides with a degree of polymerization (DP) from two to twelve and cello-oligosaccharides with a DP from two to six. In some cases, the xylo-oligosaccharides and cello-oligosaccharides are present at a w/w ratio from 19:1 to 1:1. In some cases, the compositions comprises a high-intensity sweetener, wherein the oligosaccharide component and the high-intensity sweetener are present at a w/w ratio from 5000:1 to 50:1.

In some embodiments, the high-intensity sweetener may comprise a natural high-intensity sweetener, an artificial high-intensity sweetener, or a combination thereof.

In some embodiments, the high-intensity sweetener may comprise acesulfame potassium (Ace-K), advantame, aspartame, neotame, saccharin, a Siraitia grosvenorii Swingle (Luo Han Guo) fruit extract (SGFE), a steviol glycoside, sucralose, a clyclamate, a sugar alcohol (polyol), glycyrrhizin, neohesperidin dihydrochalcone, thaumatin, or any combination thereof.

In some embodiments, the cello-oligosaccharides and xylo-oligosaccharides are present at a w/w ratio of 1:10 to 7:10 in the sweetener composition. In some embodiments, the cello-oligosaccharides and xylo-oligosaccharides are present at a w/w ratio of 1:5 to 7:10 in the sweetener composition. In some embodiments, a ratio of the first component to the second component may be from 500:1 to 50:1 by dry weight.

T In some embodiments, the average sweetness level per unit weight of the second component may be greater than an average sweetness level of the first component.

In some embodiments, the average sweetness level per unit weight of the second component may be at least 1.5 times, 2 times, 5 times, 10 times, 20 times, 50 times, 70 times, 90 times, 100 times, 150 times, or 200 times greater than an average sweetness level of the first component.

In some embodiments, a relative sweetness level of the high-intensity sweetener versus sucrose may be from 20:1 to 20,000:1. In some embodiments, the relative sweetness level of the high-intensity sweetener versus sucrose may be from 30:1 to 600:1. In some embodiments, the average sweetness may be a sweetness perception by a human subject. In some embodiments, the weight ratio of the second component to the composition may be from 1:20,000 to 1:20. In some embodiments, the weight ratio of the second component to the composition may be from 1:2,000 to 1:50. In some embodiments, the weight ratio of the second component to composition may be from 1:1000 to 1:100.

In some embodiments, the first component decreases an average bitterness level per unit weight of the composition as compared to a control composition, wherein the control composition may be a composition made using the high-intensity sweetener as the first and second component.

In some embodiments, the first component decreases an average bitter aftertaste per unit weight of the composition as compared to a control composition, wherein the control composition may be a composition made using the high-intensity sweetener as the first and second component.

In some embodiments, the average bitterness may be bitterness perception by a human subject.

In some embodiments, the average bitter aftertaste may be bitter aftertaste perception by a human subject.

In some embodiments, the composition may comprise less than 70%, 60%, 55%, 50%, 45%, 40%, 35%, 30%, 25%, 20%, 10%, 5%, or 1% by dry weight monosaccharides. In some embodiments, the composition may be substantially free of monosaccharides. In some embodiments, the monosaccharides comprise glucose, fructose, galactose, or any combination thereof.

In some embodiments, the composition may comprise less than 70%, 60%, 55%, 50%, 45%, 40%, 30%, 25%, 20%, 10%, 5%, or 1% by dry weight sucrose, lactose, maltose, or any combination thereof. In some embodiments, the composition may be substantially free of sucrose, lactose, maltose, or any combination thereof.

In some embodiments, the amount of sucrose, lactose, maltose, or any combination thereof may be less than the amount of cello-oligosaccharides. In some embodiments, the amount of sucrose, lactose, maltose, or any combination thereof may be less than the amount of cellobiose.

In some embodiments, the amount of sucrose, lactose, maltose, or any combination thereof may be less than the amount of xylo-oligosaccharides. In some embodiments, the amount of sucrose, lactose, maltose, or any combination thereof may be less than the amount of xylobiose.

In some embodiments, the composition may comprise less than 30%, 25%, 20%, 10%, 5%, or 1% by dry weight maltodextrin. In some embodiments, the composition may be substantially free of maltodextrin.

In some embodiments, the xylo-oligosaccharides comprise xylo-oligosaccharides with one or more side branches, xylo-oligosaccharides with one or more glucuronosyl side branches, xylo-oligosaccharides with one or more methylglucurosyl side branches, xylo-oligosaccharides with one or more arabinosyl side branches, or any combination thereof. In some embodiments, the xylo-oligosaccharides comprise at least 40%, at least 50%, at least 60%, at least 70%, at least 80%, or at least 90% xylobiose. In some embodiments, the xylo-oligosaccharides comprise xylose and arabinose monomers collectively at a ratio of from 20:1 to 2:1, 18:1 to 4:1, or 16:1 to 6:1.

In some embodiments, the cello-oligosaccharides comprise at least 40%, at least 50%, at least 60%, at least 70%, at least 80%, or at least 90% cellobiose. In some embodiments, the composition may further comprise a compound selected from a polysaccharide, a cellulosic polysaccharide, cellulose, a hemicellulosic polysaccharide, xylan, a polysaccharide derivative, a cellulose derivative, carboxymethylcellulose, a polysaccharide aggregate, a lignocellulosic material, or any combination thereof. In some embodiments, the composition may comprise at most 30% polysaccharides by dry weight.

In some embodiments, the composition further comprises a compound selected from a phenolic compound, a lignin, a portion of a lignin, a product of lignin breakdown, ferulic acid, a ferulic acid derivative, or any combination thereof.

Th In some embodiments, the first component may comprise less than 100, 50, 10, 5 1, 0.5, 0.1, 0.05 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn. In some embodiments, the first component may comprise more than 0.01 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn.

In some aspects, described herein are foodstuff comprising from 1% to 50% by dry weight of a sweetener composition comprising an oligosaccharide component comprising xylo-oligosaccharides with a degree of polymerization (DP) from two to twelve and cello-oligosaccharides with a DP from two to six, and a high-intensity sweetener, wherein the oligosaccharide component and the high-intensity sweetener are present at a w/w ratio from 5000:1 to 50:1.

In some aspects, a sweetener composition may comprise: a first component comprising xylo-oligosaccharides with a degree of polymerization (DP) of from two to twelve and cellulose-based saccharides, wherein the xylo-oligosaccharides and the cellulose-based saccharides are present at a w/w ratio from 19:1 to 1:1 respectively; and a high-intensity sweetener present from 0.02% to 2% by dry weight of the first component.

In some embodiments, the cellulose-based saccharides comprise cello-oligosaccharides with a DP from two to six, cellulose polysaccharides, or a combination thereof.

In some aspects, provided herein are sweetener compositions consisting essentially of: an oligosaccharide component consisting essentially of xylo-oligosaccharides with a degree of polymerization (DP) from two to twelve and cello-oligosaccharides with a DP from two to six, wherein the oligosaccharide component may be at least 70% by dry weight of the sweetener composition; and a high-intensity sweetener, wherein the high-intensity sweetener may be from 0.02% to 2% by dry weight of the sweetener composition.

In some aspects, provided herein are sweetener compositions consisting of: xylo-oligosaccharides with a degree of polymerization (DP) of from two to twelve; cellulose-based saccharides; and a high-intensity sweetener.

In some aspects, provided herein are sweetener compositions comprising: an oligosaccharide component comprising xylo-oligosaccharides with a degree of polymerization (DP) from two to twelve and cello-oligosaccharides with a DP from two to six, wherein the xylo-oligosaccharides and cello-oligosaccharides are present at a w/w ratio from 19:1 to 1:1; and a bulking sweetener, wherein the oligosaccharide component and the bulking sweetener are present at a w/w ratio from 1:1 to 19:1.

In some embodiments, the bulking sweetener may comprise a sugar alcohol, allulose, tagatose, maltodextrin, resistant maltodextrin, erythritol, or any combination thereof.

In some embodiments, the cello-oligosaccharides and xylo-oligosaccharides are present at a w/w ratio of 1:19 to 1:1 in the composition. In some embodiments, the cello-oligosaccharides and xylo-oligosaccharides are present at a w/w ratio of 1:19 to 1:1 in the first component. In some embodiments, a ratio of the first component to the second component may be from 5:2 to 5:1 by dry weight.

In some embodiments, the average sweetness level per unit weight of the second component may be greater than an average sweetness level of the first component. In some embodiments, the average sweetness level per unit weight of the second component may be at least 1.5 times, 2 times, 5 times, 10 times, 20 times, 50 times, 70 times, 90 times, 100 times, 150 times, 200 times, 500 times or 1000 times greater than an average sweetness level of the first component. In some embodiments, the average sweetness may be a sweetness perception by a human subject.

In some embodiments, the weight ratio of the second component to the composition may be from 1: 20,000 to 1:20. In some embodiments, a weight ratio of the second component to the composition may be from 1:2000 to 1:50. In some embodiments, the weight ratio of the second component to composition may be from 1:1000 to 1:100.

In some embodiments, the first component decreases an average bitterness level per unit weight of the composition as compared to a control composition, wherein the control composition may be a composition made using the bulking sweetener as the first and second component.

In some embodiments, the first component decreases an average bitter aftertaste per unit weight of the composition as compared to a control composition, wherein the control composition may be a composition made using the bulking sweetener as the first and second component.

In some embodiments, the average bitterness may be bitterness perception by a human subject. In some embodiments, the average bitter aftertaste may be bitter aftertaste perception by a human subject.

In some embodiments, the composition may comprise less than 70%, 60%, 55%, 50%, 45%, 40%, 35%, 30%, 25%, 20%, 10%, 5%, or 1% by dry weight monosaccharides. In some embodiments, the composition may be substantially free of monosaccharides. In some embodiments, the monosaccharides comprise glucose, fructose, galactose, or any combination thereof.

In some embodiments, the composition may comprise less than 70%, 60%, 55%, 50%, 45%, 40%, 30%, 25%, 20%, 10%, 5%, or 1% by dry weight sucrose, lactose, maltose, or any combination thereof. In some embodiments, the composition may be substantially free of sucrose, lactose, maltose, or any combination thereof.

In some embodiments, the amount of sucrose, lactose, maltose, or any combination thereof may be less than the amount of cello-oligosaccharides. In some embodiments, the amount of sucrose, lactose, maltose, or any combination thereof may be less than the amount of cellobiose.

In some embodiments, the amount of sucrose, lactose, maltose, or any combination thereof may be less than the amount of xylo-oligosaccharides. In some embodiments, the amount of sucrose, lactose, maltose, or any combination thereof may be less than the amount of xylobiose.

In some embodiments, the composition may comprise less than 30%, 25%, 20%, 10%, 5%, or 1% by dry weight maltodextrin. In some embodiments, the composition may be substantially free of maltodextrin.

In some embodiments, the xylo-oligosaccharides comprise xylo-oligosaccharides with one or more side branches, xylo-oligosaccharides with one or more glucuronosyl side branches, xylo-oligosaccharides with one or more methylglucurosyl side branches, xylo-oligosaccharides with one or more arabinosyl side branches, or any combination thereof. In some embodiments, the xylo-oligosaccharides comprise at least 40%, at least 50%, at least 60%, at least 70%, at least 80%, or at least 90% xylobiose. In some embodiments, the xylo-oligosaccharides comprise xylose and arabinose monomers collectively at a ratio of from 20:1 to 2:1, 18:1 to 4:1, or 16:1 to 6:1.

In some embodiments, the cello-oligosaccharides comprise at least 40%, at least 50%, at least 60%, at least 70%, at least 80%, or at least 90% cellobiose.

In some embodiments, the composition further comprises a compound selected from a polysaccharide, a cellulosic polysaccharide, cellulose, a hemicellulosic polysaccharide, xylan, a polysaccharide derivative, a cellulose derivative, carboxymethylcellulose, a polysaccharide aggregate, a lignocellulosic material, or any combination thereof.

In some embodiments, the composition may comprise at most 30% polysaccharides by dry weight.

In some embodiments, the composition further comprises a compound selected from a phenolic compound, a lignin, a portion of a lignin, a product of lignin breakdown, ferulic acid, a ferulic acid derivative, or any combination thereof.

In some embodiments, the first component may comprise less than 100, 50, 10, 5 1, 0.5, 0.1, 0.05 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn.

In some embodiments, the first component may comprise more than 0.01 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn.

In some aspects, provided herein are foodstuff comprising from 1% to 50% by dry weight of a sweetener composition comprising an oligosaccharide component comprising xylo-oligosaccharides with a degree of polymerization (DP) from two to twelve and cello-oligosaccharides with a DP from two to six, and a bulking sweetener, wherein the oligosaccharide component and the bulking sweetener are present at a w/w ratio from 1:1 to 19:1.

In some aspects, provided herein are sweetener compositions comprising: a first component comprising xylo-oligosaccharides with a degree of polymerization (DP) of from two to twelve and cellulose-based saccharides, wherein the xylo-oligosaccharides and the cellulose-based saccharides are present at a w/w ratio from 19:1 to 1:1 respectively; and a second component comprising a bulking sweetener present from 10% to 100% by dry weight of the first component.

In some embodiments, the cellulose-based saccharides comprise cello-oligosaccharides with a DP from two to six, cellulose polysaccharides, or a combination thereof.

In some aspects, provided herein are sweetener compositions consisting essentially of: an oligosaccharide component consisting essentially of xylo-oligosaccharides with a degree of polymerization (DP) from two to twelve and cello-oligosaccharides with a DP from two to six, wherein the oligosaccharide component may be at least 50% by dry weight of the sweetener composition; and a bulking sweetener, wherein the bulking sweetener may be from 5% to 50% by dry weight of the sweetener composition.

In some aspects, described herein are sweetener composition consisting of: xylo-oligosaccharides with a degree of polymerization (DP) of from two to twelve; cellulose-based saccharides; and a bulking sweetener.

In some aspects, provided herein is a sweetener composition comprising: an oligosaccharide component comprising xylo-oligosaccharides with a degree of polymerization (DP) from two to twelve and cello-oligosaccharides with a DP from two to six, wherein the oligosaccharide component at least 50% by dry weight of the sweetener composition; and a bulking sweetener, wherein the bulking sweetener may be from 5% to 50 % by dry weight of the sweetener composition.

In some aspects, provided herein are sweetener compositions comprising: a first component comprising xylo-oligosaccharides with a degree of polymerization (DP) from two to twelve and cellulose-based saccharides, wherein the sweetener composition may comprise at least 50% by dry weight of the first component; and a bulking sweetener, wherein the sweetener composition may comprise from 5% to 50% by dry weight of the bulking sweetener.

In some aspects, described herein are sweetener compositions comprising: a first component comprising: xylo-oligosaccharides with a degree of polymerization (DP) from two to twelve; and cellulose-based saccharides comprising cello-oligosaccharides with a DP from two to six, cellulose polysaccharides, or a combination thereof, wherein the xylo-oligosaccharides and the cellulose-based saccharides are present at a wt/wt ratio from 19:1 to 1:1; and a second component comprising one of (i) a high-intensity sweetener, wherein the high-intensity sweetener may be present at from 0.02% to 2% by dry weight of the first component or (ii) a bulking sweetener, wherein the bulking sweetener may be present at from 10% to 100% wt/wt of the first component.

In some embodiments, the first component may comprise greater than 1% wt/wt cellobiose. In some embodiments, the first component may comprise less than 50% wt/wt cellobiose. In some embodiments, the first component may comprise less than 35% wt/wt cellulose. In some embodiments, the first component and the second component constitute from 10% to 75% wt/wt of the sweetener composition.

In some embodiments, the composition comprises less than 1% wt/wt of the bulking sweetener, wherein the bulking sweetener may comprise a sugar alcohol, allulose, tagatose, maltodextrin, resistant maltodextrin, erythritol, or any combination thereof. In some embodiments, the composition comprises less than 20% wt/wt glucose, fructose, and galactose. In some embodiments, the composition comprises less than 20% wt/wt monosaccharides. In some embodiments, the composition comprises less than 20% wt/wt sucrose, maltose, and lactose.

In some embodiments, the second component may comprise at least one bulking sweetener from 50% to 100% wt/wt of the first component.

In some embodiments, the bulking sweetener may comprise a sugar alcohol, a rare sugar, an other saccharide, or any combination thereof.

In some embodiments, the sugar alcohol may comprise sorbitol, xylitol, mannitol, maltitol, lactitol, erythritol, or any combination thereof.

In some embodiments, the rare sugar may comprise allulose, tagatose, psicose, or any combination thereof.

In some embodiments, the other saccharide may comprise inulin/fructo-oligosaccharides.

In some embodiments, the second component may comprise at least two bulking sweeteners from 50% to 100% wt/wt of the first component.

Th In some embodiments, the bulking sweetener may comprise a sugar alcohol, a rare sugar, an other saccharide, or any combination thereof.

In some embodiments, the sugar alcohol may comprise sorbitol, xylitol, mannitol, maltitol, lactitol, erythritol, or any combination thereof.

In some embodiments, the rare sugar may comprise allulose, tagatose, psicose, or any combination thereof.

In some embodiments, the other saccharide may comprise inulin/fructo-oligosaccharides.

In some embodiments, the second component may comprise at least one high-intensity sweetener from 0.02% to 2% wt/wt of the first component. In some embodiments, the second component may comprise at least two high-intensity sweeteners at 0.001-10% wt/wt of the first component.

T In some embodiments, the high-intensity sweetener may comprise saccharin, sucralose, a steviol glycoside, a mogroside, aspartame, or any combination thereof.

In some embodiments, the xylo-oligosaccharides are thermochemically modified. In some embodiments, the xylo-oligosaccharides are thermochemically modified by caramelization or a Maillard reaction. In some embodiments, the cello-oligosaccharides are thermochemically modified. In some embodiments, the cello-oligosaccharides are thermochemically modified by caramelization or a Maillard reaction.

In some aspects, described herein is a composition comprising: a first component comprising at least two types of oligosaccharides selected from: cello-oligosaccharides with a degree of polymerization of from two to six; xylo-oligosaccharides with a degree of polymerization of from two to twelve; manno-oligosaccharides with a degree of polymerization of from two to twelve; and mixed-linkage glucan oligosaccharides with a degree of polymerization of from two to five; xyloglucan oligosaccharides with a degree of polymerization of from four to twelve; and a second component comprising a sugar substitute.

In some embodiments, the average sweetness level per unit weight of the second component may be greater than an average sweetness level of the first component. In some embodiments, the average sweetness level per unit weight of the second component may be at least 1.5 times, 2 times, 5 times, 10 times, 20 times, 50 times, 70 times, 90 times, 100 times, 150 times, or 200 times greater than an average sweetness level of the first component.

In some embodiments, the relative sweetness level of the sugar substitute versus sucrose may be from 20:1 to 20,000:1. In some embodiments, a relative sweetness level of the sugar substitute versus sucrose may be from 30:1 to 600:1.

In some embodiments, the average sweetness may be a sweetness perception by a human subject. In some embodiments, the weight ratio of the second component to the composition may be from 1:300 to 1:25. In some embodiments, the weight ratio of the second component to composition may be from 1:250 to 1:50. In some embodiments, the weight ratio of the second component to composition may be from 1:200 to 1:100.

In some embodiments, the first component decreases an average bitterness level per unit weight of the composition as compared to a control composition comprising only the second component. In some embodiments, the first component decreases an average bitter aftertaste per unit weight of the composition as compared to a control composition comprising only the second component. In some embodiments, the average bitterness may be a bitterness perception by a human subject and wherein the average bitter aftertaste may be a bitter aftertaste perception by a human subject.

In some embodiments, the sugar substitute may comprise a natural high-intensity sweetener, an artificial high-intensity sweetener, a plant extract, a protein, a glycoside, a mogroside, or any combination thereof. In some embodiments, the sugar substitute may comprise a sweetener selected from the group consisting of acesulfame K, advantame, aspartame, cyclamate, glycyrrhizin, monk fruit extract, neohesperidin dihydrochalcone, neotame, saccharin, stevia extract, sucralose, thaumatin, and combinations thereof. In some embodiments, the protein may be a sweet protein.

In some embodiments, the sugar substitute may comprise a steviol glycoside or a functional variant thereof. In some embodiments, the sugar substitute may comprise rebaudloside A and stevioside.

In some embodiments, the composition may comprise less than 70%, 60%, 55% ,50%, 45%, 40%, 35%, 30%, 25%, 20%, 10%, 5%, or 1% by dry weight monosaccharides. In some embodiments, the composition may be substantially free of monosaccharides. In some embodiments, the monosaccharides comprise glucose, fructose, galactose, or any combination thereof.

In some embodiments, the composition may comprise less than 70%, 60%, 55% ,50%, 45%, 40%, 30%, 25%, 20%, 10%, 5%, or 1% by dry weight disaccharides. In some embodiments, the disaccharides comprise sucrose, lactose, maltose, or any combination thereof. In some embodiments, the composition may be substantially free of sucrose, lactose, maltose, or any combination thereof.

In some embodiments, the amount of sucrose, lactose, maltose, or any combination thereof, may be less than the amount of cello-oligosaccharides.

In some embodiments, the amount of sucrose, lactose, maltose, or any combination thereof, may be less than the amount of cellobiose.

In some embodiments, the amount of sucrose, lactose, maltose, or any combination thereof, may be less than the amount of xylo-oligosaccharides.

In some embodiments, the amount of sucrose, lactose, maltose, or any combination thereof, may be less than the amount of xylobiose.

In some embodiments, the amount of sucrose, lactose, maltose, or any combination thereof, may be less than the amount of manno-oligosaccharides.

In some embodiments, the amount of sucrose, lactose, maltose, or any combination thereof, may be less than the amount of mannan-derived disaccharide.

In some embodiments, the composition may comprise less than 30%, 25%, 20%, 10%, 5%, or 1% by dry weight maltodextrin.

T In some embodiments, the composition may be substantially free of maltodextrin.

In some embodiments, the composition may comprise at least 10%, 20%, 30%, 40%, 50%, or 60% by dry weight of the at least two types of oligosaccharides.

In some embodiments, the cello-oligosaccharides comprise at least 5%, 10%, 15%, 20%, 25%, 30%, or 35% by dry weight of the first component.

Th In some embodiments, the cello-oligosaccharides comprise at least 40%, at least 50%, at least 60%, at least 70%, at least 80%, or at least 90% cellobiose.

Th In some embodiments, the xylo-oligosaccharides comprise xylo-oligosaccharides with one or more side branches, xylo-oligosaccharides with one or more glucuronosyl side branches, xylo-oligosaccharides with one or more methylglucurosyl side branches, xylo-oligosaccharides with one or more arabinosyl side branches, or combinations thereof.

In some embodiments, the xylo-oligosaccharides comprise at least 5%, 10%, 15%, 20%, 25%, 30%, or 35% by dry weight of the first component.

In some embodiments, the xylo-oligosaccharides comprise at least 40%, at least 50%, at least 60%, at least 70%, at least 80%, or at least 90% xylobiose.

In some embodiments, the xylo-oligosaccharides comprise xylose and arabinose monomers collectively at a ratio of between 20:1 and 2:1, 18:1 and 4:1, 16:1 and 6:1.

In some embodiments, the manno-oligosaccharides comprise at least 5%, 10%, 15%, 20%, 25%, 30%, or 35% by dry weight of the first component.

In some embodiments, the cello-oligosaccharides comprise at least 40%, at least 50%, at least 60%, at least 70%, at least 80%, or at least 90% disaccharide.

In some embodiments, the mixed-linkage glucan oligosaccharides comprise at least 5%, 10%, 15%, 20%, 25%, 30%, or 35% by dry weight of the first component.

In some embodiments, the xyloglucan oligosaccharides comprise at least 5%, 10%, 15%, 20%, 25%, 30%, or 35% by dry weight of the first component.

In some embodiments, the weight/weight ratio of the first component to the second component may be from 3000:1 to 2000:1, 2000:1 to 1000:1, 1000:1 to 500:1, 500:1 to 250:1, 250:1 to 125:1, 125:1 to 100:1, or 100:1 to 75:1.

In some embodiments, the weight/weight ratio of the cello-oligosaccharides to the second component may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the composition comprises cellobiose, wherein the weight/weight ratio of the cellobiose to the second component may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the weight/weight ratio of the xylo-oligosaccharides to the second component may be from 1000:1 to 666:1, 6661 to 333:1, 333:1 to 166:1, 166:1 to 83:1, 83:1 to 33:1, 33:1 to 25:1, or 25:1 to 10:1.

In some embodiments, the composition comprises xylobiose, wherein the weight/weight ratio of the xylobiose to the second component may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the composition comprises arabinosylated xylo-oligosaccharides, wherein the weight/weight ratio of the arabinosylated xylo-oligosaccharides to the second component may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the weight/weight ratio of the manno-oligosaccharides to the second component may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the composition comprises mannan-derived disaccharides, wherein the weight/weight ratio of the mannan-derived disaccharides to the second component may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the composition comprises saccharides not digestible by human enzymes in vitro, wherein the weight/weight ratio of the saccharides not digestible by human enzymes in vitro to the second component may be from 3000:1 to 2000:1, 2000:1 to 1000:1, 1000:1 to 500:1, 500:1 to 250:1, 250:1 to 125:1, 125:1 to 100:1, or 100:1 to 75:1.

In some embodiments, the weight/weight ratio of the first component to the sugar substitute may be from 3000:1 to 2000:1, 2000:1 to 1000:1, 1000:1 to 500:1, 500:1 to 250:1, 250:1 to 125:1, 125:1 to 100:1, or 100:1 to 75:1.

In some embodiments, the weight/weight ratio of the cello-oligosaccharides to the sugar substitute may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the composition comprises cellobiose, wherein the weight/weight ratio of the cellobiose to the sugar substitute may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the weight/weight ratio of the xylo-oligosaccharides to the sugar substitute may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the composition comprises xylobiose, wherein the weight/weight ratio of the xylobiose to the sugar substitute may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the composition comprises arabinosylated xylo-oligosaccharides, wherein the weight/weight ratio of the arabinosylated xylo-oligosaccharides to the sugar substitute may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the weight/weight ratio of the manno-oligosaccharides to the sugar substitute may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the composition comprises mannan-derived disaccharides, wherein the weight/weight ratio of the mannan-derived disaccharides to the sugar substitute may be from 1000:1 to 666:1, 666:1 to 333:1, 333:1 to 166:1, 166:1 to 83:1, 83:1 to 33:1, 33:1 to 25:1, or 25:1 to 10:1.

In some embodiments, the composition comprises saccharides not digestible by human enzymes in vitro, wherein the weight/weight ratio of the saccharides not digestible by human enzymes in vitro to the sugar substitute may be from 3000:1 to 2000:1, 2000:1 to 1000:1, 1000:1 to 500:1, 500:1 to 250:1, 250:1 to 125:1, 125:1 to 100:1, or 100:1 to 75:1.

In some embodiments, the first component may comprise the cello-oligosaccharides and the xylo-oligosaccharides.

In some embodiments, the first component may comprise the cello-oligosaccharides and the manno-oligosaccharides.

In some embodiments, the composition comprises less than 1% wt/wt bulking sweetener, wherein the bulking sweetener may comprise a sugar alcohol, allulose, tagatose, maltodextrin, resistant maltodextrin, erythritol, or any combination thereof.

In some embodiments, the composition comprises a polysaccharide, a cellulosic polysaccharide, cellulose, a hemicellulosic polysaccharide, xylan, a polysaccharide derivative, a cellulose derivative, carboxymethylcellulose, a polysaccharide aggregate, a lignocellulosic material, or any combination thereof.

In some embodiments, the composition may comprise at most 30% polysaccharides by dry weight.

In some embodiments, the composition comprises a phenolic compound, a lignin, a portion of a lignin, a product of lignin breakdown, ferulic acid, a ferulic acid derivative, or any combination thereof.

In some embodiments, the first component may comprise less than 100, 50, 10, 5 1, 0.5, 0.1, 0.05 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V and/or Zn.

In some aspects, provided herein is a foodstuff comprising: a first component comprising at least two types of oligosaccharides selected from: cello-oligosaccharides with a degree of polymerization of from two to six; xylo-oligosaccharides with a degree of polymerization of from two to twelve; mixed-linkage glucan oligosaccharides with a degree of polymerization of from two to five; manno-oligosaccharides with a degree of polymerization of from two to twelve; and xyloglucan oligosaccharides with a degree of polymerization of from four to twelve; and a second component comprising a sugar substitute.

In some embodiments, the taste of the foodstuff may be substantially free of bitterness.

In some embodiments, the foodstuff may be a cake, cookie, brownie, brookie, candy, cereal bar, nut bar, pie, cobbler, pastry, bun, scone, bread, roll, Danish, donut, torte, muffin, cupcake, milkshake, ice cream, frozen yogurt, custard, gelato, waffle, pancake, jam, or a combination thereof.

In some embodiments, the foodstuff may comprise a polysaccharide, wherein the polysaccharide may be a cellulosic polysaccharide, a hemicellulosic polysaccharide, a polysaccharide derivative, or a polysaccharide aggregate.

In some embodiments, the polysaccharide may be a cellulosic polysaccharide.

In some embodiments, the hemicellulosic polysaccharide may be xylan.

In some embodiments, the hemicellulosic polysaccharide may be mannan.

In some embodiments, the polysaccharide derivative may be carboxymethylcellulose.

In some embodiments, the polysaccharide aggregate may be lignocellulosic material, preferably partially digested lignocellulosic material, such as from an enzymatic reaction that produced the oligosaccharides.

In some embodiments, the foodstuff may comprise less than about 15%, about 10%, about 5%, about 2.5%, about 1.25% by dry weight of the polysaccharide.

In some embodiments, the foodstuff may comprise oligosaccharides that have been subjected to a browning reaction.

In some embodiments, the foodstuff may comprise oligosaccharides that have been subjected to a caramelization or a Mailliard reaction.

In some embodiments, the foodstuff may be substantially free of one or more allergens, wherein the one or more allergens are selected from wheat gluten, nuts, dairy, or egg.

In some embodiments, the ratio of browning on the surface of the bakery product to the browning internal to the bakery product may be greater than a control bakery product that does not comprise the second component.

In some embodiments, the springiness of the bakery product may be greater than a control bakery product that does not comprise the second component.

In some embodiments, the firmness of the bakery product may be greater than a control bakery product that does not comprise the second component.

In some embodiments, the composition may be a fat-based composition.

In some embodiments, the composition may be a water-based composition.

Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not as restrictive.

### INCORPORATION BY REFERENCE

All publications, patents, and patent applications mentioned in this specification are herein incorporated by reference to the same extent as if each individual publication, patent, or patent application was specifically and individually indicated to be incorporated by reference.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings (also "figure" and "FIG." herein), of which:
**FIG. 1** shows data illustrating the impact of combinations of stevia and oligosaccharides on sweetness and aftertaste perceptions of solutions containing them.
**FIG. 2** shows data illustrating the impact of combinations of stevia and saccharide combinations on the sweetness, aftertaste (top) and sensory/visual (bottom) perceptions of cupcakes made using them.
**FIG. 3** shows HPLC traces illustrating saccharides comprising the xylo-oligosaccharide composition (top) and the cello-oligosaccharide composition (bottom) used to make the saccharide mixture in recipes.
**FIG. 4A** illustrates muffins made using various combinations of high-intensity sweeteners and oligosaccharide mixtures.
**FIG. 4B** illustrates results from taste testing of muffins.
**FIG. 5A** illustrates cakes made using various bulking sugars and oligosaccharide mixture combinations.
**FIG. 5B** illustrates results from taste testing of cakes.
**FIG. 6A** illustrates dough made using various combinations of high-intensity sweeteners and oligosaccharide mixtures.
**FIGS. 6B-6C** illustrate cakes made using various combinations of high-intensity sweeteners and oligosaccharide mixtures.
**FIG. 7A** illustrates cakes made using various combinations of high-intensity sweeteners and oligosaccharide mixtures with different ratios of xylo-oligosaccharides and cello-oligosaccharides.
**FIG. 7B** illustrates cakes ranked from 1 to 4 for their color, 1 being lightest and 4 being darkest.
**FIG. 7C** illustrates results from taste testing of cakes.
**FIGS. 8A-B** illustrate cakes made using baking powder in addition to oligosaccharide mixture.
**FIG. 9** illustrates cookies made using bulking sugars alone or in combination with oligosaccharide mixtures (called saccharides).
**FIG. 10** illustrates cookies made using various concentrations of bulking sugars alone or in combination with oligosaccharide mixtures (called saccharides).

### DETAILED DESCRIPTION

### Introduction

Described herein are compositions, such as sweetener compositions comprising oligosaccharides. Such compositions can be used in or as foodstuff, cosmetics, or nutraceutical products. The compositions can be saccharide compositions at whole or at least in part. The compositions can be a combination of saccharides with other sweetener components. The composition can comprise a mixture of oligosaccharides in addition to one or more sugar substitute(s) and/or one or more sugars.

The compositions may comprise an oligosaccharide mixture in addition to a sugar substitute and/or a sugar. The compositions may comprise a first component and a second component. The first component may comprise or be an oligosaccharide mixture. The second component may comprise or be a sugar substitute and/or sugar mix.

The oligosaccharide mixture (e.g., the first component) may comprise cello-oligosaccharides, xylo-oligosaccharides, manno-oligosaccharides, mixed-linkage glucan oligosaccharides, and/or xyloglucan oligosaccharides or a mixture thereof. The sugar substitute and or sugar mix (e.g., the second component) can comprise or be a sugar or a sugar substitute. Each of the first component and the second component may confer unique qualities and/or properties to the composition, the combination of which may be favorable. In some examples, the second component can have a higher level of average sweetness per unit weight compared to the first component, therefore it can increase the overall average level of sweetness per unit weight of the composition as compared to a composition comprising the first component only. In some cases, the first component (e.g., oligosaccharide mixture) may reduce or help remove bitter undertones or aftertaste or other unpleasant tastes from the second component. Therefore, a combination of the first component with the sugar substitute may result in a composition which may be rich in sweetness while having decreased or substantially no bitterness or unpleasant taste or aftertaste associated with its sweetness.

Additionally, the first component may be capable of enhancing the caramelization capabilities of the composition and can contribute to a more desirable texture of a foodstuff (e.g., baked goods). The compositions provided in the present disclosure may be used as sweeteners (e.g., in a foodstuff), binders, and/or fiber content enhancers.

While various embodiments of the invention have been shown and described herein, it will be obvious to those skilled in the art that such embodiments are provided by way of example only. Numerous variations, changes, and substitutions may occur to those skilled in the art without departing from the invention. It should be understood that various alternatives to the embodiments of the invention described herein may be employed.

As used in the specification and claims, the singular forms "a," "an," and "the" include plural references unless the context clearly dictates otherwise. For example, the term "a sample" includes a plurality of samples, including mixtures thereof.

The terms "about" can mean within 1 or more than 1 standard deviation. Alternatively, "about" can mean a range of up to 10%, up to 5%, or up to 1% of a given value. For example, about can mean up to ±10%, ±9%, ±8%, ±7%, ±6%, 5%, ±4%, ±3%, ±2%, or ±1% of a given value.

As used herein, "food" and "foodstuff" generally refer to any item destined for consumption, which may be consumption by a human or by any other animal. It may be food, feed, a beverage, or an ingredient to be used in the production of any of the above.

As used herein, "polysaccharide" generally refers to a saccharide polymer of any length greater than about 20 residues. Polysaccharides may be highly branched, lightly branched, or unbranched. Polysaccharides may include any manner of glycosidic bond in any combination; any number of, for example, α or β linkages; and any combination of monomer types, such as glucose, glucosamine, mannose, xylose, galactose, fucose, fructose, glucuronic acid, arabinose, or derivatives thereof, such as any combination of the above monomers decorated with acetyl or other groups. The polysaccharide may be a cellulosic or hemicellulosic polymer. Hemicellulosic polymers envisaged including xylan, glucuronoxylan, arabinoxylan, glucomannan, and xyloglucan. In some embodiments, the cellulosic polymer may be cellulose.

As used herein, "lignocellulose" generally refers to polysaccharide-comprising aggregates that are, or are derived from, plant cell wall material. For example, they may include one or more of the following polysaccharides associated together: cellulose, xylan, mannan, and mixed-linkage glucan.

As used herein "highly branched," "lightly branched," and "unbranched" generally refer to the number of side-chains per stretch of main chain in a saccharide. Highly branched saccharides have on average from 4 to 10 side chains per 10 main-chain residues, slightly branched saccharides have on average from 1 to 3 side chains per 10 main-chain residues, and unbranched saccharides have only one main chain and no side chains. The average is calculated by dividing the number of side chains in a saccharide by the number of main-chain residues.

As used herein, "saccharide" generally refers to any polysaccharide and/or oligosaccharide, such as monosaccharide and/or disaccharide.

As used herein, "oligosaccharide" generally refers to saccharide polymers having chain lengths less than or equal to about 20 saccharide residues. Oligosaccharides may be highly branched, lightly branched, or unbranched; and may include glycosidic bonds in any combination, any number of α or β linkages, and any combination of monomer types, such as glucose, glucosamine, mannose, xylose, galactose, fucose, fructose, glucuronic acid, arabinose, or derivatives thereof. Suitable derivatives include the above monomers including acetyl or other groups.

As used herein, "monosaccharide" and "disaccharide" generally refer to saccharide compounds consisting of one or two residues, respectively. Monosaccharides are compounds such as glucose, glucosamine, xylose, galactose, fucose, fructose, glucuronic acid, arabinose, galacturonic acid, or epimers or other derivatives thereof. Suitable derivatives include acetyl or other groups. Disaccharides are compounds consisting of two monosaccharides joined via any glycosidic bond.

As used herein, "cello-oligosaccharides" generally refers to oligosaccharides composed of one or more glucose residues linked by β-1,4-glycosidic bonds, and may be chemically related to that by oxidation, reduction, esterification, epimerization, or another chemical modification.

As used herein, "xylo-oligosaccharides" generally refers to oligosaccharides composed primarily of xylose residues (typically linked by β-1,4-glycosidic bonds) and may also contain glucuronic acid residues and/or arabinose residues and/or acetyl groups and/or any other modification, and may be chemically related to that by oxidation, reduction, esterification, epimerization, or another chemical modification.

As used herein, "mixed-linkage glucan-oligosaccharides" generally refers to oligosaccharides composed of one or more glucose residues linked by at least one β-1,3-glycosidic bond and at least one β-1,4-glycosidic bond, and may be chemically related to that by oxidation, reduction, esterification, epimerization, or another chemical modification

As used herein, "manno-oligosaccharides" generally refers to oligosaccharides composed of one or more mannose residues and optionally containing one or more glucose and/or galactose residues, and may be chemically related to that by oxidation, reduction, esterification, epimerization, or another chemical modification.

As used herein, "chito-oligosaccharides" generally refers to oligosaccharides composed of one or more glucosamine and/or N-acetyl-glucosamine residues, and may be chemically related to that by oxidation, reduction, esterification, epimerization, or another chemical modification.

As used herein, "cellulose" generally refers to polysaccharides composed of glucose residues linked by β-1,4-glycosidic bonds, and derivatives thereof. "Xylan" generally refers to polysaccharides composed of a backbone of xylose residues and may also contain glucuronic acid residues and/or arabinose residues and/or acetyl groups and/or any other modification. "Mixed-linkage glucan" generally refers to polysaccharides composed of glucose residues linked by β-1,3-glycosidic bonds and β-1,4-glycosidic bonds. "Mannan" generally refers to polysaccharides composed of greater than 40% mannose residues and optionally containing glucose and/or galactose residues. "Chitin" or "chitosan" generally refer to polysaccharides composed of glucosamine and/or N-acetyl-glucosamine residues.

### Oligosaccharide mixtures

The present disclosure provides a composition comprising one or more oligosaccharides. The composition may comprise a first component. The first component may comprise or be an oligosaccharide mixture. The oligosaccharide mixture may comprise a mixture of 1, 2, 3, 4, 5, 6, 7, 8, or more oligosaccharides. In some cases, the oligosaccharide mixture may comprise 1 oligosaccharide. In some cases, the oligosaccharide mixture may comprise 2 oligosaccharides. In some cases, the oligosaccharide mixture may comprise 3 oligosaccharides. Oligosaccharides in the first component (e.g., the oligosaccharide mixture) may be selected from cello-oligosaccharides, xylo-oligosaccharides, mixed-linkage glucan oligosaccharides, manno-oligosaccharides, and/or other oligosaccharides.

The oligosaccharide mixture may comprise cello-oligosaccharides. Cello-oligosaccharides may comprise a mixture of cello-oligosaccharides with a degree of polymerization of from two to six (inclusive).

The oligosaccharide mixture may comprise xylo-oligosaccharides. Xylo-oligosaccharides may comprise a mixture of xylo-oligosaccharides with a degree of polymerization of from two to twelve (inclusive).

The oligosaccharide mixture may comprise mixed-linkage glucan oligosaccharides. Mixed-linkage glucan oligosaccharides may comprise a mixture of mixed-linkage glucan oligosaccharide with a degree of polymerization of from two to five (inclusive).

The oligosaccharide mixture may comprise manno-oligosaccharides. Manno-oligosaccharides may comprise a mixture of manno-oligosaccharides with degrees of polymerization of from two to twelve (inclusive).

The oligosaccharide mixture may comprise xyloglucan oligosaccharides. Xyloglucan oligosaccharides may comprise a mixture of xyloglucan oligosaccharides with degrees of polymerization of from four to twelve (inclusive).

The oligosaccharide mixture may comprise chito-oligosaccharides. Chito-oligosaccharides may comprise a chito-oligosaccharides mixture comprising chito-oligosaccharides with degrees of polymerization of from two to twelve (inclusive).

In some examples, the first component can comprise at least two types of oligosaccharides selected from cello-oligosaccharides with a degree of polymerization from two to six, xylo-oligosaccharides with a degree of polymerization of from two to twelve, mixed-linkage glucan oligosaccharides with a degree of polymerization of from two to five, manno-oligosaccharides having a degree of polymerization of from two to twelve, and xyloglucan oligosaccharides having a degree of polymerization of from four to twelve.

The first component may comprise various oligosaccharides at varying amounts. The amounts of each oligosaccharide, as well as their ratios may depend on the desired properties of the composition and/or the foodstuff the composition is intended to be used in and may be adjusted and/or optimized.

The amounts of each of the oligosaccharides in the first component (e.g., the oligosaccharide mixture) may vary. These amounts may vary depending on the desired properties of the resulting foodstuff, pharmaceutical, cosmetic, or nutraceutical they are used in. In some examples, the first component may comprise one oligosaccharide. In other examples, the first component may comprise at least two types of oligosaccharides, and the two types of oligosaccharides may be present in a ratio of 1:9 to 9:1, 1:2 to 2:1, 2:3 to 3:2, or other suitable ratios in relation to each other. For example, the two oligosaccharides may be present in a ratio of about 1:2, 1:3, 1:4, 1:5, 1:6, 1:7, 1:8, 1:9, 1:10, 1:12, 1:15, 1:17, 1:19, 1:20, 2:1, 3:1, 4:1, 5:1, 6:1, 7:1, 8:1, 9:1, 10:1, 12:1, 15:1, 17:1, 19:1 or other suitable ratios. In some examples, ratios from 1:2 to 2:1 in relation to each other may be used. In other examples, ratios from 2:3 to 3:2 in relation to each other may be used. For example, the oligosaccharide mixture may comprise cello-oligosaccharides and xylo-oligosaccharides at a ratio of from 1:2 to 2:1 (inclusive). For example, the oligosaccharide mixture may comprise cello-oligosaccharides and xylo-oligosaccharides at a ratio of from 2:3 to 3:2 (inclusive).

In some cases, the first component may further comprise a third type of oligosaccharide. In some examples the first component may further comprise a fourth type of oligosaccharide. In some examples, the first component may comprise a third oligosaccharide, a fourth oligosaccharide, and a fifth oligosaccharide. The first component may further comprise a third oligosaccharide, a fourth oligosaccharide, a fifth oligosaccharide, and a sixth oligosaccharide. The first component may comprise more than six types of oligosaccharides. The first, second, third, fourth, fifth, sixth, and the rest of the type of oligosaccharides may comprise cello-oligosaccharides with a degree of polymerization from two to six, xylo-oligosaccharides with a degree of polymerization of from two to twelve, mixed-linkage glucan oligosaccharides with a degree of polymerization of from two to five, manno- oligosaccharides having a degree of polymerization of from two to twelve, and xyloglucan oligosaccharides having a degree of polymerization of from four to twelve.

The one or more type of oligosaccharides may comprise the cello-oligosaccharides. For instance, two types of oligosaccharides may comprise cello-oligosaccharides in combination with the xylo-oligosaccharides. Alternatively, the first component may comprise cello-oligosaccharides in combination with manno-oligosaccharides.

### Combinations of oligosaccharides

The first component may comprise an oligosaccharide mixture. In some examples, the first component may comprise three forms of oligosaccharides, for instance, cello-oligosaccharides, manno-oligosaccharides, and xylo-oligosaccharides. In some cases, the first component may comprise four forms of oligosaccharides, for instance, cello-oligosaccharides, manno-oligosaccharides, mixed-linkage glucan oligosaccharides, chito-oligosaccharides, and xylo-oligosaccharides.

The first component may comprise two forms of oligosaccharides, for example, a first oligosaccharide and a second oligosaccharide. The first component may comprise about 5% of a first oligosaccharide and about 95% of a second oligosaccharide w/w. The first component may comprise about 10% of a first oligosaccharide and about 90% of a second oligosaccharide w/w. The first component may comprise about 15% of a first oligosaccharide and about 85% of a second oligosaccharide w/w. The first component may comprise about 20% of a first oligosaccharide and about 80% of a second oligosaccharide w/w. The first component may comprise about 25% of a first oligosaccharide and about 75% of a second oligosaccharide w/w. The first component may comprise about 30% of a first oligosaccharide and about 70% of a second oligosaccharide w/w. The first component may comprise about 35% of a first oligosaccharide and about 65% of a second oligosaccharide w/w. The first component may comprise about 40% of a first oligosaccharide and about 50% of a second oligosaccharide w/w. The first component may comprise about 45% of a first oligosaccharide and about 55% of a second oligosaccharide w/w. The first component may comprise about 50% of a first oligosaccharide and about 50% of a second oligosaccharide w/w.

The first component may comprise two forms of oligosaccharides, for example, a first oligosaccharide and a second oligosaccharide. The first component may comprise 5% of a first oligosaccharide and 95% of a second oligosaccharide w/w. The first component may comprise 10% of a first oligosaccharide and 90% of a second oligosaccharide w/w. The first component may comprise 15% of a first oligosaccharide and 85% of a second oligosaccharide w/w. The first component may comprise 20% of a first oligosaccharide and 80% of a second oligosaccharide w/w. The first component may comprise 25% of a first oligosaccharide and 75% of a second oligosaccharide w/w. The first component may comprise 30% of a first oligosaccharide and 70% of a second oligosaccharide w/w. The first component may comprise 35% of a first oligosaccharide and 65% of a second oligosaccharide w/w. The first component may comprise 40% of a first oligosaccharide and 50% of a second oligosaccharide w/w. The first component may comprise 45% of a first oligosaccharide and 55% of a second oligosaccharide w/w. The first component may comprise 50% of a first oligosaccharide and 50% of a second oligosaccharide w/w.

The first component may comprise about 55% of a first oligosaccharide and about 45% of a second oligosaccharide w/w. The first component may comprise about 60% of a first oligosaccharide and about 30% of a second oligosaccharide w/w. The first component may comprise about 65% of a first oligosaccharide and about 35% of a second oligosaccharide w/w. The first component may comprise about 70% of a first oligosaccharide and about 30% of a second oligosaccharide w/w. The first component may comprise about 75% of a first oligosaccharide and about 25% of a second oligosaccharide w/w. The first component may comprise about 80% of a first oligosaccharide and about 20% of a second oligosaccharide w/w. The first component may comprise about 85% of a first oligosaccharide and about 15% of a second oligosaccharide w/w. The first component may comprise about 90% of a first oligosaccharide and about 10% of a second oligosaccharide w/w. The first component may comprise about 95% of a first oligosaccharide and about 5% of a second oligosaccharide w/w.

The first component may comprise 55% of a first oligosaccharide and 45% of a second oligosaccharide w/w. The first component may comprise 60% of a first oligosaccharide and 30% of a second oligosaccharide w/w. The first component may comprise 65% of a first oligosaccharide and 35% of a second oligosaccharide w/w. The first component may comprise 70% of a first oligosaccharide and 30% of a second oligosaccharide w/w. The first component may comprise 75% of a first oligosaccharide and 25% of a second oligosaccharide w/w. The first component may comprise 80% of a first oligosaccharide and 20% of a second oligosaccharide w/w. The first component may comprise 85% of a first oligosaccharide and 15% of a second oligosaccharide w/w. The first component may comprise 90% of a first oligosaccharide and 10% of a second oligosaccharide w/w. The first component may comprise 95% of a first oligosaccharide and 5% of a second oligosaccharide w/w. In some examples, a first oligosaccharide may be cello-oligosaccharides and a second oligosaccharide may be xylo-oligosaccharides. In some examples, a first oligosaccharide may be cello-oligosaccharides and a second oligosaccharide may be manno-oligosaccharides. In some examples, a first oligosaccharide may be xylo-oligosaccharides and a second oligosaccharide may be manno-oligosaccharides. Other combinations of a first oligosaccharide and a second oligosaccharide are also within the scope of this disclosure.

The first component may comprise three forms of oligosaccharides, for example, a first oligosaccharide, a second oligosaccharide, and a third oligosaccharide. The first component may comprise about 20% of a first oligosaccharide, about 40% of a second oligosaccharide, and about 40% of a third oligosaccharide w/w. The first component may comprise about 30% of a first oligosaccharide, about 30% of a second oligosaccharide, and about 40% of a third oligosaccharide w/w. An oligosaccharide mixture may comprise about 10% of a first oligosaccharide, about 10% of a second oligosaccharide, and about 80% of a third oligosaccharide w/w. The first component may comprise about 20% of a first oligosaccharide, about 20% of a second oligosaccharide, and about 60% of a third oligosaccharide w/w. The first component may comprise about 20% of a first oligosaccharide, about 30% of a second oligosaccharide, and about 50% of a third oligosaccharide w/w.

The first component may comprise three forms of oligosaccharides, for example, a first oligosaccharide, a second oligosaccharide, and a third oligosaccharide. The first component may comprise 20% of a first oligosaccharide, 40% of a second oligosaccharide, and 40% of a third oligosaccharide w/w. The first component may comprise 30% of a first oligosaccharide, 30% of a second oligosaccharide, and 40% of a third oligosaccharide w/w. An oligosaccharide mixture may comprise 10% of a first oligosaccharide, 10% of a second oligosaccharide, and 80% of a third oligosaccharide w/w. The first component may comprise 20% of a first oligosaccharide, 20% of a second oligosaccharide, and 60% of a third oligosaccharide w/w. The first component may comprise 20% of a first oligosaccharide, 30% of a second oligosaccharide, and 50% of a third oligosaccharide w/w. In some examples, a first oligosaccharide may be manno-oligosaccharides, a second oligosaccharide may be xylo-oligosaccharides, and a third oligosaccharide may be cello-oligosaccharides. In some examples, a first oligosaccharide may be xyloglucan-oligosaccharides, a second oligosaccharide may be xylo-oligosaccharides, and a third oligosaccharide may be cello-oligosaccharides. Other combinations of a first oligosaccharide, a second oligosaccharide, and a third oligosaccharide are also within the scope of this disclosure.

The first component may comprise two or more oligosaccharides, a first oligosaccharide and a second oligosaccharide which is different than the first oligosaccharide. For instance, the first oligosaccharide may be a xylo-oligosaccharide or a cello-oligosaccharide or a manno-oligosaccharide or other oligosaccharides as provided herein, whereas the second oligosaccharide can be a xylo-oligosaccharide or a cello-oligosaccharide or a manno-oligosaccharide or other oligosaccharides not used as the first oligosaccharide. The ratio of a first oligosaccharide to a second oligosaccharide in the mixture may be about 1:1. The ratio of a first oligosaccharide to a second oligosaccharide in the mixture may be about 1:2. The ratio of a first oligosaccharide to a second oligosaccharide in the mixture may be about 1:3. The ratio of a first oligosaccharide to a second oligosaccharide in the mixture may be about 1:4. The ratio of a first oligosaccharide to a second oligosaccharide in the mixture may be about 1:5. The ratio of a first oligosaccharide to a second oligosaccharide in the mixture may be about 1:6. The ratio of a first oligosaccharide to a second oligosaccharide in the mixture may be about 1:7. The ratio of a first oligosaccharide to a second oligosaccharide in the mixture may be about 1:8. The ratio of a first oligosaccharide to a second oligosaccharide in the mixture may be about 1:9. The ratio of a first oligosaccharide to a second oligosaccharide in the mixture may be about 1:10. The ratio of a first oligosaccharide to a second oligosaccharide in the mixture may be about 1:12. The ratio of a first oligosaccharide to a second oligosaccharide in the mixture may be about 1:15. The ratio of a first oligosaccharide to a second oligosaccharide in the mixture may be about 1:17. The ratio of a first oligosaccharide to a second oligosaccharide in the mixture may be about 1:19. The ratio of a first oligosaccharide to a second oligosaccharide in the mixture may be about 1:20.

The ratio of a first oligosaccharide to a second oligosaccharide in the mixture may be 1:1. The ratio of a first oligosaccharide to a second oligosaccharide in the mixture may be 1:2. The ratio of a first oligosaccharide to a second oligosaccharide in the mixture may be 1:3. The ratio of a first oligosaccharide to a second oligosaccharide in the mixture may be 1:4. The ratio of a first oligosaccharide to a second oligosaccharide in the mixture may be 1:5. The ratio of a first oligosaccharide to a second oligosaccharide in the mixture may be 1:6. The ratio of a first oligosaccharide to a second oligosaccharide in the mixture may be 1:7. The ratio of a first oligosaccharide to a second oligosaccharide in the mixture may be 1:8. The ratio of a first oligosaccharide to a second oligosaccharide in the mixture may be 1:9. The ratio of a first oligosaccharide to a second oligosaccharide in the mixture may be 1:10. The ratio of a first oligosaccharide to a second oligosaccharide in the mixture may be 1:12. The ratio of a first oligosaccharide to a second oligosaccharide in the mixture may be 1:15. The ratio of a first oligosaccharide to a second oligosaccharide in the mixture may be 1:17. The ratio of a first oligosaccharide to a second oligosaccharide in the mixture may be 1:19. The ratio of a first oligosaccharide to a second oligosaccharide in the mixture may be 1:20. Ranges between the ratios provided herein are also within the scope of the present disclosure. For example, the ratio of the first oligosaccharide to the second oligosaccharide in the mixture may be from 1:1 to 1:2.

In one example, the ratio of cello-oligosaccharides to xylo-oligosaccharides in the mixture may be 1:1. The ratio of cello-oligosaccharides to xylo-oligosaccharides in the mixture may be 1:2. The ratio of cello-oligosaccharides to xylo-oligosaccharides in the mixture may be 1:3. The ratio of cello-oligosaccharides to xylo-oligosaccharides in the mixture may be 1:4. The ratio of cello-oligosaccharides to xylo-oligosaccharides in the mixture may be 1:5. The ratio of cello-oligosaccharides to xylo-oligosaccharides in the mixture may be 1:6. The ratio of cello-oligosaccharides to xylo-oligosaccharides in the mixture may be 1:7. The ratio of cello-oligosaccharides to xylo-oligosaccharides in the mixture may be 1:8. The ratio of cello-oligosaccharides to xylo-oligosaccharides in the mixture may be 1:9. The ratio of cello-oligosaccharides to xylo-oligosaccharides in the mixture may be 1:10. The ratio of cello-oligosaccharides to xylo-oligosaccharides in the mixture may be 1:12. The ratio of cello-oligosaccharides to xylo-oligosaccharides in the mixture may be 1:15. The ratio of cello-oligosaccharides to xylo-oligosaccharides in the mixture may be 1:17. The ratio of cello-oligosaccharides to xylo-oligosaccharides in the mixture may be 1:19. The ratio of cello-oligosaccharides to xylo-oligosaccharides in the mixture may be 1:20. Ranges between the ratios provided herein are also within the scope of the present disclosure. For example, the ratio of the cello-oligosaccharides to the xylo-oligosaccharides in the mixture may be from 1:1 to 1:2.

The ratio of a first oligosaccharide to a second oligosaccharide in the mixture may be about 2:1. The ratio of a first oligosaccharide to a second oligosaccharide in the mixture may be about 2:3. The ratio of a first oligosaccharide to a second oligosaccharide in the mixture may be about 2:5. The ratio of a first oligosaccharide to a second oligosaccharide in the mixture may be about 2:7. The ratio of a first oligosaccharide to a second oligosaccharide in the mixture may be about 2:9. The oligosaccharides may be cello-oligosaccharides, manno-oligosaccharides, xylo-oligosaccharides, xyloglucan-oligosaccharides, mixed-linkage oligosaccharides, chito-oligosaccharides or other oligosaccharides as provided herein wherein the first oligosaccharide is selected to be a different oligosaccharide than the second oligosaccharide.

The ratio of a first oligosaccharide to a second oligosaccharide in the mixture may be 2:1. The ratio of a first oligosaccharide to a second oligosaccharide in the mixture may be 2:3. The ratio of a first oligosaccharide to a second oligosaccharide in the mixture may be 2:5. The ratio of a first oligosaccharide to a second oligosaccharide in the mixture may be 2:7. The ratio of a first oligosaccharide to a second oligosaccharide in the mixture may be 2:9. The oligosaccharides may be cello-oligosaccharides, manno-oligosaccharides, xylo-oligosaccharides, xyloglucan-oligosaccharides, mixed-linkage oligosaccharides, chito-oligosaccharides or other oligosaccharides as provided herein wherein the first oligosaccharide is selected to be a different oligosaccharide than the second oligosaccharide.

The ratio of a first oligosaccharide to a second oligosaccharide in the mixture may be about 3:1. The ratio of a first oligosaccharide to a second oligosaccharide in the mixture may be about 3:2. The ratio of a first oligosaccharide to a second oligosaccharide in the mixture may be about 3:4. The ratio of a first oligosaccharide to a second oligosaccharide in the mixture may be about 3:5. The ratio of a first oligosaccharide to a second oligosaccharide in the mixture may be about 3:7. The ratio of a first oligosaccharide to a second oligosaccharide in the mixture may be about 3:8. The oligosaccharides may be cello-oligosaccharides, manno-oligosaccharides, xylo-oligosaccharides, xyloglucan-oligosaccharides, mixed-linkage oligosaccharides, chito-oligosaccharides or other oligosaccharides provided herein wherein the first oligosaccharide is selected to be a different oligosaccharide than the second oligosaccharide.

The ratio of a first oligosaccharide to a second oligosaccharide in the mixture may be 3:1. The ratio of a first oligosaccharide to a second oligosaccharide in the mixture may be 3:2. The ratio of a first oligosaccharide to a second oligosaccharide in the mixture may be 3:4. The ratio of a first oligosaccharide to a second oligosaccharide in the mixture may be 3:5. The ratio of a first oligosaccharide to a second oligosaccharide in the mixture may be 3:7. The ratio of a first oligosaccharide to a second oligosaccharide in the mixture may be 3:8. The oligosaccharides may be cello-oligosaccharides, manno-oligosaccharides, xylo-oligosaccharides, xyloglucan-oligosaccharides, mixed-linkage oligosaccharides, chito-oligosaccharides or other oligosaccharides provided herein wherein the first oligosaccharide is selected to be a different oligosaccharide than the second oligosaccharide.

The ratio of a first oligosaccharide to a second oligosaccharide in an oligosaccharide mixture comprising two or more oligosaccharides may be from 1:9 to 9:1. The ratio of a first oligosaccharide to a second oligosaccharide may be from 1:4 to 4:1. The ratio of a first oligosaccharide to a second oligosaccharide may be from 1:3 to 3:1. The ratio of a first oligosaccharide to a second oligosaccharide may be from 2:3 to 3:2. The oligosaccharides may be cello-oligosaccharides, manno-oligosaccharides, xylo-oligosaccharides, xyloglucan-oligosaccharides, mixed-linkage oligosaccharides, chito-oligosaccharides or other oligosaccharides provided herein wherein the first oligosaccharide is selected to be a different oligosaccharide than the second oligosaccharide.

### Compositions comprising xylo-oligosaccharides

In some examples, the first component may comprise xylo-oligosaccharides. Xylo-oligosaccharides may comprise a xylo-oligosaccharide mixture comprising xylo-oligosaccharides with degrees of polymerization of from two to twelve (inclusive).

Xylo-oligosaccharides may comprise xylo-oligosaccharides with one or more side branches, xylo-oligosaccharides with one or more glucuronosyl side branches, xylo-oligosaccharides with one or more methylglucurosyl side branches, xylo-oligosaccharides with one or more arabinosyl side branches, and/or combinations thereof.

In some cases, the concentration of xylo-oligosaccharides with a degree of polymerization of two in the xylo-oligosaccharide mixture may be from 2% to 80% w/w. The concentration of xylo-oligosaccharides with a degree of polymerization of two may be at least 2%, 4%, 6%, 8%, 10%, 12%, 15%, 18%, 20%, 25%, 30%, 40%, 50% or 60% w/w. The concentration of xylo-oligosaccharides with a degree of polymerization of two may be in some cases, for instance, up to 35%, 40%, 45%, 50%, 55%, 60%, 65%, 70%, 75%, or 80% w/w.

In some cases, the concentration of xylo-oligosaccharides with a degree of polymerization of three in a xylo-oligosaccharide mixture may be from 0.5% to 20% w/w. The concentration of xylo-oligosaccharides with a degree of polymerization of three may be at least 0.5%, 1%, 2%, 4%, 6%, 8%, 10%, 12%, 15%, 18%, or 20% w/w. The concentration of xylo-oligosaccharides with a degree of polymerization of three may be in some cases, for instance, up to 0.5%, 1%, 2%, 5%, 10%, or 15% w/w.

In some cases, the concentration of xylo-oligosaccharides with a degree of polymerization of four in the xylo-oligosaccharide mixture may be from 0.1% to 20% w/w. The concentration of xylo-oligosaccharides with a degree of polymerization of four may be at least 0.1%, 0.5%, 1%, 2%, 4%, 6%, 8%, 10%, 12%, 15%, 18%, or 20% w/w. The concentration of xylo-oligosaccharides with a degree of polymerization of four may be in some cases, for instance, up to 0.1%, 0.5%, 1%, 2%, 5%, 10%, or 15% w/w.

In some cases, the concentration of xylo-oligosaccharides with a degree of polymerization of five in the xylo-oligosaccharide mixture may be from 0.1% to 20% w/w. The concentration of xylo-oligosaccharides with a degree of polymerization of five may be at least 0.1%, 0.5%, 1%, 2%, 4%, 6%, 8%, 10%, 12%, 15%, 18%, or 20% w/w. The concentration of xylo-oligosaccharides with a degree of polymerization of five may be in some cases, for instance, up to 0.1%, 0.5%, 1%, 2%, 5%, 10%, or 15% w/w.

In some cases, the concentration of xylo-oligosaccharides with a degree of polymerization of six in the xylo-oligosaccharide mixture may be from 0.1% to 25% w/w. The concentration of xylo-oligosaccharides with a degree of polymerization of six may be at least 0.1%, 0.5%, 1%, 2%, 4%, 6%, 8%, 10%, 12%, 15%, 18%, or 20% w/w. The concentration of xylo-oligosaccharides with a degree of polymerization of six may be in some cases, for instance, up to 0.5%, 1%, 2%, 5%, 10%, or 15% w/w.

In some cases, the concentration of xylo-oligosaccharides with a degree of polymerization of seven in the xylo-oligosaccharide mixture may be from 0.1% to 20% w/w. The concentration of xylo-oligosaccharides with a degree of polymerization of seven may be at least 0.1%, 0.5%, 1%, 2%, 4%, 6%, 8%, 10%, 12%, 15%, 18%, or 20% w/w. The concentration of xylo-oligosaccharides with a degree of polymerization of seven may be in some cases, for instance, up to 0.1%, 0.5%, 1%, 2%, 5%, 10%, or 15% w/w.

In some cases, the concentration of xylo-oligosaccharides with a degree of polymerization of eight in a xylo-oligosaccharide mixture may be from 0.1% to 15% w/w. The concentration of xylo-oligosaccharides with a degree of polymerization of eight may be at least 0.1%, 0.5%, 1%, 2%, 4%, 6%, 8%, 10%, 12%, 15%, 18%, or 20% w/w. The concentration of xylo-oligosaccharides with a degree of polymerization of eight may be in some cases, for instance, up to 0.1%, 0.5%, 1%, 2%, 5%, 10%, or 15% w/w.

The concentration of xylo-oligosaccharides with a degree of polymerization of nine in a xylo-oligosaccharide mixture may be from 0.1% to 15% w/w. The concentration of xylo-oligosaccharides with a degree of polymerization of nine may be at least 0.1%, 0.5%, 1%, 2%, 4%, 6%, 8%, 10%, or 12% w/w. The concentration of xylo-oligosaccharides with a degree of polymerization of nine may be in some cases, for instance, up to 0.1%, 0.5%, 1%, 2%, 5%, 10% or 15% w/w.

The concentration of xylo-oligosaccharides with a degree of polymerization of ten in a xylo-oligosaccharide mixture may be from 0.1% to 15% w/w. The concentration of xylo-oligosaccharides with a degree of polymerization of ten may be at least 0.1%, 0.5%, 1%, 2%, 4%, 6%, 8%, 10%, 12% or 15% w/w. The concentration of xylo-oligosaccharides with a degree of polymerization of ten may be in some cases, for instance, up to 0.1%, 0.5%, 1%, 2%, 5%, 10%, or 15% w/w.

The concentration of xylo-oligosaccharides with a degree of polymerization of eleven in a xylo-oligosaccharide mixture may be from 0.1% to 15% w/w. The concentration of xylo-oligosaccharides with a degree of polymerization of eleven may be at least 0.1%, 0.5%, 1%, 2%, 4%, 6%, 8%, 10%, 12% or 15% w/w. The concentration of xylo-oligosaccharides with a degree of polymerization of eleven may be in some cases, for instance, up to 0.1%, 0.5%, 1%, 2%, 5%, 10%, or 15% w/w.

The concentration of xylo-oligosaccharides with a degree of polymerization of twelve in a xylo-oligosaccharide mixture may be from 0.1% to 15% w/w. The concentration of xylo-oligosaccharides with a degree of polymerization of twelve may be at least 0.1%, 0.5%, 1%, 2%, 4%, 6%, 8%, 10%, 12%, or 15% w/w. The concentration of xylo-oligosaccharides with a degree of polymerization of twelve may be in some cases, for instance, up to 0.1%, 0.5%, 1%, 2%, 5%, 10%, or 15% w/w.

In some examples, the concentration of xylo-oligosaccharides in the first component may be from 5% to 95% w/w. The concentration of xylo-oligosaccharides in the first component may be at least 5% w/w. The concentration of xylo-oligosaccharides in the first component may be at most 95% w/w. The concentration of xylo-oligosaccharides in the first component may be 5% to 10%, 5% to 20%, 5% to 30%, 5% to 40%, 5% to 50%, 5% to 60%, 5% to 70%, 5% to 80%, 5% to 90%, 5% to 95%, 10% to 20%, 10% to 30%, 10% to 40%, 10% to 50%, 10% to 60%, 10% to 70%, 10% to 80%, 10% to 90%, 10% to 95%, 20% to 30%, 20% to 40%, 20% to 50%, 20% to 60%, 20% to 70%, 20% to 80%, 20% to 90%, 20% to 95%, 30% to 40%, 30% to 50%, 30% to 60%, 30% to 70%, 30% to 80%, 30% to 90%, 30% to 95%, 40% to 50%, 40% to 60%, 40% to 70%, 40% to 80%, 40% to 90%, 40% to 95%, 50% to 60%, 50% to 70%, 50% to 80%, 50% to 90%, 50% to 95%, 60% to 70%, 60% to 80%, 60% to 90%, 60% to 95%, 70% to 80%, 70% to 90%, 70% to 95%, 80% to 90%, 80% to 95%, or 90% to 95% w/w. The concentration of xylo-oligosaccharides in the first component may be about 5%, 10%, 20%, 30%, 40%, 50%, 60%, 70%, 80%, 90%, or 95% w/w. The concentration of xylo-oligosaccharides in the first component may be at least 5%, 10%, 20%, 30%, 40%, 50%, 60%, 70%, 80% or 90% w/w. The concentration of xylo-oligosaccharides in the first component may be at most 10%, 20%, 30%, 40%, 50%, 60%, 70%, 80%, 90%, or 95% w/w.

The concentration of xylo-oligosaccharides in a sweetener composition comprising two or more components may be from 1% to 70% w/w. The concentration of xylo-oligosaccharides in a sweetener composition comprising two or more components may be at least 1% w/w. The concentration of xylo-oligosaccharides in a sweetener composition comprising two or more components may be at most 70% w/w. The concentration of xylo-oligosaccharides in a sweetener composition comprising two or more components may be 1% to 10%, 1% to 15%, 1% to 20%, 1% to 30%, 1% to 40%, 1% to 50%, 1% to 60%, 1% to 70%, 10% to 15%, 10% to 20%, 10% to 30%, 10% to 40%, 10% to 50%, 10% to 60%, 10% to 70%, 15% to 20%, 15% to 30%, 15% to 40%, 15% to 50%, 15% to 60%, 15% to 70%, 20% to 30%, 20% to 40%, 20% to 50%, 20% to 60%, 20% to 70%, 30% to 40%, 30% to 50%, 30% to 60%, 30% to 70%, 40% to 50%, 40% to 60%, 40% to 70%, 50% to 60%, 50% to 70%, or 60% to 70% w/w. The concentration of xylo-oligosaccharides in a sweetener composition comprising two or more components may be 1%, 10%, 15%, 20%, 30%, 40%, 50%, 60%, or 70% w/w. The concentration of xylo-oligosaccharides in a sweetener composition comprising two or more components may be at least 1%, 10%, 15%, 20%, 30%, 40%, 50% or 60% w/w. The concentration of xylo-oligosaccharides in a sweetener composition comprising two or more components may be at most 10%, 15%, 20%, 30%, 40%, 50%, 60%, or 70% w/w.

In some cases, the concentration of xylo-oligosaccharides in a composition such as a consumable composition or foodstuff may be about 0.1%, 0.5%, 1%, 5%, 10%, 15%, 20%, 25%, 30%, 35%, 40%, 45%, or 50% w/w. In some cases, the concentration of xylo-oligosaccharides in a composition may be at least 0.1%, 0.5%, 1%, 5%, 10%, 15%, 20%, 25%, 30%, 35%, 40%, or 45% w/w. In some cases, the concentration of xylo-oligosaccharides in a composition may be at most 5%, 10%, 15%, 20%, 25%, 30%, 35%, 40%, 45%, or 50% w/w.

### Compositions comprising cello-oligosaccharides

In some examples, the first component may comprise cello-oligosaccharides. Cello-oligosaccharides may comprise a cello-oligosaccharide mixture comprising cello-oligosaccharides with degrees of polymerization of from two to six (inclusive).

Cello-oligosaccharides may comprise cellobiose. In some examples the cello-oligosaccharides may comprise at least 20%, at least 25%, at least 30%, at least 35%, at least 40%, at least 45%, at least 50%, at least 55%, at least 50%, at least 60%, at least 65%, at least 70%, at least 80%, at least 90% or amounts of cellobiose.

In some cases, the concentration of cello-oligosaccharides with a degree of polymerization of two in the cello-oligosaccharide mixture may be from about 2% to about 80% w/w. The concentration of cello-oligosaccharides with a degree of polymerization of two may be at least 2%, 4%, 6%, 8%, 10%, 12%, 15%, 18%, 20%, 25%, or 30% w/w. The concentration of cello-oligosaccharides with a degree of polymerization of two may be in some cases, for instance, at least 35%, 40%, 45%, 50%, 55%, 60%, 65%, 70%, 75%, or 80% w/w.

In some cases, the concentration of cello-oligosaccharides with a degree of polymerization of three in a cello-oligosaccharide mixture may be from 0.5% to 20% w/w. The concentration of cello-oligosaccharides with a degree of polymerization of three may be at least 0.5%, 1%, 2%, 4%, 6%, 8%, 10%, 12%, 15%, 18%, or 20% w/w. The concentration of cello-oligosaccharides with a degree of polymerization of three may be in some cases, for instance, up to 0.5%, 1%, 2%, 5%, 10%, or 15% w/w.

In some cases, the concentration of cello-oligosaccharides with a degree of polymerization of four in the cello-oligosaccharide mixture may be from 0.1% to 20% w/w. The concentration of cello-oligosaccharides with a degree of polymerization of four may be at least 0.1%, 0.5%, 1%, 2%, 4%, 6%, 8%, 10%, 12%, 15%, 18%, or 20% w/w. The concentration of cello-oligosaccharides with a degree of polymerization of four may be in some cases, for instance, up to 0.1%, 0.5%, 1%, 2%, 5%, 10%, or 15% w/w.

In some cases, the concentration of cello-oligosaccharides with a degree of polymerization of five in the cello-oligosaccharide mixture may be from 0.1% to 20% w/w. The concentration of cello-oligosaccharides with a degree of polymerization of five may be at least 0.1%, 0.5%, 1%, 2%, 4%, 6%, 8%, 10%, 12%, 15%, 18%, or 20% w/w. The concentration of cello-oligosaccharides with a degree of polymerization of five may be in some cases, for instance, up to 0.1%, 0.5%, 1%, 2%, 5%, 10%, or 15% w/w.

In some cases, the concentration of cello-oligosaccharides with a degree of polymerization of six in the cello-oligosaccharide mixture may be from 0.1% to 25% w/w. The concentration of cello-oligosaccharides with a degree of polymerization of six may be at least 0.1%, 0.5%, 1%, 2%, 4%, 6%, 8%, 10%, 12%, 15%, 18%, or 20% w/w. The concentration of cello-oligosaccharides with a degree of polymerization of six may be in some cases, for instance, up to 0.5%, 1%, 2%, 5%, 10%, or 15% w/w.

In some examples, the concentration of cello-oligosaccharides in the first component may be 5% to 70% w/w. The concentration of cello-oligosaccharides in the first component may be at least 5% w/w. The concentration of cello-oligosaccharides in the first component may be at most 70% w/w. The concentration of cello-oligosaccharides in the first component may be 5% to 10%, 5% to 20%, 5% to 30%, 5% to 40%, 5% to 50%, 5% to 60%, 5% to 70%, 10% to 20%, 10% to 30%, 10% to 40%, 10% to 50%, 10% to 60%, 10% to 70%, 20% to 30%, 20% to 40%, 20% to 50%, 20% to 60%, 20% to 70%, 30% to 40%, 30% to 50%, 30% to 60%, 30% to 70%, 40% to 50%, 40% to 60%, 40% to 70%, 50% to 60%, 50% to 70%, or 60% to 70% w/w. The concentration of cello-oligosaccharides in the first component may be 5%, 10%, 20%, 30%, 40%, 50%, 60%, or 70% w/w. The concentration of cello-oligosaccharides in the first component may be at least 5%, 10%, 20%, 30%, 40%, 50%, 60%, or 70% w/w. The concentration of cello-oligosaccharides in the first component may be at most 5%, 10%, 20%, 30%, 40%, 50%, 60%, or 70% w/w.

The concentration of cello-oligosaccharides in a sweetener composition comprising two or more components may be from 1% to 70% w/w. The concentration of cello-oligosaccharides in a sweetener composition comprising two or more components may be at least 1% w/w. The concentration of cello-oligosaccharides in a sweetener composition comprising two or more components may be at most 70% w/w. The concentration of cello-oligosaccharides in a sweetener composition comprising two or more components may be 1% to 10%, 1% to 15%, 1% to 20%, 1% to 30%, 1% to 40%, 1% to 50%, 1% to 60%, 1% to 70%, 10% to 15%, 10% to 20%, 10% to 30%, 10% to 40%, 10% to 50%, 10% to 60%, 10% to 70%, 15% to 20%, 15% to 30%, 15% to 40%, 15% to 50%, 15% to 60%, 15% to 70%, 20% to 30%, 20% to 40%, 20% to 50%, 20% to 60%, 20% to 70%, 30% to 40%, 30% to 50%, 30% to 60%, 30% to 70%, 40% to 50%, 40% to 60%, 40% to 70%, 50% to 60%, 50% to 70%, or 60% to 70% w/w. The concentration of cello-oligosaccharides in a sweetener composition comprising two or more components may be 1%, 10%, 15%, 20%, 30%, 40%, 50%, 60%, or 70% w/w. The concentration of cello-oligosaccharides in a sweetener composition comprising two or more components may be at least 1%, 10%, 15%, 20%, 30%, 40%, 50% or 60% w/w. The concentration of cello-oligosaccharides in a sweetener composition comprising two or more components may be at most 10%, 15%, 20%, 30%, 40%, 50%, 60%, or 70% w/w.

In some cases, the concentration of cello-oligosaccharides in a composition such as a consumable composition or foodstuff may be about 0.1%, 0.5%, 1%, 5%, 10%, 15%, 20%, 25% or 30% w/w. In some cases, the concentration of cello-oligosaccharides in a composition may be at least 0.1%, 0.5%, 1%, 5%, 10%, 15%, 20%, 25%, 30% w/w. In some cases, the concentration of cello-oligosaccharides in a composition may be at most 5%, 10%, 15%, 20% or 25% w/w.

### Compositions comprising manno-oligosaccharides

In some examples, the first component may comprise manno-oligosaccharides. Manno-oligosaccharides may comprise a manno-oligosaccharide mixture comprising manno-oligosaccharides with degrees of polymerization of from two to twelve (inclusive).

In some cases, the concentration of manno-oligosaccharides with a degree of polymerization of two in the manno-oligosaccharide mixture may be from 2% to 30% w/w. The concentration of manno-oligosaccharides with a degree of polymerization of two may be at least 2%, 4%, 6%, 8%, 10%, 12%, 15%, 18%, 20%, 25%, or 30% w/w.

In some cases, the concentration of manno-oligosaccharides with a degree of polymerization of three in a manno-oligosaccharide mixture may be from 0.5% to 20% w/w. The concentration of manno-oligosaccharides with a degree of polymerization of three may be at least 0.5%, 1%, 2%, 4%, 6%, 8%, 10%, 12%, 15%, 18%, or 20% w/w. The concentration of manno-oligosaccharides with a degree of polymerization of three may be in some cases, for instance, up to 0.5%, 1%, 2%, 5%, 10%, or 15% w/w.

In some cases, the concentration of manno-oligosaccharides with a degree of polymerization of four in the manno-oligosaccharide mixture may be from 0.1% to 20% w/w. The concentration of manno-oligosaccharides with a degree of polymerization of four may be at least 0.1%, 0.5%, 1%, 2%, 4%, 6%, 8%, 10%, 12%, 15%, 18%, or 20% w/w. The concentration of manno-oligosaccharides with a degree of polymerization of four may be in some cases, for instance, up to 0.1%, 0.5%, 1%, 2%, 5%, 10%, or 15% w/w.

In some cases, the concentration of manno-oligosaccharides with a degree of polymerization of five in the manno-oligosaccharide mixture may be from 0.1% to 20% w/w. The concentration of manno-oligosaccharides with a degree of polymerization of five may be at least 0.1%, 0.5%, 1%, 2%, 4%, 6%, 8%, 10%, 12%, 15%, 18%, or 20% w/w. The concentration of manno-oligosaccharides with a degree of polymerization of five may be in some cases, for instance, up to 0.1%, 0.5%, 1%, 2%, 5%, 10%, or 15% w/w.

In some cases, the concentration of manno-oligosaccharides with a degree of polymerization of six in the manno-oligosaccharide mixture may be from 0.1% to 25% w/w. The concentration of manno-oligosaccharides with a degree of polymerization of six may be at least 0.1%, 0.5%, 1%, 2%, 4%, 6%, 8%, 10%, 12%, 15%, 18%, or 20% w/w. The concentration of manno-oligosaccharides with a degree of polymerization of six may be in some cases, for instance, up to 0.5%, 1%, 2%, 5%, 10%, or 15% w/w.

In some cases, the concentration of manno-oligosaccharides with a degree of polymerization of seven in the manno-oligosaccharide mixture may be from 0.1% to 20% w/w. The concentration of manno-oligosaccharides with a degree of polymerization of seven may be at least 0.1%, 0.5%, 1%, 2%, 4%, 6%, 8%, 10%, 12%, 15%, 18%, or 20% w/w. The concentration of manno-oligosaccharides with a degree of polymerization of seven may be in some cases, for instance, up to 0.1%, 0.5%, 1%, 2%, 5%, 10%, or 15% w/w.

In some cases, the concentration of manno-oligosaccharides with a degree of polymerization of eight in a manno-oligosaccharide mixture may be from 0.1% to 15% w/w. The concentration of manno-oligosaccharides with a degree of polymerization of eight may be at least 0.1%, 0.5%, 1%, 2%, 4%, 6%, 8%, 10%, 12%, 15%, 18%, or 20% w/w. The concentration of manno-oligosaccharides with a degree of polymerization of eight may be in some cases, for instance, up to 0.1%, 0.5%, 1%, 2%, 5%, 10%, or 15% w/w.

The concentration of manno-oligosaccharides with a degree of polymerization of nine in a manno-oligosaccharide mixture may be from 0.1% to 15% w/w. The concentration of manno-oligosaccharides with a degree of polymerization of nine may be at least 0.1%, 0.5%, 1%, 2%, 4%, 6%, 8%, 10% or 12% w/w. The concentration of manno-oligosaccharides with a degree of polymerization of nine may be in some cases, for instance, up to 0.1%, 0.5%, 1%, 2%, 5%, 10%, or 15% w/w.

The concentration of manno-oligosaccharides with a degree of polymerization of ten in a manno-oligosaccharide mixture may be from 0.1% to 15% w/w. The concentration of manno-oligosaccharides with a degree of polymerization of ten may be at least 0.1%, 0.5%, 1%, 2%, 4%, 6%, 8%, 10%, 12% or 15% w/w. The concentration of manno-oligosaccharides with a degree of polymerization of ten may be in some cases, for instance, up to 0.1%, 0.5%, 1%, 2%, 5%, 10%, or 15% w/w.

The concentration of manno-oligosaccharides with a degree of polymerization of eleven in a manno-oligosaccharide mixture may be from 0.1% to 15% w/w. The concentration of manno-oligosaccharides with a degree of polymerization of eleven may be at least 0.1%, 0.5%, 1%, 2%, 4%, 6%, 8%, 10%, 12% or 15% w/w. The concentration of manno-oligosaccharides with a degree of polymerization of eleven may be in some cases, for instance, up to 0.1%, 0.5%, 1%, 2%, 5%, 10%, or 15% w/w.

The concentration of manno-oligosaccharides with a degree of polymerization of twelve in a manno-oligosaccharide mixture may be from 0.1% to 15% w/w. The concentration of manno-oligosaccharides with a degree of polymerization of twelve may be at least 0.1%, 0.5%, 1%, 2%, 4%, 6%, 8%, 10%, 12% or 15% w/w. The concentration of manno-oligosaccharides with a degree of polymerization of twelve may be in some cases, for instance, up to 0.1%, 0.5%, 1%, 2%, 5%, 10%, or 15% w/w.

In some examples, the concentration of manno-oligosaccharides in the first component may be 5% to 95% w/w. The concentration of manno-oligosaccharides in the first component may be at least 5% w/w. The concentration of manno-oligosaccharides in the first component may be at most 95% w/w. The concentration of manno-oligosaccharides in the first component may be 5% to 10%, 5% to 20%, 5% to 30%, 5% to 40%, 5% to 50%, 5% to 60%, 5% to 70%, 5% to 80%, 5% to 90%, 5% to 95%, 10% to 20%, 10% to 30%, 10% to 40%, 10% to 50%, 10% to 60%, 10% to 70%, 10% to 80%, 10% to 90%, 10% to 95%, 20% to 30%, 20% to 40%, 20% to 50%, 20% to 60%, 20% to 70%, 20% to 80%, 20% to 90%, 20% to 95%, 30% to 40%, 30% to 50%, 30% to 60%, 30% to 70%, 30% to 80%, 30% to 90%, 30% to 95%, 40% to 50%, 40% to 60%, 40% to 70%, 40% to 80%, 40% to 90%, 40% to 95%, 50% to 60%, 50% to 70%, 50% to 80%, 50% to 90%, 50% to 95%, 60% to 70%, 60% to 80%, 60% to 90%, 60% to 95%, 70% to 80%, 70% to 90%, 70% to 95%, 80% to 90%, 80% to 95%, or 90% to 95% w/w. The concentration of manno-oligosaccharides in the first component may be 5%, 10%, 20%, 30%, 40%, 50%, 60%, 70%, 80%, 90%, or 95% w/w. The concentration of manno-oligosaccharides in the first component may be at least 5%, 10%, 20%, 30%, 40%, 50%, 60%, 70%, 80% or 90% w/w. The concentration of manno-oligosaccharides in the first component may be at most 10%, 20%, 30%, 40%, 50%, 60%, 70%, 80%, 90%, or 95% w/w.

The concentration of manno-oligosaccharides in a sweetener composition comprising two or more components may be 1% to 70% w/w. The concentration of manno-oligosaccharides in a sweetener composition comprising two or more components may be at least 1% w/w. The concentration of manno-oligosaccharides in a sweetener composition comprising two or more components may be at most 70% w/w. The concentration of manno-oligosaccharides in a sweetener composition comprising two or more components may be 1% to 10%, 1% to 15%, 1% to 20%, 1% to 30%, 1% to 40%, 1% to 50%, 1% to 60%, 1% to 70%, 10% to 15%, 10% to 20%, 10% to 30%, 10% to 40%, 10% to 50%, 10% to 60%, 10% to 70%, 15% to 20%, 15% to 30%, 15% to 40%, 15% to 50%, 15% to 60%, 15% to 70%, 20% to 30%, 20% to 40%, 20% to 50%, 20% to 60%, 20% to 70%, 30% to 40%, 30% to 50%, 30% to 60%, 30% to 70%, 40% to 50%, 40% to 60%, 40% to 70%, 50% to 60%, 50% to 70%, or 60% to 70% w/w. The concentration of manno-oligosaccharides in a sweetener composition comprising two or more components may be 1%, 10%, 15%, 20%, 30%, 40%, 50%, 60%, or 70% w/w. The concentration of manno-oligosaccharides in a sweetener composition comprising two or more components may be at least 1%, 10%, 15%, 20%, 30%, 40%, 50% or 60% w/w. The concentration of manno-oligosaccharides in a sweetener composition comprising two or more components may be at most 10%, 15%, 20%, 30%, 40%, 50%, 60%, or 70% w/w.

In some cases, the concentration of manno-oligosaccharides in a composition such as a consumable composition or foodstuff may be about 0.1%, 0.5%, 1%, 5%, 10%, 15%, 20%, 25%, 30%, 35%, 40%, 45%, or 50% w/w. In some cases, the concentration of manno-oligosaccharides in a composition may be at least 0.1%, 0.5%, 1%, 5%, 10%, 15%, 20%, 25%, 30%, 35%, 40%, or 45% w/w. In some cases, the concentration of manno-oligosaccharides in a composition may be at most 5%, 10%, 15%, 20%, 25%, 30%, 35%, 40%, 45%, or 50% w/w.

### Compositions comprising xyloglucan-oligosaccharides

In some examples, the first component may comprise xyloglucan-oligosaccharides. xyloglucan-oligosaccharides may comprise a xyloglucan-oligosaccharides mixture comprising xyloglucan-oligosaccharides with degrees of polymerization of from four to twelve (inclusive).

In some cases, the concentration of xyloglucan-oligosaccharides with a degree of polymerization of four in the xyloglucan-oligosaccharide mixture may be from 0.1% to 50% w/w. The concentration of xyloglucan-oligosaccharides with a degree of polymerization of four may be at least 0.1%, 0.5%, 1%, 2%, 4%, 6%, 8%, 10%, 12%, 15%, 18%, 20%, 25%, 30%, 40% or 50% w/w. The concentration of xyloglucan-oligosaccharides with a degree of polymerization of four may be in some cases, for instance, up to 0.1%, 0.5%, 1%, 2%, 5%, 10%, 15%, 20%, 25%, 30%, 35%, 40%, or 45% w/w.

In some cases, the concentration of xyloglucan-oligosaccharides with a degree of polymerization of five in the xyloglucan-oligosaccharide mixture may be from 0.1% to 20% w/w. The concentration of xyloglucan-oligosaccharides with a degree of polymerization of five may be at least 0.1%, 0.5%, 1%, 2%, 4%, 6%, 8%, 10%, 12%, 15%, 18%, or 20% w/w. The concentration of xyloglucan-oligosaccharides with a degree of polymerization of five may be in some cases, for instance, up to 0.1%, 0.5%, 1%, 2%, 5%, 10%, or 15% w/w.

In some cases, the concentration of xyloglucan-oligosaccharides with a degree of polymerization of six in the xyloglucan-oligosaccharide mixture may be from 0.1% to 25% w/w. The concentration of xyloglucan-oligosaccharides with a degree of polymerization of six may be at least 0.1%, 0.5%, 1%, 2%, 4%, 6%, 8%, 10%, 12%, 15%, 18%, or 20% w/w. The concentration of xyloglucan-oligosaccharides with a degree of polymerization of six may be in some cases, for instance, up to 0.5%, 1%, 2%, 5%, 10%, or 15% w/w.

In some cases, the concentration of xyloglucan-oligosaccharides with a degree of polymerization of seven in the xyloglucan-oligosaccharide mixture may be from 0.1% to 20% w/w. The concentration of xyloglucan-oligosaccharides with a degree of polymerization of seven may be at least 0.1%, 0.5%, 1%, 2%, 4%, 6%, 8%, 10%, 12%, 15%, 18%, or 20% w/w. The concentration of xyloglucan-oligosaccharides with a degree of polymerization of seven may be in some cases, for instance, up to 0.1%, 0.5%, 1%, 2%, 5%, 10%, or 15% w/w.

In some cases, the concentration of xyloglucan-oligosaccharides with a degree of polymerization of eight in a xyloglucan-oligosaccharide mixture may be from 0.1% to 15% w/w. The concentration of xyloglucan-oligosaccharides with a degree of polymerization of eight may be at least 0.1%, 0.5%, 1%, 2%, 4%, 6%, 8%, 10%, 12%, 15%, 18%, or 20% w/w. The concentration of xyloglucan-oligosaccharides with a degree of polymerization of eight may be in some cases, for instance, up to 0.1%, 0.5%, 1%, 2%, 5%, 10%, or 15% w/w.

The concentration of xyloglucan-oligosaccharides with a degree of polymerization of nine in a xyloglucan-oligosaccharide mixture may be from 0.1% to 15% w/w. The concentration of xyloglucan-oligosaccharides with a degree of polymerization of nine may be at least 0.1%, 0.5%, 1%, 2%, 4%, 6%, 8%, 10% or 12% w/w. The concentration of xyloglucan-oligosaccharides with a degree of polymerization of nine may be in some cases, for instance, up to 0.1%, 0.5%, 1%, 2%, 5%, 10%, or 15% w/w.

The concentration of xyloglucan-oligosaccharides with a degree of polymerization of ten in a xyloglucan-oligosaccharide mixture may be from 0.1% to 15% w/w. The concentration of xyloglucan-oligosaccharides with a degree of polymerization of ten may be at least 0.1%, 0.5%, 1%, 2%, 4%, 6%, 8%, 10%, 12% or 15% w/w. The concentration of xyloglucan-oligosaccharides with a degree of polymerization of ten may be in some cases, for instance, up to 0.1%, 0.5%, 1%, 2%, 5%, 10%, or 15% w/w.

The concentration of xyloglucan-oligosaccharides with a degree of polymerization of eleven in a xyloglucan-oligosaccharide mixture may be from 0.1% to 15% w/w. The concentration of xyloglucan-oligosaccharides with a degree of polymerization of eleven may be at least 0.1%, 0.5%, 1%, 2%, 4%, 6%, 8%, 10%, 12%, or 15% w/w. The concentration of xyloglucan-oligosaccharides with a degree of polymerization of eleven may be in some cases, for instance, up to 0.1%, 0.5%, 1%, 2%, 5%, 10%, or 15% w/w.

The concentration of xyloglucan-oligosaccharides with a degree of polymerization of twelve in a xyloglucan-oligosaccharide mixture may be from 0.1% to 15% w/w. The concentration of xyloglucan-oligosaccharides with a degree of polymerization of twelve may be at least 0.1%, 0.5%, 1%, 2%, 4%, 6%, 8%, 10%, 12%, or 15% w/w. The concentration of xyloglucan-oligosaccharides with a degree of polymerization of twelve may be in some cases, for instance, up to 0.1%, 0.5%, 1%, 2%, 5%, 10%, or 15% w/w.

In some examples, the concentration of xyloglucan-oligosaccharides in the first component may be 5% to 95% w/w. The concentration of xyloglucan-oligosaccharides in the first component may be at least 5% w/w. The concentration of xyloglucan-oligosaccharides in the first component may be at most 95% w/w. The concentration of xyloglucan-oligosaccharides in the first component may be 5% to 10%, 5% to 20%, 5% to 30%, 5% to 40%, 5% to 50%, 5% to 60%, 5% to 70%, 5% to 80%, 5% to 90%, 5% to 95%, 10% to 20%, 10% to 30%, 10% to 40%, 10% to 50%, 10% to 60%, 10% to 70%, 10% to 80%, 10% to 90%, 10% to 95%, 20% to 30%, 20% to 40%, 20% to 50%, 20% to 60%, 20% to 70%, 20% to 80%, 20% to 90%, 20% to 95%, 30% to 40%, 30% to 50%, 30% to 60%, 30% to 70%, 30% to 80%, 30% to 90%, 30% to 95%, 40% to 50%, 40% to 60%, 40% to 70%, 40% to 80%, 40% to 90%, 40% to 95%, 50% to 60%, 50% to 70%, 50% to 80%, 50% to 90%, 50% to 95%, 60% to 70%, 60% to 80%, 60% to 90%, 60% to 95%, 70% to 80%, 70% to 90%, 70% to 95%, 80% to 90%, 80% to 95%, or 90% to 95% w/w. The concentration of xyloglucan-oligosaccharides in the first component may be 5%, 10%, 20%, 30%, 40%, 50%, 60%, 70%, 80%, 90%, or 95% w/w. The concentration of xyloglucan-oligosaccharides in the first component may be at least 5%, 10%, 20%, 30%, 40%, 50%, 60%, 70%, 80% or 90% w/w. The concentration of xyloglucan-oligosaccharides in the first component may be at most 10%, 20%, 30%, 40%, 50%, 60%, 70%, 80%, 90%, or 95% w/w.

The concentration of xyloglucan-oligosaccharides in a sweetener composition comprising two or more components may be 1% to 70% w/w. The concentration of xyloglucan-oligosaccharides in a sweetener composition comprising two or more components may be at least 1% w/w. The concentration of xyloglucan-oligosaccharides in a sweetener composition comprising two or more components may be at most 70% w/w. The concentration of xyloglucan-oligosaccharides in a sweetener composition comprising two or more components may be 1% to 10%, 1% to 15%, 1% to 20%, 1% to 30%, 1% to 40%, 1% to 50%, 1% to 60%, 1% to 70%, 10% to 15%, 10% to 20%, 10% to 30%, 10% to 40%, 10% to 50%, 10% to 60%, 10% to 70%, 15% to 20%, 15% to 30%, 15% to 40%, 15% to 50%, 15% to 60%, 15% to 70%, 20% to 30%, 20% to 40%, 20% to 50%, 20% to 60%, 20% to 70%, 30% to 40%, 30% to 50%, 30% to 60%, 30% to 70%, 40% to 50%, 40% to 60%, 40% to 70%, 50% to 60%, 50% to 70%, or 60% to 70% w/w. The concentration of xyloglucan-oligosaccharides in a sweetener composition comprising two or more components may be 1%, 10%, 15%, 20%, 30%, 40%, 50%, 60%, or 70% w/w. The concentration of xyloglucan-oligosaccharides in a sweetener composition comprising two or more components may be at least 1%, 10%, 15%, 20%, 30%, 40%, 50% or 60% w/w. The concentration of xyloglucan-oligosaccharides in a sweetener composition comprising two or more components may be at most 10%, 15%, 20%, 30%, 40%, 50%, 60%, or 70% w/w.

In some cases, the concentration of xyloglucan-oligosaccharides in a composition such as a consumable composition or foodstuff may be about 0.1%, 0.5%, 1%, 5%, 10%, 15%, 20%, 25%, 30%, 35%, 40%, 45%, or 50% w/w. In some cases, the concentration of xyloglucan-oligosaccharides in a composition may be at least 0.1%, 0.5%, 1%, 5%, 10%, 15%, 20%, 25%, 30%, 35%, 40%, or 45% w/w. In some cases, the concentration of xyloglucan-oligosaccharides in a composition may be at most 5%, 10%, 15%, 20%, 25%, 30%, 35%, 40%, 45%, or 50% w/w.

### Compositions comprising mixed-linkage glucan-oligosaccharides

In some examples, the first component may comprise mixed-linkage glucan-oligosaccharides. Mixed-linkage glucan-oligosaccharides may comprise a mixed-linkage glucan-oligosaccharides mixture comprising mixed-linkage glucan-oligosaccharides with degrees of polymerization of from two to five (inclusive).

In some cases, the concentration of mixed-linkage glucan-oligosaccharides with a degree of polymerization of two in the mixed-linkage glucan-oligosaccharide mixture may be from 2% to 30% w/w. The concentration of mixed-linkage glucan-oligosaccharides with a degree of polymerization of two may be at least 2%, 4%, 6%, 8%, 10%, 12%, 15%, 18%, 20%, 25%, or 30% w/w. The concentration of mixed-linkage glucan-oligosaccharides with a degree of polymerization of two may be at most 2%, 4%, 6%, 8%, 10%, 12%, 15%, 18%, 20%, 25%, or 30% w/w.

In some cases, the concentration of mixed-linkage glucan-oligosaccharides with a degree of polymerization of three in a mixed-linkage glucan-oligosaccharide mixture may be from 0.5% to 20% w/w. The concentration of mixed-linkage glucan-oligosaccharides with a degree of polymerization of three may be at least 0.5%, 1%, 2%, 4%, 6%, 8%, 10%, 12%, 15%, 18%, or 20% w/w. The concentration of mixed-linkage glucan-oligosaccharides with a degree of polymerization of three may be in some cases, for instance, up to 0.5%, 1%, 2%, 5%, 10%, or 15% w/w.

In some cases, the concentration of mixed-linkage glucan-oligosaccharides with a degree of polymerization of four in the mixed-linkage glucan-oligosaccharide mixture may be from 0.1% to 20% w/w. The concentration of mixed-linkage glucan-oligosaccharides with a degree of polymerization of four may be at least 0.1%, 0.5%, 1%, 2%, 4%, 6%, 8%, 10%, 12%, 15%, 18%, or 20% w/w. The concentration of mixed-linkage glucan-oligosaccharides with a degree of polymerization of four may be in some cases, for instance, up to 0.1%, 0.5%, 1%, 2%, 5%, 10%, or 15% w/w.

In some cases, the concentration of mixed-linkage glucan-oligosaccharides with a degree of polymerization of five in the mixed-linkage glucan-oligosaccharide mixture may be from 0.1% to 20% w/w. The concentration of mixed-linkage glucan-oligosaccharides with a degree of polymerization of five may be at least 0.1%, 0.5%, 1%, 2%, 4%, 6%, 8%, 10%, 12%, 15%, 18%, or 20% w/w. The concentration of mixed-linkage glucan-oligosaccharides with a degree of polymerization of five may be in some cases, for instance, up to 0.1%, 0.5%, 1%, 2%, 5%, 10%, or 15% w/w.

In some examples, the concentration of mixed-linkage glucan-oligosaccharides in the first component may be 5% to 95% w/w. The concentration of mixed-linkage glucan-oligosaccharides in the first component may be at least 5% w/w. The concentration of mixed-linkage glucan-oligosaccharides in the first component may be at most 95% w/w. The concentration of mixed-linkage glucan-oligosaccharides in the first component may be 5% to 10%, 5% to 20%, 5% to 30%, 5% to 40%, 5% to 50%, 5% to 60%, 5% to 70%, 5% to 80%, 5% to 90%, 5% to 95%, 10% to 20%, 10% to 30%, 10% to 40%, 10% to 50%, 10% to 60%, 10% to 70%, 10% to 80%, 10% to 90%, 10% to 95%, 20% to 30%, 20% to 40%, 20% to 50%, 20% to 60%, 20% to 70%, 20% to 80%, 20% to 90%, 20% to 95%, 30% to 40%, 30% to 50%, 30% to 60%, 30% to 70%, 30% to 80%, 30% to 90%, 30% to 95%, 40% to 50%, 40% to 60%, 40% to 70%, 40% to 80%, 40% to 90%, 40% to 95%, 50% to 60%, 50% to 70%, 50% to 80%, 50% to 90%, 50% to 95%, 60% to 70%, 60% to 80%, 60% to 90%, 60% to 95%, 70% to 80%, 70% to 90%, 70% to 95%, 80% to 90%, 80% to 95%, or 90% to 95% w/w. The concentration of mixed-linkage glucan-oligosaccharides in the first component may be 5%, 10%, 20%, 30%, 40%, 50%, 60%, 70%, 80%, 90%, or 95% w/w. The concentration of mixed-linkage glucan-oligosaccharides in the first component may be at least 5%, 10%, 20%, 30%, 40%, 50%, 60%, 70%, 80% or 90% w/w. The concentration of mixed-linkage glucan-oligosaccharides in the first component may be at most 10%, 20%, 30%, 40%, 50%, 60%, 70%, 80%, 90%, or 95% w/w.

The concentration of mixed-linkage glucan-oligosaccharides in a sweetener composition comprising two or more components may be 1% to 70% w/w. The concentration of mixed-linkage glucan-oligosaccharides in a sweetener composition comprising two or more components may be at least 1% w/w. The concentration of mixed-linkage glucan-oligosaccharides in a sweetener composition comprising two or more components may be at most 70% w/w. The concentration of mixed-linkage glucan-oligosaccharides in a sweetener composition comprising two or more components may be 1% to 10%, 1% to 15%, 1% to 20%, 1% to 30%, 1% to 40%, 1% to 50%, 1% to 60%, 1% to 70%, 10% to 15%, 10% to 20%, 10% to 30%, 10% to 40%, 10% to 50%, 10% to 60%, 10% to 70%, 15% to 20%, 15% to 30%, 15% to 40%, 15% to 50%, 15% to 60%, 15% to 70%, 20% to 30%, 20% to 40%, 20% to 50%, 20% to 60%, 20% to 70%, 30% to 40%, 30% to 50%, 30% to 60%, 30% to 70%, 40% to 50%, 40% to 60%, 40% to 70%, 50% to 60%, 50% to 70%, or 60% to 70% w/w. The concentration of mixed-linkage glucan-oligosaccharides in a sweetener composition comprising two or more components may be 1%, 10%, 15%, 20%, 30%, 40%, 50%, 60%, or 70% w/w. The concentration of mixed-linkage glucan-oligosaccharides in a sweetener composition comprising two or more components may be at least 1%, 10%, 15%, 20%, 30%, 40%, 50% or 60% w/w. The concentration of mixed-linkage glucan-oligosaccharides in a sweetener composition comprising two or more components may be at most 10%, 15%, 20%, 30%, 40%, 50%, 60%, or 70% w/w.

In some cases, the concentration of mixed-linkage glucan-oligosaccharides in a composition such as a consumable composition or foodstuff may be about 0.1%, 0.5%, 1%, 5%, 10%, 15%, 20%, 25%, 30%, 35%, 40%, 45%, or 50% w/w. In some cases, the concentration of mixed-linkage glucan-oligosaccharides in a composition may be at least 0.1%, 0.5%, 1%, 5%, 10%, 15%, 20%, 25%, 30%, 35%, 40%, or 45% w/w. In some cases, the concentration of mixed-linkage glucan-oligosaccharides in a composition may be at most 5%, 10%, 15%, 20%, 25%, 30%, 35%, 40%, 45%, or 50% w/w.

### Compositions comprising chito-oligosaccharides

In some examples, the first component may comprise chito-oligosaccharides. chito-oligosaccharides may comprise a chito-oligosaccharides mixture comprising chito-oligosaccharides with degrees of polymerization of from two to twelve (inclusive).

In some cases, the concentration of chito-oligosaccharides with a degree of polymerization of two in the chito-oligosaccharide mixture may be from 2% to 80% w/w. The concentration of chito-oligosaccharides with a degree of polymerization of two may be at least 2%, 4%, 6%, 8%, 10%, 12%, 15%, 18%, 20%, 25%, 30%, 40%, 50% or 60% w/w. The concentration of chito-oligosaccharides with a degree of polymerization of two may be in some cases, for instance, up to 35%, 40%, 45%, 50%, 55%, 60%, 65%, 70%, 75%, or 80% w/w.

In some cases, the concentration of chito-oligosaccharides with a degree of polymerization of three in a chito-oligosaccharide mixture may be from 0.5% to 20% w/w. The concentration of chito-oligosaccharides with a degree of polymerization of three may be at least 0.5%, 1%, 2%, 4%, 6%, 8%, 10%, 12%, 15%, 18%, or 20% w/w. The concentration of chito-oligosaccharides with a degree of polymerization of three may be in some cases, for instance, up to 0.5%, 1%, 2%, 5%, 10%, or 15% w/w.

In some cases, the concentration of chito-oligosaccharides with a degree of polymerization of four in the chito-oligosaccharide mixture may be from 0.1% to 20% w/w. The concentration of chito-oligosaccharides with a degree of polymerization of four may be at least 0.1%, 0.5%, 1%, 2%, 4%, 6%, 8%, 10%, 12%, 15%, 18%, or 20% w/w. The concentration of chito-oligosaccharides with a degree of polymerization of four may be in some cases, for instance, up to 0.1%, 0.5%, 1%, 2%, 5%, 10%, or 15% w/w.

In some cases, the concentration of chito-oligosaccharides with a degree of polymerization of five in the chito-oligosaccharide mixture may be from 0.1% to 20% w/w. The concentration of chito-oligosaccharides with a degree of polymerization of five may be at least 0.1%, 0.5%, 1%, 2%, 4%, 6%, 8%, 10%, 12%, 15%, 18%, or 20% w/w. The concentration of chito-oligosaccharides with a degree of polymerization of five may be in some cases, for instance, up to 0.1%, 0.5%, 1%, 2%, 5%, 10%, or 15% w/w.

In some cases, the concentration of chito-oligosaccharides with a degree of polymerization of six in the chito-oligosaccharide mixture may be from 0.1% to 25% w/w. The concentration of chito-oligosaccharides with a degree of polymerization of six may be at least 0.1%, 0.5%, 1%, 2%, 4%, 6%, 8%, 10%, 12%, 15%, 18%, or 20% w/w. The concentration of chito-oligosaccharides with a degree of polymerization of six may be in some cases, for instance, up to 0.5%, 1%, 2%, 5%, 10%, or 15% w/w.

In some cases, the concentration of chito-oligosaccharides with a degree of polymerization of seven in the chito-oligosaccharide mixture may be from 0.1% to 20% w/w. The concentration of chito-oligosaccharides with a degree of polymerization of seven may be at least 0.1%, 0.5%, 1%, 2%, 4%, 6%, 8%, 10%, 12%, 15%, 18%, or 20% w/w. The concentration of chito-oligosaccharides with a degree of polymerization of seven may be in some cases, for instance, up to 0.1%, 0.5%, 1%, 2%, 5%, 10%, or 15% w/w.

In some cases, the concentration of chito-oligosaccharides with a degree of polymerization of eight in a chito-oligosaccharide mixture may be from 0.1% to 15% w/w. The concentration of chito-oligosaccharides with a degree of polymerization of eight may be at least 0.1%, 0.5%, 1%, 2%, 4%, 6%, 8%, 10%, 12%, 15%, 18%, or 20% w/w. The concentration of chito-oligosaccharides with a degree of polymerization of eight may be in some cases, for instance, up to 0.1%, 0.5%, 1%, 2%, 5%, 10%, or 15% w/w.

The concentration of chito-oligosaccharides with a degree of polymerization of nine in a chito-oligosaccharide mixture may be from 0.1% to 15% w/w. The concentration of chito-oligosaccharides with a degree of polymerization of nine may be at least 0.1%, 0.5%, 1%, 2%, 4%, 6%, 8%, 10% or 12% w/w. The concentration of chito-oligosaccharides with a degree of polymerization of nine may be in some cases, for instance, up to 0.1%, 0.5%, 1%, 2%, 5%, 10%, or 15% w/w.

The concentration of chito-oligosaccharides with a degree of polymerization of ten in a chito-oligosaccharide mixture may be from 0.1% to 15% w/w. The concentration of chito-oligosaccharides with a degree of polymerization of ten may be at least 0.1%, 0.5%, 1%, 2%, 4%, 6%, 8%, 10%, 12%, or 15% w/w. The concentration of chito-oligosaccharides with a degree of polymerization of ten may be in some cases, for instance, up to 0.1%, 0.5%, 1%, 2%, 5%, 10%, or 15% w/w.

The concentration of chito-oligosaccharides with a degree of polymerization of eleven in a chito-oligosaccharide mixture may be from 0.1% to 15% w/w. The concentration of chito-oligosaccharides with a degree of polymerization of eleven may be at least 0.1%, 0.5%, 1%, 2%, 4%, 6%, 8%, 10%, 12% or 15% w/w. The concentration of chito-oligosaccharides with a degree of polymerization of eleven may be in some cases, for instance, up to 0.1%, 0.5%, 1%, 2%, 5%, 10% or 15% w/w.

The concentration of chito-oligosaccharides with a degree of polymerization of twelve in a chito-oligosaccharide mixture may be from 0.1% to 15% w/w. The concentration of chito-oligosaccharides with a degree of polymerization of twelve may be at least 0.1%, 0.5%, 1%, 2%, 4%, 6%, 8%, 10%, 12%, or 15% w/w. The concentration of chito-oligosaccharides with a degree of polymerization of twelve may be in some cases, for instance, up to 0.1%, 0.5%, 1%, 2%, 5%, 10%, or 15% w/w.

In some examples, the concentration of chito-oligosaccharides in the first component may be 5% to 95% w/w. The concentration of chito-oligosaccharides in the first component may be at least 5% w/w. The concentration of chito-oligosaccharides in the first component may be at most 95% w/w. The concentration of chito-oligosaccharides in the first component may be 5% to 10%, 5% to 20%, 5% to 30%, 5% to 40%, 5% to 50%, 5% to 60%, 5% to 70%, 5% to 80%, 5% to 90%, 5% to 95%, 10% to 20%, 10% to 30%, 10% to 40%, 10% to 50%, 10% to 60%, 10% to 70%, 10% to 80%, 10% to 90%, 10% to 95%, 20% to 30%, 20% to 40%, 20% to 50%, 20% to 60%, 20% to 70%, 20% to 80%, 20% to 90%, 20% to 95%, 30% to 40%, 30% to 50%, 30% to 60%, 30% to 70%, 30% to 80%, 30% to 90%, 30% to 95%, 40% to 50%, 40% to 60%, 40% to 70%, 40% to 80%, 40% to 90%, 40% to 95%, 50% to 60%, 50% to 70%, 50% to 80%, 50% to 90%, 50% to 95%, 60% to 70%, 60% to 80%, 60% to 90%, 60% to 95%, 70% to 80%, 70% to 90%, 70% to 95%, 80% to 90%, 80% to 95%, or 90% to 95% w/w. The concentration of chito-oligosaccharides in the first component may be 5%, 10%, 20%, 30%, 40%, 50%, 60%, 70%, 80%, 90%, or 95% w/w. The concentration of chito-oligosaccharides in the first component may be at least 5%, 10%, 20%, 30%, 40%, 50%, 60%, 70%, 80% or 90% w/w. The concentration of chito-oligosaccharides in the first component may be at most 10%, 20%, 30%, 40%, 50%, 60%, 70%, 80%, 90%, or 95% w/w.

The concentration of chito-oligosaccharides in a sweetener composition comprising two or more components may be 1% to 70% w/w. The concentration of chito-oligosaccharides in a sweetener composition comprising two or more components may be at least 1% w/w. The concentration of chito-oligosaccharides in a sweetener composition comprising two or more components may be at most 70% w/w. The concentration of chito-oligosaccharides in a sweetener composition comprising two or more components may be 1% to 10%, 1% to 15%, 1% to 20%, 1% to 30%, 1% to 40%, 1% to 50%, 1% to 60%, 1% to 70%, 10% to 15%, 10% to 20%, 10% to 30%, 10% to 40%, 10% to 50%, 10% to 60%, 10% to 70%, 15% to 20%, 15% to 30%, 15% to 40%, 15% to 50%, 15% to 60%, 15% to 70%, 20% to 30%, 20% to 40%, 20% to 50%, 20% to 60%, 20% to 70%, 30% to 40%, 30% to 50%, 30% to 60%, 30% to 70%, 40% to 50%, 40% to 60%, 40% to 70%, 50% to 60%, 50% to 70%, or 60% to 70% w/w. The concentration of chito-oligosaccharides in a sweetener composition comprising two or more components may be 1%, 10%, 15%, 20%, 30%, 40%, 50%, 60%, or 70% w/w. The concentration of chito-oligosaccharides in a sweetener composition comprising two or more components may be at least 1%, 10%, 15%, 20%, 30%, 40%, 50% or 60% w/w. The concentration of chito-oligosaccharides in a sweetener composition comprising two or more components may be at most 10%, 15%, 20%, 30%, 40%, 50%, 60%, or 70% w/w.

In some cases, the concentration of chito-oligosaccharides in a composition such as a consumable composition or foodstuff may be about 0.1%, 0.5%, 1%, 5%, 10%, 15%, 20%, 25%, 30%, 35%, 40%, 45%, or 50% w/w. In some cases, the concentration of chito-oligosaccharides in a composition may be at least 0.1%, 0.5%, 1%, 5%, 10%, 15%, 20%, 25%, 30%, 35%, 40%, or 45% w/w. In some cases, the concentration of chito-oligosaccharides in a composition may be at most 5%, 10%, 15%, 20%, 25%, 30%, 35%, 40%, 45%, or 50% w/w.

The composition can comprise oligosaccharides. In some examples, the composition can comprise at least 5%, at least 7%, at least 8%, at least 10%, at least 15%, at least 18%, at least 20%, at least 22%, at least 25%, at least 28%, at least 30%, at least 32%, at least 35%, at least 40%, at least 42%, at least 45%, at least 48%, at least 50%, at least 55%, at least 58%, at least 60%, at least 63%, at least 65%, at least 70% oligosaccharides by dry weight of oligosaccharides.

The first component can comprise cello-oligosaccharides. The cello-oligosaccharides may comprise at least 5%, 10%, 15%, 20%, 25%, 30%, or 35% by dry weight of the first component. The first component can comprise xylo-oligosaccharides. The xylo-oligosaccharides may comprise at least 5%, 10%, 15%, 20%, 25%, 30%, or 35% by dry weight of the first component. The first component can comprise mixed-linkage glucan oligosaccharides. The xylo-oligosaccharides may comprise at least 5%, 10%, 15%, 20%, 25%, 30%, or 35% by dry weight of the first component. The first component can comprise mixed-linkage glucan oligosaccharides. The xylo-oligosaccharides may comprise at least 5%, 10%, 15%, 20%, 25%, 30%, or 35% by dry weight of the first component. The first component can comprise manno-oligosaccharides. The manno-oligosaccharides may comprise at least 5%, 10%, 15%, 20%, 25%, 30%, or 35% by dry weight of the first component.

In some examples, the first component can comprise the cello-oligosaccharides and the xylo-oligosaccharides. In some examples, the first component can comprise the cello-oligosaccharides and the manno-oligosaccharides. The first component may have different variations as described in the disclosure.

### Compositions comprising polysaccharides

In some examples, the first component may further comprise a polysaccharide and/or a polysaccharide derivative. The polysaccharide may be a cellulosic polysaccharide, such as cellulose or a hemicellulosic polysaccharide, such as xylan. In some examples, polysaccharide may be cellulose derivative, such as carboxymethylcellulose. The first component may comprise a polysaccharide aggregate, a lignocellulosic material, or combinations thereof. the ratio in the combination may be from 1:100 to 1:1 polysaccharide/polysaccharide derivative/polysaccharide aggregate: oligosaccharide, for example, from 1:90 to 1:2, from 1:80 to 1:3, from 1:70 to 1:4, or from 1:60 to 1:5. As such, the ratio between the first oligosaccharide, the second oligosaccharide, and the polysaccharide may be from 2:2:1 to 30:30:1, e.g., about 3:3:1.

In some cases, a cellulosic polysaccharide may be included, such as cellulose, or a cellulosic derivative, such as carboxymethylcellulose. An undigested or partially digested lignocellulosic material may be included. Lignocellulosic material may result from an enzymatic reaction. The enzymatic reaction may be an enzymatic reaction performed to produce oligosaccharides from biomass.

In some examples, the composition comprises at most 60%, 50%, 40%, 30%, 20%, 10%, 5%, or lesser amounts of polysaccharides and/or polysaccharide derivatives.

The first component may comprise a combination of polysaccharides and oligosaccharides. The first component may comprise one or more of any type of polysaccharide. For example, the first component may comprise cellulose, xylan, mixed-linkage glucan, mannan, xyloglucan, chitin or chitosan, or derivatives and/or combinations thereof.

Polysaccharides may have different sources. Polysaccharides may be present in the first component as a side-product of a reaction performed to produce the oligosaccharides of the first component. In some examples, the oligosaccharides of the first component may be a product of digesting plant biomass. Plant biomass may be digested completely. In some cases, plant biomass may be digested partially, leaving some undigested plant biomass behind. Undigested plant biomass resulting from such process may comprise polysaccharides. Such polysaccharides may comprise cellulose.

The concentration of undigested biomass in the first component may be from 1% to 50% w/w. For example, the concentration of undigested biomass in the first component may be from 1% to 5%, 1% to 10%, 1% to 15%, 1% to 20%, 1% to 25%, 1% to 30%, 1% to 35%, 1% to 40%, 1% to 45%, 1% to 50%, 5% to 10%, 5% to 15%, 5% to 20%, 5% to 25%, 5% to 30%, 5% to 35%, 5% to 40%, 5% to 45%, 5% to 50%, 10% to 15%, 10% to 20%, 10% to 25%, 10% to 30%, 10% to 35%, 10% to 40%, 10% to 45%, 10% to 50%, 15% to 20%, 15% to 25%, 15% to 30%, 15% to 35%, 15% to 40%, 15% to 45%, 15% to 50%, 20% to 25%, 20% to 30%, 20% to 35%, 20% to 40%, 20% to 45%, 20% to 50%, 25% to 30%, 25% to 35%, 25% to 40%, 25% to 45%, 25% to 50%, 30% to 35%, 30% to 40%, 30% to 45%, 30% to 50%, 35% to 40%, 35% to 45%, 35% to 50%, 40% to 45%, 40% to 50%, or 45% to 50% w/w. In some cases, the concentration of undigested biomass in the first component may be about 1%, 5%, 10%, 15%, 20%, 25%, 30%, 35%, 40%, 45%, or 50% w/w. In some cases, the concentration of undigested biomass in the first component may be at least 1%, 5%, 10%, 15%, 20%, 25%, 30%, 35%, 40%, or 45% w/w. In some cases, the concentration of undigested biomass in the first component may be at most 5%, 10%, 15%, 20%, 25%, 30%, 35%, 40%, 45%, or 50% w/w.

The polysaccharides in the undigested biomass may comprise lignin, polyphenol, cellulose, lignocellulose, or other polysaccharides. In some examples, the composition may comprise a phenolic compound, a lignin, a portion of a lignin, a product of lignin breakdown, ferulic acid, a ferulic acid derivative, and/or combinations thereof.

In other examples, polysaccharides may be separately added to the first component of the composition. The addition of polysaccharides to the first component can be done to improve the gastrointestinal tolerance of the first component. The first component may comprise oligosaccharides, and in some cases, oligosaccharide consumption can cause gastrointestinal distress, including diarrhea, discomfort, and/or bloating. The first component of the composition described herein may have an improved gastrointestinal tolerance such as, less or no discomfort, bloating, diarrhea, and/or gastrointestinal distress as compared to a saccharide composition available commercially or a saccharide composition comprising primarily monosaccharides and/or disaccharides. In some examples, these improved characteristics of the first component may be attributed to the existence of polysaccharides in the first component.

The first component may have polysaccharides of different sources. Part of the polysaccharide content of the first component may be a side product of the reactions performed to produce the oligosaccharides, while part of the polysaccharide content of the first component may be added to the oligosaccharides after they are produced.

In some examples, the first component may comprise polysaccharides and one or more oligosaccharides. The composition may comprise a polysaccharide and one type of oligosaccharide. The composition may comprise a polysaccharide and two types of oligosaccharides. The composition may comprise a polysaccharide and three types of oligosaccharides. The composition may comprise a polysaccharide and four types of oligosaccharides. The composition may comprise a polysaccharide and five types of oligosaccharides. The oligosaccharides may be xylo-oligosaccharides, cello-oligosaccharides, manno-oligosaccharides, xyloglucan-oligosaccharides, chito-oligosaccharides, or any other suitable oligosaccharides, e.g., as described herein.

The first component may comprise from 5% to 50% polysaccharides w/w, such as in the type of undigested biomass, and from 5% to 95% oligosaccharides w/w. The polysaccharide portion of the first component may be at least 5%, 10%, 15%, 20%, 25%, 30%, 35%, 40%, 45%, or 50% w/w of the first component. The polysaccharide portion of the first component may be at most 10%, 15%, 20%, 25%, 30%, 35%, 40%, 45%, or 50% w/w of the first component. In such cases, the oligosaccharide portion of the first component may be at least 5%, 10%, 15%, 20%, 25%, 30%, 35%, 40%, 45%, 50%, 55%, 60%, 65%, 70%, 75%, 80%, 85%, 90%, or 95% w/w of the first component. The oligosaccharides may be a mixture of one or more oligosaccharides. For example, the first component may comprise 5% undigested biomass and 50% oligosaccharide mixture w/w as described elsewhere herein.

The first component may comprise about 5% polysaccharides w/w, such as in the type of undigested biomass, and from 5% to 95% oligosaccharides w/w. In such cases, the oligosaccharide portion of the composition may be at least 5%, 10%, 15%, 20%, 25%, 30%, 35%, 40%, 45%, 50%, 55%, 60%, 65%, 70%, 75%, 80%, 85%, 90% or 95% w/w of the first component. In such cases, the oligosaccharide portion of the composition may be at most 10%, 15%, 20%, 25%, 30%, 35%, 40%, 45%, 50%, 55%, 60%, 65%, 70%, 75%, 80%, 85%, 90%, or 95% w/w of the first component. The oligosaccharides may be a mixture of one or more oligosaccharides as described in the present disclosure. For example, the first component may comprise 5% undigested biomass and 50% oligosaccharide mixture w/w as described elsewhere herein.

The first component may comprise about 7% polysaccharides w/w, such as in the type of undigested biomass and from 5% to 93% oligosaccharides w/w. The oligosaccharide content of the first component may be at least 5%, 10%, 15%, 20%, 25%, 30%, 35%, 40%, 45%, 50%, 55%, 60%, 65%, 70%, 75%, 80%, 85%, 90%, or 93% w/w of the first component in such compositions. The oligosaccharides may be a mixture of one or more oligosaccharides. For example, the first component may comprise 7% undigested biomass and 50% oligosaccharide mixture w/w as described elsewhere herein.

The first component may comprise about 10% polysaccharides w/w, such as in the type of undigested biomass and from 5% to about 90% oligosaccharides w/w of the first component. The oligosaccharide content of the first component may be at least 5%, 10%, 15%, 20%, 25%, 30%, 35%, 40%, 45%, 50%, 55%, 60%, 65%, 70%, 75%, 80%, 85%, or 90% w/w of the first component of such compositions. The oligosaccharides may be a mixture of one or more oligosaccharides. For example, the first component may comprise 10% undigested biomass and 50% oligosaccharide mixture w/w as described elsewhere herein.

The first component may comprise about 12% polysaccharides w/w, such as in the type of undigested biomass and from 5% to about 95% oligosaccharides w/w of the first component. The oligosaccharide content of the first component may be at least 5%, 10%, 15%, 20%, 25%, 30%, 35%, 40%, 45%, 50%, 55%, 60%, 65%, 70%, 75%, 80%, 85%, or 88% w/w of the first component in such compositions. The oligosaccharides may be a mixture of one or more oligosaccharides. For example, the first component may comprise 12% undigested biomass and 50% oligosaccharide mixture w/w as described elsewhere herein.

The first component may comprise about 15% polysaccharides w/w, such as in the type of undigested biomass and from 5% to about 85% oligosaccharides w/w. The oligosaccharide content of the first component may be at least 5%, 10%, 15%, 20%, 25%, 30%, 35%, 40%, 45%, 50%, 55%, 60%, 65%, 70%, 75%, 80%, or 85% w/w of the first component of such mixtures. The oligosaccharides may be a mixture of one or more oligosaccharides. For example, the first component may comprise 15% undigested biomass and 50% oligosaccharide mixture w/w as described elsewhere herein.

The first component may comprise about 20% polysaccharides w/w, such as in the type of undigested biomass and from 5% to about 80% oligosaccharides w/w. The oligosaccharide content of the first component may be at least 5%, 10%, 15%, 20%, 25%, 30%, 35%, 40%, 45%, 50%, 55%, 60%, 65%, 70%, 75%, or 80% w/w of the first component in such compositions. The oligosaccharides may be a mixture of one or more oligosaccharides. For example, the first component may comprise 20% undigested biomass and 50% oligosaccharide mixture w/w as described elsewhere herein.

The first component may comprise about 25% polysaccharides w/w, such as in the type of undigested biomass and from 5% to 75% oligosaccharides w/w. The oligosaccharide content of the first component may be at least 5%, 10%, 15%, 20%, 25%, 30%, 35%, 40%, 45%, 50%, 55%, 60%, 65%, 70%, or 75% w/w of the first component in such compositions. The oligosaccharides may be a mixture of one or more oligosaccharides. For example, the first component may comprise 25% undigested biomass and 50% oligosaccharide mixture w/w as described elsewhere herein.

The first component may comprise about 30% polysaccharides w/w, such as in the type of undigested biomass and from 5% to 70% oligosaccharides w/w. The oligosaccharide content of the first component may be at least 5%, 10%, 15%, 20%, 25%, 30%, 35%, 40%, 45%, 50%, 55%, 60%, 65%, or 70% w/w of the first component in such compositions. The oligosaccharides may be a mixture of one or more oligosaccharides. For example, the first component may comprise 30% undigested biomass and 50% oligosaccharide mixture w/w as described elsewhere herein.

The first component may comprise about 40% polysaccharides w/w, such as in the type of undigested biomass and from 5% to 60% oligosaccharides w/w. The oligosaccharide content of the first component may be at least 5%, 10%, 15%, 20%, 25%, 30%, 35%, 40%, 45%, 50%, 55%, or 60% w/w of the first component in such compositions. The oligosaccharides may be a mixture of one or more oligosaccharides. For instance, a composition may comprise 40% undigested biomass and 50% oligosaccharide mixture w/w as described elsewhere herein.

The first component may comprise about 50% polysaccharides w/w, such as in the type of undigested biomass and from 5% to 50% oligosaccharides w/w. The oligosaccharide content of the first component may be at least 5%, 10%, 15%, 20%, 25%, 30%, 35%, 40%, 45%, or 50% w/w of the first component in such compositions. The oligosaccharides may be a mixture of one or more oligosaccharides. For example, the first component may comprise 50% undigested biomass and 50% oligosaccharide mixture w/w as described elsewhere herein.

The first component may comprise other elements such as metals. The first component may be free of metals. The metals may be Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn. The first component may comprise less than 100, 50, 10, 5 1, 0.5, 0.1, 0.05, 0.01 ppm of metals.

### Compositions comprising saccharides

In some examples, the first component comprises saccharides. For example, the first component may comprise at least 50%, 60%, 70%, 80%, 90%, 95%, 99%, 99.5%, or more amounts by dry weight of saccharides. In some cases, the first component may comprise at most about 99.9%, 99.5%, 99.0%, 98.5%, 98%, 97%, 96%, 95%, 94%, 90%, 80%, 70%, 60%, or less amounts of saccharides on a dry weight basis. In some cases, the first component may consist essentially of saccharides.

### Sugar substitutes and sugars

The composition may further comprise a second component. The second component may comprise one or more sugar substitute(s) and/or one or more sugar(s). Examples of sugar substitutes may comprise acesulfame K, advantame, aspartame, cyclamate, glycurrhizin, monk fruit extract, neohesperidin dihydrochalcone, neotame, saccharin, stevia extract, sucralose, thaumatin, combinations thereof, and other compounds. The second component may be or comprise a high-intensity sweetener. A "high-intensity sweetener," as used herein, generally comprises a sweetener which is more than 100 times sweeter than table sugar (sucrose). The sugar substitute can comprise a natural high-intensity sweetener, an artificial high-intensity sweetener, a plant extract, a protein, a glycoside, a mogroside, a protein, such as a sweet protein, or any combination thereof. In some examples, the sugar substitute can comprise rebaudloside A and/or stevioside.

In some cases, a sweetener composition may comprise an oligosaccharide composition and a sugar substitute or a high-intensity sweetener. In some cases, the oligosaccharide mixture in a sweetener composition comprising a high-intensity sweetener may improve the heat tolerance of the high-intensity sweetener. In some cases, a composition comprising a high-intensity sweetener and an oligosaccharide mixture may have a comparable heat tolerance to a composition without the oligosaccharide mixture. The heat tolerance of a composition comprising an oligosaccharide mixture and a high-intensity sweetener may be better than a composition without the oligosaccharide mixture.

In some examples, the second component may comprise sugars. In some examples, the second component may comprise one or more sugars. In some examples the second component may comprise one or more sugar substitutes. In some examples, the second component may comprise one or more sugar substitutes and one or more sugars. The second component may comprise agave nectar, Barbados sugar, barley malt, barley malt syrup, beet sugar, brown sugar, buttered syrup, cane juice, cane juice crystals, cane sugar, table sugar, sucrose, caramel, carob syrup, castor sugar, coconut palm sugar, coconut sugar, confectioner's sugar, corn sweetener, corn syrup, corn syrup solid, date sugar, dehydrated cane juice, demerara sugar, dextin, dextrose, evaporated cane juice, free-flowing brown sugars, fructose, fruit juice, fruit juice concentrate, glucose, glucose solids, golden sugar, golden syrup, grape sugar, high-fructose corn syrup (HFCS), honey, icing sugar, invert sugar, malt syrup, maltodextrin, maltol, mannose, maple syrup, molasses, muscovado, palm sugar, panocha, powdered sugar, raw sugar, refiner's syrup, rice syrup, saccharose, sorghum syrup, granulated sugar, sweet sorghum, syrup, treacle, turbinado sugar, yellow sugar, and/or other sugars and/or sweeteners.

Weight ratios of the second component to the consumable composition such as a foodstuff (total weight of composition) can vary. Examples of the weight/weight ratio of the second component to the total consumable composition on a dry basis can comprise from 1:300 to 1:25, form 1:250 to 1:50, from 1:200 to 1:100. For example, the weight/weight ratio of the second component to the total consumable composition on a dry basis can be about 1:25, about 1:30, about 1:40, about 1:50, about 1:60, about 1:70, about 1:80, about 1:90, about 1:100, about 1:110, about 1:120, about 1:130, about 1:140, about 1:150, about 1:160, about 1:170, about 1:180, about 1:200, about 1:210, about 1:220, about 1:230, about 1:240, about 1:250, about 1:300, or other suitable ratios.

In some cases, a ratio of high-intensity sweetener to the oligosaccharide mixture in a sweetener composition may be anywhere from 1:20,000 to 1:10,000. In some cases, a ratio of high-intensity sweetener to the oligosaccharide mixture in a sweetener composition may be anywhere from 1:20,000 to 1:1000. In some cases, a ratio of high-intensity sweetener to the oligosaccharide mixture in a sweetener composition may be anywhere from 1:20,000 to 1:8000. In some cases, a ratio of high-intensity sweetener to the oligosaccharide mixture in a sweetener composition may be anywhere from 1:20,000 to 1:5000. In some cases, a ratio of high-intensity sweetener to the oligosaccharide mixture in a sweetener composition may be anywhere from 1:20,000 to 1:2000. In some cases, a ratio of high-intensity sweetener to the oligosaccharide mixture in a sweetener composition may be anywhere from 1:20,000 to 1:1000 In some cases, a ratio of high-intensity sweetener to the oligosaccharide mixture in a sweetener composition may be anywhere from 1:20,000 to 1:500. In some cases, a ratio of high-intensity sweetener to the oligosaccharide mixture in a sweetener composition may be anywhere from 1:20,000 to 1:100. In some cases, a ratio of high-intensity sweetener to the oligosaccharide mixture in a sweetener composition may be anywhere from 1:20,000 to 1:50.

In some cases, a ratio of high-intensity sweetener to the oligosaccharide mixture in a sweetener composition may be anywhere from 1:1000 to 1:20. In some cases, a ratio of high-intensity sweetener to the oligosaccharide mixture in a sweetener composition may be anywhere from 1:500 to 1:20. In some cases, a ratio of high-intensity sweetener to the oligosaccharide mixture in a sweetener composition may be anywhere from 1:100 to 1:20. In some cases, a ratio of high-intensity sweetener to the oligosaccharide mixture in a sweetener composition may be anywhere from 1:90 to 1:20. In some cases, a ratio of high-intensity sweetener to the oligosaccharide mixture in a sweetener composition may be anywhere from 1:70 to 1:20. In some cases, a ratio of high-intensity sweetener to the oligosaccharide mixture in a sweetener composition may be anywhere from 1:50 to 1:20. In some cases, a ratio of high-intensity sweetener to the oligosaccharide mixture in a sweetener composition may be anywhere from 1:30 to 1:20.

In some cases, a ratio of high-intensity sweetener to the oligosaccharide mixture in a sweetener composition may be anywhere from 1:1000 to 1:10. In some cases, a ratio of high-intensity sweetener to the oligosaccharide mixture in a sweetener composition may be anywhere from 1:500 to 1:10. In some cases, a ratio of high-intensity sweetener to the oligosaccharide mixture in a sweetener composition may be anywhere from 1:100 to 1:10. In some cases, a ratio of high-intensity sweetener to the oligosaccharide mixture in a sweetener composition may be anywhere from 1:50 to 1:10. In some cases, a ratio of high-intensity sweetener to the oligosaccharide mixture in a sweetener composition may be anywhere from 1:30 to 1:10. In some cases, a ratio of high-intensity sweetener to the oligosaccharide mixture in a sweetener composition may be anywhere from 1:20 to 1:10.

In some cases, a ratio of high-intensity sweetener to the oligosaccharide mixture in a sweetener composition may be anywhere from 1:1000 to 1:50. In some cases, a ratio of high-intensity sweetener to the oligosaccharide mixture in a sweetener composition may be anywhere from 1:500 to 1:50. In some cases, a ratio of high-intensity sweetener to the oligosaccharide mixture in a sweetener composition may be anywhere from 1:100 to 1:50.

In some cases, a sweetener composition may comprise from 0.01% to 15% w/w of a high-intensity sweetener. In some cases, a sweetener composition may comprise at least 0.01% w/w of a high-intensity sweetener. In some cases, a sweetener composition may comprise at most 15% w/w of a high-intensity sweetener. In some cases, a sweetener composition may comprise 0.01% to 0.05%, 0.01% to 0.1%, 0.01% to 0.5%, 0.01% to 1%, 0.01% to 2%, 0.01% to 5%, 0.01% to 7%, 0.01% to 10%, 0.01% to 15%, 0.05% to 0.1%, 0.05% to 0.5%, 0.05% to 1%, 0.05% to 2%, 0.05% to 5%, 0.05% to 7%, 0.05% to 10%, 0.05% to 15%, 0.1% to 0.5%, 0.1% to 1%, 0.1% to 2%, 0.1% to 5%, 0.1% to 7%, 0.1% to 10%, 0.1% to 15%, 0.5% to 1%, 0.5% to 2%, 0.5% to 5%, 0.5% to 7%, 0.5% to 10%, 0.5% to 15%, 1% to 2%, 1% to 5%, 1% to 7%, 1% to 10%, 1% to 15%, 2% to 5%, 2% to 7%, 2% to 10%, 2% to 15%, 5% to 7%, 5% to 10%, 5% to 15%, 7% to 10%, 7% to 15%, or 10% to 15% w/w of a high-intensity sweetener. In some cases, a sweetener composition may comprise 0.01%, 0.05%, 0.1%, 0.5%, 1%, 2%, 5%, 7%, 10%, or 15% w/w of a high-intensity sweetener. In some cases, a sweetener composition may comprise at least 0.01%, 0.05%, 0.1%, 0.5%, 1%, 2%, 5%, 7% or 10% w/w of a high-intensity sweetener. In some cases, a sweetener composition may comprise at most 0.05%, 0.1%, 0.5%, 1%, 2%, 5%, 7%, 10%, or 15% w/w of a high-intensity sweetener.

Weight ratios of the second component to the composition (total weight of composition) can vary. Examples of the weight/weight ratio of the second component to the total composition on a dry basis can comprise from 0.3% to 4%, 0.4% to 2%, or from 0.5% to 1%. For example, the weight/weight percentage of the second component to the total composition on a dry basis can be about 0.4%, about 3.3%, about 2.5%, about 2%, about 1.7%, about 1.4%, about 1.2%, about 1.1%, about 1%, about 0.9%, about 0.8%, about 0.7%, about 0.7%, about 0.7%, about 0.62%, about 0.58%, about 0.55%, about 0.5%, about 0.48%, about 0.45%, about 0.43%, about 0.42%, about 0.40%, or about 0.33%. In some cases, the second component may be a high-intensity sweetener or a sugar substitute.

### The composition

The composition can comprise an oligosaccharide mixture and one or more sugar substitute(s) and/or one or more sugars. The composition can comprise a first and a second component. The first component can comprise or be an oligosaccharide mixture, such as an oligosaccharide mixture described anywhere herein. An oligosaccharide mixture can comprise one or more oligosaccharides as described herein. The second component can comprise or be one or more sugar substitutes and/or one or more sugars as described anywhere herein. In some cases, the composition can further comprise saccharides, polysaccharides, maltodextrin, sugars, impurities, or other components as described anywhere herein.

The composition can comprise oligosaccharides. The composition can comprise a first component. The first component can comprise or be an oligosaccharide mixture. In some examples, the composition can comprise at least 5%, at least 7%, at least 8%, at least 10%, at least 15%, at least 18%, at least 20%, at least 22%, at least 25%, at least 28%, at least 30%, at least 32%, at least 35%, at least 40%, at least 42%, at least 45%, at least 48%, at least 50%, at least 55%, at least 58%, at least 60%, at least 63%, at least 65%, or at least 70% oligosaccharides by dry weight of oligosaccharides.

Oligosaccharides may comprise one or more oligosaccharides. The one or more oligosaccharides may comprise at least 5%, at least 7%, at least 8%, at least 10%, at least 15%, at least 18%, at least 20%, at least 22%, at least 25%, at least 28%, at least 30%, at least 32%, at least 35%, at least 40%, at least 42%, at least 45%, at least 48%, at least 50%, at least 55%, at least 58%, at least 60%, at least 63%, at least 65%, at least 70% of the weight of the total composition on a dry basis.

In some examples, oligosaccharides can comprise at least two types of oligosaccharides. The at least two types of oligosaccharides may comprise at least 5%, at least 7%, at least 8%, at least 10%, at least 15%, at least 18%, at least 20%, at least 22%, at least 25%, at least 28%, at least 30%, at least 32%, at least 35%, at least 40%, at least 42%, at least 45%, at least 48%, at least 50%, at least 55%, at least 58%, at least 60%, at least 63%, at least 65%, at least 70% of the weight of the total composition on a dry basis.

In some examples, the one or more oligosaccharides may form at most 99.9%, at most 99.8%, at most 99.7%, at most 99.6%, at most 99.5%, at most 99.4%, at most 99.3%, at most 99.2%, at most 99.1%, at most 99.0%, at most 98.9%, at most 98.8%, at most 98.7%, at most 98.6%, at most 98.5%, at most 98.84%, at most 98.3%, at most 98.2%, at most 98.1%, at most 98.0%, at most 98%, at most 97.9%, at most 97.8%, at most 97.7%, at most 97.6%, at most 97.5%, at most 97.4%, at most 97.3%, at most 97.2%, at most 97.1%, at most 97%, at most 96%, at most 95%, at most 94%, at most 93%, at most 92%, at most 91%, at most 90%, at most 85%, at most 80%, at most 75%, at most 70% of the weight of the total composition on a dry basis.

The oligosaccharide mixture (e.g., the first component) can comprise cello-oligosaccharides. The cello-oligosaccharides may comprise at least 5%, 10%, 15%, 20%, 25%, 30%, or 35% by dry weight of the first component. The first component can comprise xylo-oligosaccharides. The xylo-oligosaccharides may comprise at least 5%, 10%, 15%, 20%, 25%, 30%, or 35% by dry weight of the first component. The first component can comprise mixed-linkage glucan oligosaccharides. The xylo-oligosaccharides may comprise at least 5%, 10%, 15%, 20%, 25%, 30%, or 35% by dry weight of the first component. The first component can comprise mixed-linkage glucan oligosaccharides. The xylo-oligosaccharides may comprise at least 5%, 10%, 15%, 20%, 25%, 30%, or 35% by dry weight of the first component. The first component can comprise manno)-oligosaccharides. The manno-oligosaccharides may comprise at least 5%, 10%, 15%, 20%, 25%, 30%, or 35% by dry weight of the first component.

In some examples, the oligosaccharide mixture (e.g., the first component) can comprise the cello-oligosaccharides and the xylo-oligosaccharides. In some examples, the first component can comprise the cello-oligosaccharides and the manno-oligosaccharides. The first component may have different iterations or combinations of oligosaccharides as described in the present disclosure.

The composition can comprise an oligosaccharide mixture and a sugar substitute and/or sugar. For example, the composition can be a mixture of cello-oligosaccharides and xylo-oligosaccharides in addition to one or more sugar(s) and/or one or more sugar substitute(s). For example, the composition can comprise the cello-oligosaccharides, xylo-oligosaccharides, and sugar substitutes described anywhere herein, and/or at the ratios and/or percentages described anywhere herein. In other examples, the composition may comprise cello-oligosaccharides, xylo-oligosaccharides, and manno-oligosaccharides, in addition to a sugar and/or a sugar substitute, as described anywhere herein.

In an example, the sweetener composition may comprise from 0.01% to 10% of a sugar substitute, such as stevia extract. In this example, the composition may comprise from 90% to about 99.5% oligosaccharide mixture, such as a mixture of cello-oligosaccharides and xylo-oligosaccharides. The cello-oligosaccharides may be a mixture of cello-oligosaccharides with different degrees of polymerization as described herein. Xylo-oligosaccharides may be a mixture of xylo-oligosaccharides with different degrees of polymerization as described herein. The ratio of cello-oligosaccharides to xylo-oligosaccharides may be according to the descriptions provided anywhere herein.

### Compositions comprising monosaccharides and disaccharides

The foodstuff can comprise a monosaccharide and/or a disaccharide (e.g., a baking sugar, table sugar, fructose, allulose, tagatose, dextrose, high-fructose corn syrup, maltose, lactose, sucrose, gentiobiose, sophorose, laminaribiose, allose, glucose, mannose, galactose, idose, altrose, gulose, talose, xylose, lyxose, ribose, or arabinose, or any other suitable monosaccharide/disaccharide sugar/sweetener). The monosaccharide and/or the disaccharide sugar/sweetener can comprise glucose, fructose, galactose, sucrose, maltose, lactose, another suitable monosaccharide or disaccharide, or a combination thereof. In certain embodiments, the first component may be free, or substantially free, of a monosaccharide and/or disaccharide sugar/sweetener, and the second component may be free, or substantially free, of an oligosaccharide.

The sweetener composition can further comprise monosaccharides. Monosaccharides can comprise glucose, fructose, galactose, other monosaccharides, and/or any combination thereof. Varying levels of different monosaccharides may be present in the sweetener composition. In some cases, the amounts of monosaccharides in the sweetener composition may be minimized. In some cases, the sweetener composition may be substantially free of monosaccharides. Substantially free, as described herein means that the composition may have less than 5%, 3%, 2%, 1%, or 0.5% w/w monosaccharides.

In some examples, the sweetener composition can comprise at most 40%, 35%, 30%, 25% 20%, 15%, 10%, 9%, 8%, 7%, 6%, 5%, 4%, 3%, 2%, 1%, 0.8%, 0.7%, 0.6%, 0.5%, 0.4%, or less amount of monosaccharide by weight of the sweetener composition on a dry basis. In some examples, the sweetener composition comprises less than 5% of monosaccharide by weight of the sweetener composition on a dry basis. In some examples, the sweetener composition comprises less than 10% of monosaccharide by weight of the sweetener composition on a dry basis. In some examples, the sweetener composition comprises less than 20% of monosaccharide by weight of the sweetener composition on a dry basis. In some examples, the sweetener composition comprises less than 40% of monosaccharide by weight of the sweetener composition on a dry basis. In some examples, the sweetener composition can be substantially free of monosaccharides. In some examples, zero to minimal amounts of monosaccharides may be present in the sweetener composition. Alternatively, in some examples, average amounts of monosaccharides or in some examples, high levels of monosaccharides may be present in the sweetener composition.

The sweetener composition can further comprise disaccharides. Disaccharides can comprise sucrose, lactose, maltose, other disaccharides, and/or any combinations thereof. Varying levels of different disaccharides may be present in the sweetener composition. In some cases, the amounts of disaccharides in the sweetener composition may be minimized. In some cases, the sweetener composition may be substantially free of disaccharides.

In some examples, the sweetener composition can comprise at most 70%, 60%, 55%, 50%, 45%, 40%, 35%, 30%, 25%, 20%, 15%, 10%, 9%, 8%, 7%, 6%, 5%, or less amounts of disaccharides by weight of the sweetener composition on a dry basis. In some examples, the sweetener composition comprises less than 5% of disaccharide by weight of the sweetener composition on a dry basis. In some examples, the sweetener composition comprises less than 10% of disaccharide by weight of the sweetener composition on a dry basis. In some examples, the sweetener composition comprises less than 20% of disaccharide by weight of the sweetener composition on a dry basis. In some examples, the sweetener composition comprises less than 40% of disaccharide by weight of the sweetener composition on a dry basis. In some examples, the sweetener composition can be substantially free of disaccharides. In some examples, zero to minimal amounts of disaccharides may be present in the sweetener composition. Alternatively, in some examples, average amounts of disaccharides or in some examples, high levels of disaccharides may be present in the sweetener composition.

### Compositions with bulking sugars

In some cases, the compositions described herein may comprise bulking sweeteners or bulking sugars. In some cases, the compositions described herein may comprise bulking sweeteners in addition to the oligosaccharide mixture. In some cases, the compositions described herein may comprise bulking sweeteners in addition to an oligosaccharide mixture and a high-intensity sweetener. Examples of bulking sweeteners include but are not limited to maltodextrin, inulin, sugar alcohols and rare sugars.

A sweetener composition may comprise a first component comprising oligosaccharides, and a second component which comprises of one or more bulking sugars. For instance, the first component may be a mixture of xylo-oligosaccharides and cello-oligosaccharides or other oligosaccharides as provided herein, whereas the second component can be maltodextrin, inulin, sugar alcohols or rare sugars. The ratio of a second component comprising a bulking sugar to a first component in the mixture may be about 1:1. The ratio of a second component comprising a bulking sugar to a first component in the mixture may be about 1:2. The ratio of a second component comprising a bulking sugar to a first component in the mixture may be about 1:3. The ratio of a second component comprising a bulking sugar to a first component in the mixture may be about 1:4. The ratio of a second component comprising a bulking sugar to a first component in the mixture may be about 1:5. The ratio of a second component comprising a bulking sugar to a first component in the mixture may be about 1:6. The ratio of a second component comprising a bulking sugar to a first component in the mixture may be about 1:7. The ratio of a second component comprising a bulking sugar to a first component in the mixture may be about 1:8. The ratio of a second component comprising a bulking sugar to a first component in the mixture may be about 1:9. The ratio of a second component comprising a bulking sugar to a first component in the mixture may be about 1:10. The ratio of a second component comprising a bulking sugar to a first component in the mixture may be about 1:12. The ratio of a second component comprising a bulking sugar to a first component in the mixture may be about 1:15. The ratio of a second component comprising a bulking sugar to a first component in the mixture may be about 1:17. The ratio of a second component comprising a bulking sugar to a first component in the mixture may be about 1:19. The ratio of a second component comprising a bulking sugar to a first component in the mixture may be about 1:20.

In some examples, the composition can further comprise maltodextrin. In some examples, the composition can comprise at most 50%, 45%, 40%, 35%, 30%, 25% 20%, 15%, 10%, 9%, 8%, 7%, 6%, 5%, 4%, 3%, 2%, 1%, 0.8%, 0.7%, 0.6%, 0.5%, 0.4%, or less amounts of maltodextrin by weight of the composition on a dry basis. In some examples, the composition can be substantially free of maltodextrin. In some examples, zero to minimal amounts of maltodextrin may be present in the composition. Alternatively, in some examples, average amounts of maltodextrin, or in some examples, high levels of maltodextrin may be present in the composition.

In some examples, the composition can further comprise inulin. In some examples, the composition can comprise at most 50%, 45%, 40%, 35%, 30%, 25% 20%, 15%, 10%, 9%, 8%, 7%, 6%, 5%, 4%, 3%, 2%, 1%, 0.8%, 0.7%, 0.6%, 0.5%, 0.4%, or less amounts of inulin by weight of the composition on a dry basis. In some examples, the composition can further comprise inulin. In some examples, the composition can comprise at least 45%, 40%, 35%, 30%, 25% 20%, 15%, 10%, 9%, 8%, 7%, 6%, 5%, 4%, 3%, 2%, 1%, 0.8%, 0.7%, 0.6%, 0.5%, 0.4%, or less amounts of inulin by weight of the composition on a dry basis. In some examples, the composition can be substantially free of inulin. In some examples, zero to minimal amounts of inulin may be present in the composition. Alternatively, in some examples, average amounts of inulin, or in some examples, high levels of inulin may be present in the composition.

In some examples, the composition can further comprise sugar alcohols (such as sorbitol, glucitol, xylitol, mannitol, maltitol, lactitol, erythritol, or other sugar alcohols). In some examples, the composition can comprise at most 50%, 45%, 40%, 35%, 30%, 25% 20%, 15%, 10%, 9%, 8%, 7%, 6%, 5%, 4%, 3%, 2%, 1%, 0.8%, 0.7%, 0.6%, 0.5%, 0.4%, or less amounts of sugar alcohols by weight of the composition on a dry basis. In some examples, the composition can comprise at least 45%, 40%, 35%, 30%, 25% 20%, 15%, 10%, 9%, 8%, 7%, 6%, 5%, 4%, 3%, 2%, 1%, 0.8%, 0.7%, 0.6%, 0.5%, 0.4%, or less amounts of sugar alcohols by weight of the composition on a dry basis. In some examples, the composition can be substantially free of sugar alcohols. In some examples, zero to minimal amounts of sugar alcohols may be present in the composition. Alternatively, in some examples, average amounts of sugar alcohols, or in some examples, high levels of sugar alcohols may be present in the composition.

In some examples, the composition can further comprise rare sugars (such as allulose, tagatose, psicose, or other rare sugars). In some examples, the composition can comprise at most 50%, 45%, 40%, 35%, 30%, 25% 20%, 15%, 10%, 9%, 8%, 7%, 6%, 5%, 4%, 3%, 2%, 1%, 0.8%, 0.7%, 0.6%, 0.5%, 0.4%, or less amounts of rare sugars by weight of the composition on a dry basis. In some examples, the composition can comprise at least 45%, 40%, 35%, 30%, 25% 20%, 15%, 10%, 9%, 8%, 7%, 6%, 5%, 4%, 3%, 2%, 1%, 0.8%, 0.7%, 0.6%, 0.5%, 0.4%, or less amounts of rare sugars by weight of the composition on a dry basis. In some examples, the composition can be substantially free of rare sugars. In some examples, zero to minimal amounts of rare sugars may be present in the composition. Alternatively, in some examples, average amounts of rare sugars, or in some examples, high levels of rare sugars may be present in the composition.

### Composition properties

The composition may comprise an oligosaccharide mixture (e.g., the first component) and a sugar and/or sugar substitute (e.g., the second component). The average sweetness level of the first component, the second component and the composition can be measured using different approaches and/or protocols. For example, an average level of sweetness can be characterized as sweetness perception by a human subject. An average level of sweetness can be measured as sweetness perception by a panel of human subjects. The average bitterness can be characterized as a bitterness perception by a human subject. The average bitterness can be measured as a bitterness perception by a panel of human subjects. Sweetness and bitterness can depend on several factors, such as, for example, the concentration of the sweetener, temperature, pH, type of medium, and other factors.

Sweetness may be characterized as relative sweetness versus table sugar or sucrose (sucrose=1). Relative sweetness may depend on several factors, such as, for example, the concentration of the sweetener, temperature, pH, type of medium, the concentration of the sucrose solution used as a comparison, and other factors.

In some examples, an average sweetness level per unit weight of the second component can be greater than an average sweetness level per unit weight of the first component. For example, an average sweetness level per unit weight of the second component can be at least 1.1 times, at least 1.2 times, at least 1.3 times, at least 1.4 times, at least 1.5 times, at least 2 times, at least 5 times, at least 10 times, at least 20 times, at least 50 times, at least 70 times, at least 90 times, at least 100 times, at least 150 times, at least 200 times, at least 210 times, at least 220 times, at least 230 times, at least 250 times, at least 300 times, at least 310 times, at least 320 times, at least 350 times, at least 400 times greater than an average sweetness level per unit weight of the first component, or more.

The relative sweetness level of the sugar substitute versus sucrose can be from 20:1 to 20000:1. The relative sweetness level of the sugar substitute versus sucrose can be from 30:1 to 600:1. For example, the relative sweetness level of the sugar substitute versus sucrose can be about 20:1, 30:1, 40:1, 50:1, 60:1, 70:1, 80:1, 90:1, 100:1, 110:1, 120:1, 130:1, 140:1, 150:1, 160:1, 170:1, 180:1, 190:1, 200:1, 210:1, 220:1, 230:1, 240:1, 250:1, 260:1, 270:1, 280:1, 290:1, 300:1, 350:1, 400:1, 450:1, 500:1, 550:1, 600:1, 650:1, 700:1, 800:1, 900:1, 1000:1, 1500:1, 2000:1, 2500:1, 3000:1, 4000:1, 20000:1, or more. The second component may be capable of providing a richer, fuller, and/or more intense sweetness taste in the composition.

The oligosaccharide mixture (e.g., the first component) may comprise a minimal, low, and/or negligible level of bitter taste, undertone, and/or aftertaste. In some examples, the first component may comprise substantially no bitterness. In certain embodiments, the first component may not comprise a significant bitter taste, undertone, and/or aftertaste. The first component may be capable of masking a bitter taste of the second component and/or the composition it is used in.

In some cases, the second component may comprise a bitter taste, undertone, and/or aftertaste. The bitter taste, undertone, and/or aftertaste may be unfavorable. In other examples, the sugar substitute may not comprise a bitterness taste or aftertaste. In some examples, the sugar substitute may comprise a low level of bitterness taste or aftertaste. In some examples, the sugar substitute may comprise a medium or high level of bitterness taste and/or aftertaste. A bitter taste, undertone, and/or aftertaste may be unfavorable.

The oligosaccharide mixture (e.g., the first component) may be capable of decreasing and/or masking an average bitterness level of the second component and/or the composition and/or the foodstuff in which the composition is used. The average bitterness can be characterized as a bitterness perception by a human subject. The average bitterness can be characterized as a bitterness perception by a panel of human subjects.

The composition may be rich in sweetness, low in bitterness or substantially free of bitterness, and capable of providing a desired texture in finished products such as, for example, baked goods.

In some cases, the compositions described herein may be used as sweetener compositions. Sweetener compositions may be used by themselves or as an ingredient in a finished product. The compositions described herein may provide about the same level of sweetness or greater sweetness than an identical amount, a substantially identical amount, or comparable amount of a control composition wherein the control composition comprises primarily monosaccharides and/or disaccharides. The compositions described herein may be used to replace the control composition as the sweetener in a finished product. In some cases, the average sweetness per unit weight of a composition may be at least 5%, 10%, 15%, 20%, 30%, 40%, 50%, 70%, 80%, 90%, or 100% more than an identical amount, a substantially identical amount, or comparable amount of the control composition.

The compositions described herein may provide a comparable flavor profile or more desirable flavor profile compared to an identical amount, a substantially identical amount, or comparable amount of a control composition comprising primarily monosaccharides and/or disaccharides. The compositions described herein may be used to replace the control composition as a flavor enhancer in a finished product. Flavor may be a flavor perception by a human subject. Flavor may be characterized by surveying a panel of human subjects.

The compositions described herein may comprise a first component (e.g., oligosaccharide mixture) and a second component (e.g., a sugar substitute or sugar). In some cases, the second component may be sweeter in taste compared to the first component. A finished product comprising a given amount of a composition comprising both the first component and the second component may be sweeter than a composition comprising an identical amount, a substantially identical amount, or comparable amount of the first component only. A finished product comprising a given amount of a composition comprising both the first component and the second component may be reported by a panel of subjects to be sweeter, be more favorable, have a better texture, and/or have less bitterness compared to a finished product comprising a composition comprising an identical amount, a substantially identical amount, or comparable amount of the first component only.

The compositions described herein can comprise a first component and a second component. The compositions may provide a comparable flavor profile or better flavor profile than an identical amount, a substantially identical amount, or comparable amount of a control composition consisting essentially of the first component only (the control composition does not include the second component). The compositions described herein may be used to replace the control composition as a flavor enhancer in a finished product. For example, flavors of such compositions may be reported by a panel of subjects to be more favorable than compositions comprising an identical amount, a substantially identical amount, or comparable amount of the first component only. A composition comprising both the first and the second component may be reported by a panel of subjects to be perceived as sweeter, more favorable, and having a better texture compared to a composition comprising the first component only or the second component only.

The first component may by itself provide a comparable flavor profile or better flavor profile than an identical amount, a substantially identical amount, or comparable amount of a control composition comprising primarily monosaccharides and/or disaccharides. The first component of the compositions described herein may by themselves or in combination with the second component be used to replace the control composition as a flavor enhancer in a finished product. Flavor profiles may be characterized across a panel of human subjects.

The compositions described herein may provide a comparable texture profile or better texture profile than an identical amount, a substantially identical amount, or comparable amount of a control composition wherein the control composition comprises primarily monosaccharides and/or disaccharides. The compositions described herein may be used to replace the control composition as a texture enhancer in a finished product. Texture may be characterized by factors such as weight, moisture content, porosity, density, and other factors. Texture may also be surveyed across a panel of human subjects.

The compositions described herein comprise a first component and a second component. The first component may be capable of providing a better texture profile in a finished product (such as a foodstuff, e.g., a baked good, cake, etc.) compared to a finished product including the second component only. For example, a finished product may be reported by a panel of human subjects to have a more favorable texture compared to a finished product comprising the second component (e.g., a sugar substitute) only. As an example, a baked good comprising both the first component (e.g., an oligosaccharide mixture described herein) and the second component (e.g., a sugar substitute) may provide a better mouthfeel, be moister, be crispier, or otherwise be more favorable to a panel of human subjects compared to a finished product comprising the second component only.

In some examples, the first component of the compositions described herein may by itself provide a comparable texture profile or better texture profile than an identical amount, a substantially identical amount, or comparable amount of a control composition wherein the control composition comprises primarily monosaccharides and/or disaccharides. The first component of the compositions described herein may be used to replace the control composition as a texture enhancer in a finished product.

In other examples, the compositions described herein (comprising the first component and the second component) may provide a comparable texture profile or better texture profile than an identical amount, a substantially identical amount, or comparable amount of a control composition comprising primarily the second component (not comprising the first component). The compositions described herein may be used to replace the control composition (comprising the second component but not the first component) as a texture enhancer in a finished product.

The compositions described herein may provide a comparable binding profile or better binding profile than an identical amount, a substantially identical amount, or comparable amount of a control composition wherein the control composition comprises primarily monosaccharides and/or disaccharides. The compositions described herein may be used to replace the control composition as a binding enhancer in a finished product.

The compositions described herein may provide a comparable glazing profile or better glazing profile than an identical amount, a substantially identical amount, or comparable amount of a control composition wherein the control composition comprises primarily monosaccharides and/or disaccharides. The compositions described herein may be used to replace the control composition as a glazing enhancer in a finished product.

The compositions described herein may provide a comparable moistness or better moistness than an identical amount, a substantially identical amount, or comparable amount of a control composition wherein the control composition comprises primarily monosaccharides and/or disaccharides. The compositions described herein may be used to replace the control composition to provide moistness in a finished product.

The compositions described herein may provide a comparable color profile or better color profile than an identical amount, a substantially identical amount, or comparable amount of a control composition wherein the control composition comprises primarily monosaccharides and/or disaccharides. The compositions described herein may be used to replace the control composition as a color enhancer in a finished product. For example, the compositions provided herein may be capable of caramelization, and thereby confer a desirable golden brown and/or brown color to an example baked product (e.g., a cake) compared to a composition comprising the second component only.

The compositions described herein may provide a comparable dissolution profile or better dissolution profile than an identical amount, a substantially identical amount, or comparable amount of a control composition wherein the control composition comprises primarily monosaccharides and/or disaccharides. The compositions described herein may be used to replace the control composition as a dissolution enhancer in a finished product. In some cases, the dissolution of a composition may be 5%, 10%, 15%, 20%, 30%, 40%, 50%, 70%, 80%, 90%, or 100% more than an identical amount, a substantially identical amount, or comparable amount of the control composition.

The compositions described herein may provide a comparable mouthfeel or better mouthfeel than an identical amount, a substantially identical amount, or comparable amount of a control composition wherein the control composition comprises primarily monosaccharides and/or disaccharides. Mouthfeel may be surveyed across a panel of human subjects.

The compositions described herein may provide a comparable viscosity or better viscosity than an identical amount, a substantially identical amount, or comparable amount of a control composition wherein the control composition comprises primarily monosaccharides and/or disaccharides.

The compositions described herein may provide a comparable hygroscopicity or better hygroscopicity than an identical amount, a substantially identical amount, or comparable amount of a control composition wherein the control composition comprises primarily monosaccharides and/or disaccharides. In some cases, the hygroscopicity of a composition may be 5%, 10%, 15%, 20%, 30%, 40%, 50%, 70%, 80%, 90%, or 100% more than an identical amount, a substantially identical amount, or comparable amount of the control composition.

The compositions described herein may provide a comparable water-retention or better water-retention than an identical amount, a substantially identical amount, or comparable amount of a control composition wherein the control composition comprises primarily monosaccharides and/or disaccharides. In some cases, the water-retention of a composition may be 5%, 10%, 15%, 20%, 30%, 40%, 50%, 70%, 80%, 90%, or 100% more than an identical amount, a substantially identical amount, or comparable amount of the control composition.

The compositions described herein may provide a lower calorie composition than an identical amount, a substantially identical amount, or comparable amount of a control composition wherein the control composition comprises primarily monosaccharides and/or disaccharides. In some cases, the calorie count of a composition may be 5%, 10%, 15%, 20%, 30%, 40%, 50%, 70%, 80%, 90%, or 100% less than an identical amount, a substantially identical amount, or comparable amount of the control composition.

The compositions described herein may provide a lower glycemic index than an identical amount, a substantially identical amount, or comparable amount of a control composition wherein the control composition comprises primarily monosaccharides and/or disaccharides. In some cases, the glycemic index of a composition may be 5%, 10%, 15%, 20%, 30%, 40%, 50%, 70%, 80%, 90%, or 100% less than an identical amount, a substantially identical amount, or comparable amount of the control composition.

The compositions described herein may provide a comparable bulking or better bulking than an identical amount, a substantially identical amount, or comparable amount of a control composition wherein the control composition comprises primarily monosaccharides and/or disaccharides.

In some examples, the compositions described herein may provide a comparable bulking or better bulking than an identical amount, a substantially identical amount, or comparable amount of a control composition comprising primarily the second component but not the first component. The first component may be capable of enhancing the bulking capabilities of the composition and/or a foodstuff the composition may be used in.

The compositions described herein may provide a comparable caramelization or better caramelization than an identical amount, a substantially identical amount, or comparable amount of a control composition wherein the control composition comprises primarily monosaccharides and/or disaccharides.

In some examples, the compositions described herein may provide a comparable bulking or better bulking than an identical amount, a substantially identical amount, or comparable amount of a control composition comprising primarily the second component but not the first component. The first component may be capable of enhancing the caramelization capabilities of the composition and/or a foodstuff the composition may be used in.

The compositions described herein may provide a comparable surface texture or better surface texture than an identical amount, a substantially identical amount, or comparable amount of a control composition wherein the control composition comprises primarily monosaccharides and/or disaccharides.

In some examples, the compositions described herein may provide a comparable surface texture or better surface texture than an identical amount, a substantially identical amount, or comparable amount of a control composition comprising primarily the second component but not the first component. The first component may be capable of enhancing the surface texture of the composition and/or a foodstuff the composition may be used in.

The compositions described herein may provide a comparable crystallization or better crystallization than an identical amount, a substantially identical amount, or comparable amount of a control composition wherein the control composition comprises primarily monosaccharides and/or disaccharides.

The compositions described herein may provide comparable structural properties as an identical amount, a substantially identical amount, or comparable amount of a control composition wherein the control composition comprises primarily monosaccharides and/or disaccharides.

The compositions described herein may provide less aftertaste compared to an identical amount, a substantially identical amount, or comparable amount of a control composition wherein the control composition comprises primarily monosaccharides and/or disaccharides.

The compositions described herein may provide less aftertaste compared to an identical amount, a substantially identical amount, or comparable amount of a control composition comprising primarily the first component but not the second component. The second component may be capable of decreasing the aftertaste of the composition.

The compositions described herein may provide less bitterness compared to an identical amount, a substantially identical amount, or comparable amount of a control composition comprising the second component but not the first component. The first component may be capable of decreasing the bitterness of the composition or a foodstuff the composition may be used in.

Different combinations of oligosaccharides may confer improved dissolution profiles, hygroscopicity profiles, and taste profiles to the first component compared to each of the oligosaccharide used alone.

### Finished products

The composition may be used to prepare finished products. The composition may also be treated in some physical or chemical way before or during incorporation into a foodstuff, cosmetic, or nutraceutical. It may be directly incorporated into a product, or it may be incorporated into, for example, a dough, cake mixture, chocolate mixture, or other foodstuff precursor; a cosmetic base composition; or a nutraceutical, and be optionally cooked or otherwise treated in a way which may cause chemical modification, a change of texture a change of color, or other modification. The food composition may be a fat-based composition. The food composition may be a water-based composition.

In some examples, the foodstuff can be, but is not limited to, a cake, cookie brownie, cookie, pie, cobbler, pastry, bun, scone, bread, roll, Danish, donut, torte, muffin, cupcake, milkshake, ice cream, frozen yogurt, custard, gelato, waffle, pancake, jam, or a combination thereof. In some examples, the foodstuff can be an edible product.

A foodstuff, cosmetic, or nutraceutical may be produced from a composition described herein. For example, in the food industry the saccharide formulations produced by the current compositions may be used as sweeteners, bulking agents, added dietary fiber, or humectants. The composition may be used as a sugar substitute. The composition may be incorporated into cakes, bread, or other baked good, or into chocolate or other confectionery such as toffee, fudge, meringue, jam, jelly or caramel; or drinks, for example, to provide favorable taste or color characteristics or to increase dietary fiber content. In some examples, the composition may be incorporated into animal feed.

The disclosure provides a foodstuff, a cosmetic, or a nutraceutical comprising the composition. The foodstuff can comprise an oligosaccharide mixture (e.g., the first component). The first component can comprise one or more types of oligosaccharides selected from cello-oligosaccharides with a degree of polymerization of from two to six, xylo-oligosaccharides with a degree of polymerization of from two to twelve, mixed-linkage glucan oligosaccharides with a degree of polymerization of from two to five, manno-oligosaccharides having a degree of polymerization of from two to twelve, and xyloglucan oligosaccharides having a degree of polymerization of from four to twelve. The foodstuff may further comprise a sugar and/or sugar substitute (e.g., the second component). The second component can comprise a sugar substitute and/or a sugar and/or both.

The finished product, for example, a foodstuff, such as a baked good may comprise at least 0.5%, 1%, 1.5%, 2%, 3%, 4%, 5%, 6%, 7%, 8%, 9%, 10%, 11%, 12%, 13%, 14%, 15%, 16%, 17%, 18%, 19%, 20%, 25%, 30%, 35%, 40%, 45%, 50%, or more of the sweetener composition on a dry weight basis. In some examples, the finished product, for example, a foodstuff, such as a baked good may comprise at most 0.5%, 1%, 1.5%, 2%, 3%, 4%, 5%, 6%, 7%, 8%, 9%, 10%, 11%, 12%, 13%, 14%, 15%, 16%, 17%, 18%, 19%, 20%, 25%, 30%, 35%, 40%, 45%, or 50% of the sweetener composition. For example, the finished product can comprise about 1% of the sweetener composition, about 5% of the sweetener composition, about 10% of the sweetener composition, about 15% of the sweetener composition, or other amounts of the sweetener composition on a dry weight basis.

For example, the foodstuff may comprise about 10% sweetener composition on a dry weight basis. The sweetener composition may comprise about 0.5% (or about 1:200) sugar substitute and/or sugar (the second component). In this example, the foodstuff may comprise about 0.05% sugar substitute and/or sugar (the second component). In the same example, the sweetener composition may comprise about 0.95% oligosaccharide mixture (e.g., the first component). Accordingly, in this example, the foodstuff may comprise about 0.095% or about 0.1% oligosaccharide mixture (e.g., the first component) on a dry weight basis.

In another example, the foodstuff may comprise about 10% sweetener composition. The sweetener composition may comprise about 2% (or about 1:50) sugar substitute and/or sugar (the second component). In this example, the foodstuff may comprise about 0.2% sugar substitute and/or sugar (the second component). In the same example, the sweetener composition may comprise about 98% oligosaccharide mixture (e.g., the first component). Accordingly, the foodstuff may comprise about 9.8% oligosaccharide mixture on a dry weight basis.

For example, the foodstuff may comprise about 10% sweetener composition on a dry weight basis. The sweetener composition may comprise at least 0.3%, 0.35%, 0.4%, 0.45%, 0.5%, 0.55%, 0.6%, 0.65%, 0.7%, 0.75%, 0.8%, 0.85%, 0.90%, 0.95%, 1%, 1.2%, 1.5%, or 2% sugar substitute and/or sugar (e.g., the second component). The foodstuff may comprise at least 0.03%, 0.035%, 0.04%, 0.045%, 0.05%, 0.055%, 0.06%, 0.07%, 0.075%, 0.08%, 0.085%, 0.095%, 0.1%, 0.12%, 0.15%, 0.2%, or more sugar substitute and/or sugar (e.g., the second component). The amounts of the oligosaccharide mixture (e.g., first component) and the amounts of the sugar and/or sugar substitute (e.g., the second component) may be calculated accordingly.

In some examples, the amount of the sugar substitute and/or sugar (e.g., the second component) can be at a ratio of at least 1:200,000, at least 1:100,000, at least 1:50,000, at least 1:25,000, at least 1:20,000, at least 1:10,000, at least 1:5000, or more to the total weight of the foodstuff on a dry weight basis. In some examples, the amount of the sugar substitute and/or sugar (e.g., the second component) can be at a ratio of at most 1:200,000, 1:100,000, 1:50,000, 1:25,000, 1:20,000, 1:10,000, 1:5000, or more to the total weight of the foodstuff on a dry weight basis.

A ratio of the sugar substitute and/or sugar (the second component) to the oligosaccharide mixture (e.g., the first component) can be at least 1:60,000, at least 1:50,000, at least 1:40,000, at least 1:30,000, at least 1:20,000, at least 1:15,000, at least 1:10,000, at least 1:5,000, at least 1:2000, or more. A ratio of the sugar substitute and/or sugar (the second component) to the oligosaccharide mixture (e.g., the first component) can be at most 1:60,000, at most 1:50,000, at most 1:40,000, at most 1:30,000, at most 1:20,000, at most 1:15,000, at most 1:10,000, at most 1:5,000, at most 1:2000, or less.

The foodstuff may comprise other amounts of the sweetener composition. The sweetener composition may comprise other amounts of sugar and/or sugar substitute. The foodstuff may comprise other amounts of the oligosaccharide mixture.

### Properties of the composition and the finished product

In some examples, the foodstuff can comprise a taste of bitterness. In some cases, the bitter taste of the foodstuff may be minimized. In some examples, the degree or level of bitterness of the foodstuff taste can be minimal. In some cases, the taste of the foodstuff can be substantially free of bitterness.

In the cosmetics industry, saccharides can be useful as ingredients, as they may improve texture and moisture retention, act as UV-absorbing molecules, maintain a gel or cream structure, and/or serve as bulking agents. The compositions described herein can be incorporated into nutraceutical compositions, as the dietary fiber they provide may encourage digestive health, well-regulated gut flora, and/or other benefits to wellbeing. In this context, they may also be used in a probiotic drink or other prebiotic or probiotic formulation.

Compositions described herein may be used to alter one or more properties of the finished product. Such properties include, but are not limited to, sweetness, texture, mouthfeel, binding, glazing, smoothness, moistness, viscosity, color, hygroscopicity, flavor, bulking, water-retention, caramelization, surface texture, crystallization, structural properties and dissolution.

In some cases, the compositions described herein may provide a property to a finished product which is comparable to or better than the same property as provided by a saccharide mixture comprising primarily monosaccharides and/or disaccharides. The control composition may be a saccharide used commonly in consumables, for instance, a monosaccharide composition such as glucose, fructose, etc, a disaccharide composition such as sucrose or an artificial sugar composition. The term "comparable" as used herein may mean that the two compositions may be up to 100%, up to 95%, up to 90%, or up to 80% identical. For instance, comparable can mean that the composition is up to 90% identical to the control composition.

In some examples, the compositions described herein may be used to increase the fiber content of a finished product such as a foodstuff or a nutraceutical. The compositions may provide a higher level of fiber in the finished product as compared to an identical amount, a substantially identical amount, or comparable amount of a control composition wherein the control composition comprises primarily monosaccharides and/or disaccharides. In some cases, the compositions may improve the fiber content of the finished product without negatively affecting any other properties such as taste, sweetness, mouthfeel, texture, binding, or any other properties described herein. In some cases, the fiber content of a composition may be 5%, 10%, 15%, 20%, 30%, 40%, 50%, 70%, 80%, 90%, or 100% more than an identical amount, a substantially identical amount, or comparable amount of the control composition.

Compositions may be used to alter the properties of a finished product such as a foodstuff, nutraceutical, or cosmetic. In order to alter the properties of the finished products, the finished products may additionally comprise a polysaccharide, for example, a cellulosic polysaccharide, such as cellulose, or a polysaccharide derivative, for example, a cellulose derivative, such as carboxymethylcellulose, or a polysaccharide aggregate, for example, a portion of lignocellulosic biomass. The finished products can comprise from greater than 0% to 40% by dry weight of polysaccharide, polysaccharide derivative, or polysaccharide aggregate, from greater than 1% to 30% by dry weight of polysaccharide, polysaccharide derivative, or polysaccharide aggregate, from greater than 5% to 25% by dry weight of polysaccharide, polysaccharide derivative, or polysaccharide aggregate, or from greater than 10% to 20% by dry weight of polysaccharide, polysaccharide derivative, or polysaccharide aggregate.

The concentration of a composition comprising polysaccharides and a mixture of oligosaccharides in a finished product may be from 0.1% to 40% w/w. The concentration of a composition comprising polysaccharides and a mixture of oligosaccharides in a finished product may be from 0.1% to 0.5%, 0.1% to 1%, 0.1% to 5%, 0.1% to 10%, 0.1% to 15%, 0.1% to 20%, 0.1% to 25%, 0.1% to 30%, 0.1% to 35%, 0.1% to 40%, 0.5% to 1%, 0.5% to 5%, 0.5% to 10%, 0.5% to 15%, 0.5% to 20%, 0.5% to 25%, 0.5% to 30%, 0.5% to 35%, 0.5% to 40%, 1% to 5%, 1% to 10%, 1% to 15%, 1% to 20%, 1% to 25%, 1% to 30%, 1% to 35%, 1% to 40%, 5% to 10%, 5% to 15%, 5% to 20%, 5% to 25%, 5% to 30%, 5% to 35%, 5% to 40%, 10% to 15%, 10% to 20%, 10% to 25%, 10% to 30%, 10% to 35%, 10% to 40%, 15% to 20%, 15% to 25%, 15% to 30%, 15% to 35%, 15% to 40%, 20% to 25%, 20% to 30%, 20% to 35%, 20% to 40%, 25% to 30%, 25% to 35%, 25% to 40%, 30% to 35%, 30% to 40%, or 35% to 40% w/w. The concentration of a composition comprising polysaccharides and a mixture of oligosaccharides in a finished product may be 0.1%, 0.5%, 1%, 5%, 10%, 15%, 20%, 25%, 30%, 35%, or 40% w/w. The concentration of a composition comprising polysaccharides and a mixture of oligosaccharides in a finished product may be at least 0.1%, 0.5%, 1%, 5%, 10%, 15%, 20%, 25%, 30%, or 35% w/w. The concentration of a composition comprising polysaccharides and a mixture of oligosaccharides in a finished product may be at most 0.5%, 1%, 5%, 10%, 15%, 20%, 25%, 30%, 35%, or 40% w/w.

Particularly preferred embodiments of the invention are compiled as clauses hereinafter:
Clause 1: A sweetener composition comprising: an oligosaccharide component comprising xylo-oligosaccharides with a degree of polymerization (DP) from two to twelve and cello-oligosaccharides with a DP from two to six, wherein the xylo-oligosaccharides and cello-oligosaccharides are present at a w/w ratio from 19:1 to 1:1; and a high-intensity sweetener, wherein the oligosaccharide component and the high-intensity sweetener are present at a w/w ratio from 5000:1 to 50:1.
Clause 2: The composition of clause 1, wherein the high-intensity sweetener comprises a natural high-intensity sweetener, an artificial high-intensity sweetener, or a combination thereof.
Clause 3: The composition of clause 1 or clause 2, wherein the high-intensity sweetener comprises acesulfame potassium (Ace-K), advantame, aspartame, neotame, saccharin, a *Siraitia grosvenorii* Swingle (Luo Han Guo) fruit extract (SGFE), a steviol glycoside, sucralose, a clyclamate, a sugar alcohol (polyol), glycyrrhizin, neohesperidin dihydrochalcone, thaumatin, or any combination thereof.
Clause 4: The composition of any one of clauses 1 to 2, wherein the cello-oligosaccharides and xylo-oligosaccharides are present at a w/w ratio of 1:10 to 7:10 in the sweetener composition.
Clause 5: The composition of any one of clauses 1 to 2, wherein the cello-oligosaccharides and xylo-oligosaccharides are present at a w/w ratio of 1:5 to 7:10 in the sweetener composition.
Clause 6: The composition of any one of clauses 1 to 4, wherein a ratio of the first component to the second component is from 500:1 to 50:1 by dry weight.
Clause 7: The composition of any one of clauses 1 to 5, wherein an average sweetness level per unit weight of the second component is greater than an average sweetness level of the first component.
Clause 8: The composition of any one of clauses 1 to 6, wherein an average sweetness level per unit weight of the second component is at least 1.5 times, 2 times, 5 times, 10 times, 20 times, 50 times, 70 times, 90 times, 100 times, 150 times, or 200 times greater than an average sweetness level of the first component.
Clause 9: The composition of clause 1, wherein a relative sweetness level of the high-intensity sweetener versus sucrose is from 20:1 to 20,000:1.
Clause 10: The composition of clause 8, wherein the relative sweetness level of the high-intensity sweetener versus sucrose is from 30:1 to 600:1.
Clause 11: The composition of any one of clauses 6 to 9, wherein the average sweetness is a sweetness perception by a human subject.
Clause 12: The composition of any one of clauses 1 to 2, wherein a weight ratio of the second component to the composition is from 1:20,000 to 1:20.
Clause 13: The composition of any one of the clauses 1 to 2, wherein a weight ratio of the second component to the composition is from 1:2,000 to 1:50.
Clause 14: The composition of clause 12, wherein the weight ratio of the second component to composition is from 1:1000 to 1:100.
Clause 15: The composition of any one of clauses 1 to 13, wherein the first component decreases an average bitterness level per unit weight of the composition as compared to a control composition, wherein the control composition is a composition made using the high-intensity sweetener as the first and second component.
Clause 16: The composition of any one of clauses 1 to 14, wherein the first component decreases an average bitter aftertaste per unit weight of the composition as compared to a control composition, wherein the control composition is a composition made using the high-intensity sweetener as the first and second component.
Clause 17: The composition of clause 14, wherein the average bitterness is bitterness perception by a human subject.
Clause 18: The composition of clause 15, wherein the average bitter aftertaste is bitter aftertaste perception by a human subject.
Clause 19: The composition of any one of clauses 1 to 17, wherein the composition comprises less than 70%, 60%, 55%, 50%, 45%, 40%, 35%, 30%, 25%, 20%, 10%, 5%, or 1% by dry weight monosaccharides.
Clause 20: The composition of any one of clauses 1 to 18, wherein the composition is substantially free of monosaccharides.
Clause 21: The composition of clause 18 or clause 19, wherein the monosaccharides comprise glucose, fructose, galactose, or any combination thereof.
Clause 22: The composition of any one of clauses 1 to 20, wherein the composition comprises less than 70%, 60%, 55%, 50%, 45%, 40%, 30%, 25%, 20%, 10%, 5%, or 1% by dry weight sucrose, lactose, maltose, or any combination thereof.
Clause 23: The composition of any one of clauses 1 to 21, wherein the composition is substantially free of sucrose, lactose, maltose, or any combination thereof.
Clause 24: The composition of any one of clauses 1 to 22, wherein the amount of sucrose, lactose, maltose, or any combination thereof is less than the amount of cello-oligosaccharides.
Clause 25: The composition of any one of clauses 1 to 23, wherein the amount of sucrose, lactose, maltose, or any combination thereof is less than the amount of cellobiose.
Clause 26: The composition of any one of clauses 1 to 24, wherein the amount of sucrose, lactose, maltose, or any combination thereof is less than the amount of xylo-oligosaccharides.
Clause 27: The composition of any one of clauses 1 to 25, wherein the amount of sucrose, lactose, maltose, or any combination thereof is less than the amount of xylobiose.
Clause 28: The composition of any one of clauses 1 to 26, wherein the composition comprises less than 30%, 25%, 20%, 10%, 5%, or 1% by dry weight maltodextrin.
Clause 29: The composition of any one of clauses 1 to 27, wherein the composition is substantially free of maltodextrin.
Clause 30: The composition of any one of the clauses 1 to 28, wherein the xylo-oligosaccharides comprise xylo-oligosaccharides with one or more side branches, xylo-oligosaccharides with one or more glucuronosyl side branches, xylo-oligosaccharides with one or more methylglucurosyl side branches, xylo-oligosaccharides with one or more arabinosyl side branches, or any combination thereof.
Clause 31: The composition of any one of the clauses 1 to 29, wherein the xylo-oligosaccharides comprise at least 40%, at least 50%, at least 60%, at least 70%, at least 80%, or at least 90% xylobiose.
Clause 32: The composition of any one of the clauses 1 to 30, wherein the xylo-oligosaccharides comprise xylose and arabinose monomers collectively at a ratio of from 20:1 to 2:1, 18:1 to 4:1, or 16:1 to 6:1.
Clause 33: The composition of any one of the clauses 1 to 31, wherein the cello-oligosaccharides comprise at least 40%, at least 50%, at least 60%, at least 70%, at least 80%, or at least 90% cellobiose.
Clause 34: The composition of any one of clauses 1 to 32, further comprising a compound selected from a polysaccharide, a cellulosic polysaccharide, cellulose, a hemicellulosic polysaccharide, xylan, a polysaccharide derivative, a cellulose derivative, carboxymethylcellulose, a polysaccharide aggregate, a lignocellulosic material, or any combination thereof.
Clause 35: The composition of clause 33, wherein the composition comprises at most 30% polysaccharides by dry weight.
Clause 36: The composition of any one of the clauses 1 to 34, further comprising a compound selected from a phenolic compound, a lignin, a portion of a lignin, a product of lignin breakdown, ferulic acid, a ferulic acid derivative, or any combination thereof.
Clause 37: The composition of any one of clauses 1 to 35, wherein the first component comprises less than 100, 50, 10, 5 1, 0.5, 0.1, 0.05 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn.
Clause 38: The composition of any one of clauses 1 to 36, wherein the first component comprises more than 0.01 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn.
Clause 39: A foodstuff comprising from 1% to 50% by dry weight of a sweetener composition comprising an oligosaccharide component comprising xylo-oligosaccharides with a degree of polymerization (DP) from two to twelve and cello-oligosaccharides with a DP from two to six, and a high-intensity sweetener, wherein the oligosaccharide component and the high-intensity sweetener are present at a w/w ratio from 5000:1 to 50:1.
Clause 40: A sweetener composition comprising: a first component comprising xylo-oligosaccharides with a degree of polymerization (DP) of from two to twelve and cellulose-based saccharides, wherein the xylo-oligosaccharides and the cellulose-based saccharides are present at a w/w ratio from 19:1 to 1:1 respectively; and a high-intensity sweetener present from 0.02% to 2% by dry weight of the first component.
Clause 41: The sweetener composition of clause 40, where in the cellulose-based saccharides comprise cello-oligosaccharides with a DP from two to six, cellulose polysaccharides, or a combination thereof.
Clause 42: A sweetener composition consisting essentially of: an oligosaccharide component consisting essentially of xylo-oligosaccharides with a degree of polymerization (DP) from two to twelve and cello-oligosaccharides with a DP from two to six, wherein the oligosaccharide component is at least 70% by dry weight of the sweetener composition; and a high-intensity sweetener, wherein the high-intensity sweetener is from 0.02% to 2% by dry weight of the sweetener composition.
Clause 43: A sweetener composition consisting of: xylo-oligosaccharides with a degree of polymerization (DP) of from two to twelve; cellulose-based saccharides; and a high-intensity sweetener.
Clause 44: A sweetener composition comprising: an oligosaccharide component comprising xylo-oligosaccharides with a degree of polymerization (DP) from two to twelve and cello-oligosaccharides with a DP from two to six, wherein the xylo-oligosaccharides and cello-oligosaccharides are present at a w/w ratio from 19:1 to 1:1; and a bulking sweetener, wherein the oligosaccharide component and the bulking sweetener are present at a w/w ratio from 1:1 to 19:1.
Clause 45: The composition of clause 44, wherein the bulking sweetener comprises a sugar alcohol, allulose, tagatose, maltodextrin, resistant maltodextrin, erythritol, or any combination thereof.
Clause 46: The composition of any one of clauses 44 to 45, wherein the cello-oligosaccharides and xylo-oligosaccharides are present at a w/w ratio of 1:19 to 1:1 in the composition.
Clause 47: The composition of any one of clauses 44 to 46, wherein the cello-oligosaccharides and xylo-oligosaccharides are present at a w/w ratio of 1:19 to 1:1 in the first component.
Clause 48: The composition of any one of clauses 44 to 47, wherein a ratio of the first component to the second component is from 5:2 to 5:1 by dry weight.
Clause 49: The composition of any one of clauses 44 to 48, wherein an average sweetness level per unit weight of the second component is greater than an average sweetness level of the first component.
Clause 50: The composition of any one of clauses 44 to 49, wherein an average sweetness level per unit weight of the second component is at least 1.5 times, 2 times, 5 times, 10 times, 20 times, 50 times, 70 times, 90 times, 100 times, 150 times, 200 times, 500 times or 1000 times greater than an average sweetness level of the first component.
Clause 51: The composition of clause 49 or clause 50, wherein the average sweetness is a sweetness perception by a human subject.
Clause 52: The composition of any one of clauses 44 to 51, wherein a weight ratio of the second component to the composition is from 1: 20,000 to 1:20.
Clause 53: The composition of any one of the clauses 44 to 51, wherein a weight ratio of the second component to the composition is from 1:2000 to 1:50.
Clause 54: The composition of clause 12, wherein the weight ratio of the second component to composition is from 1:1000 to 1:100.
Clause 55: The composition of any one of clauses 44 to 54, wherein the first component decreases an average bitterness level per unit weight of the composition as compared to a control composition, wherein the control composition is a composition made using the bulking sweetener as the first and second component.
Clause 56: The composition of any one of clauses 44 to 55, wherein the first component decreases an average bitter aftertaste per unit weight of the composition as compared to a control composition, wherein the control composition is a composition made using the bulking sweetener as the first and second component.
Clause 57: The composition of clause 56, wherein the average bitterness is bitterness perception by a human subject.
Clause 58: The composition of clause 57, wherein the average bitter aftertaste is bitter aftertaste perception by a human subject.
Clause 59: The composition of any one of clauses 44 to 58, wherein the composition comprises less than 70%, 60%, 55%, 50%, 45%, 40%, 35%, 30%, 25%, 20%, 10%, 5%, or 1% by dry weight monosaccharides.
Clause 60: The composition of any one of clauses 44 to 59, wherein the composition is substantially free of monosaccharides.
Clause 61: The composition of clause 59 or clause 60, wherein the monosaccharides comprise glucose, fructose, galactose, or any combination thereof.
Clause 62: The composition of any one of clauses 44 to 61, wherein the composition comprises less than 70%, 60%, 55%, 50%, 45%, 40%, 30%, 25%, 20%, 10%, 5%, or 1% by dry weight sucrose, lactose, maltose, or any combination thereof.
Clause 63: The composition of any one of clauses 44 to 62, wherein the composition is substantially free of sucrose, lactose, maltose, or any combination thereof.
Clause 64: The composition of any one of clauses 44 to 62, wherein the amount of sucrose, lactose, maltose, or any combination thereof is less than the amount of cello-oligosaccharides.
Clause 65: The composition of any one of clauses 44 to 64, wherein the amount of sucrose, lactose, maltose, or any combination thereof is less than the amount of cellobiose.
Clause 66: The composition of any one of clauses 44 to 65, wherein the amount of sucrose, lactose, maltose, or any combination thereof is less than the amount of xylo-oligosaccharides.
Clause 67: The composition of any one of clauses 44 to 66, wherein the amount of sucrose, lactose, maltose, or any combination thereof is less than the amount of xylobiose.
Clause 68: The composition of any one of clauses 44 to 67, wherein the composition comprises less than 30%, 25%, 20%, 10%, 5%, or 1% by dry weight maltodextrin.
Clause 69: The composition of any one of clauses 44 to 68, wherein the composition is substantially free of maltodextrin.
Clause 70: The composition of any one of the clauses 44 to 69, wherein the xylo-oligosaccharides comprise xylo-oligosaccharides with one or more side branches, xylo-oligosaccharides with one or more glucuronosyl side branches, xylo-oligosaccharides with one or more methylglucurosyl side branches, xylo-oligosaccharides with one or more arabinosyl side branches, or any combination thereof.
Clause 71: The composition of any one of the clauses 44 to 70, wherein the xylo-oligosaccharides comprise at least 40%, at least 50%, at least 60%, at least 70%, at least 80%, or at least 90% xylobiose.
Clause 72: The composition of any one of the clauses 44 to 71, wherein the xylo-oligosaccharides comprise xylose and arabinose monomers collectively at a ratio of from 20:1 to 2:1, 18:1 to 4:1, or 16:1 to 6:1.
Clause 73: The composition of any one of the clauses 44 to 72, wherein the cello-oligosaccharides comprise at least 40%, at least 50%, at least 60%, at least 70%, at least 80%, or at least 90% cellobiose.
Clause 74: The composition of any one of clauses 44 to 73, further comprising a compound selected from a polysaccharide, a cellulosic polysaccharide, cellulose, a hemicellulosic polysaccharide, xylan, a polysaccharide derivative, a cellulose derivative, carboxymethylcellulose, a polysaccharide aggregate, a lignocellulosic material, or any combination thereof.
Clause 75: The composition of clause 74, wherein the composition comprises at most 30% polysaccharides by dry weight.
Clause 76: The composition of any one of the clauses 44 to 75, further comprising a compound selected from a phenolic compound, a lignin, a portion of a lignin, a product of lignin breakdown, ferulic acid, a ferulic acid derivative, or any combination thereof.
Clause 77: The composition of any one of clauses 44 to 76, wherein the first component comprises less than 100, 50, 10, 5 1, 0.5, 0.1, 0.05 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn.
Clause 78: The composition of any one of clauses 44 to 77, wherein the first component comprises more than 0.01 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn.
Clause 79: A foodstuff comprising from 1% to 50% by dry weight of a sweetener composition comprising an oligosaccharide component comprising xylo-oligosaccharides with a degree of polymerization (DP) from two to twelve and cello-oligosaccharides with a DP from two to six, and a bulking sweetener, wherein the oligosaccharide component and the bulking sweetener are present at a w/w ratio from 1:1 to 19:1.
Clause 80: A sweetener composition comprising: a first component comprising xylo-oligosaccharides with a degree of polymerization (DP) of from two to twelve and cellulose-based saccharides, wherein the xylo-oligosaccharides and the cellulose-based saccharides are present at a w/w ratio from 19:1 to 1:1 respectively;
and a second component comprising a bulking sweetener present from 10% to 100% by dry weight of the first component.
Clause 81: The sweetener composition of clause 40, where in the cellulose-based saccharides comprise cello-oligosaccharides with a DP from two to six, cellulose polysaccharides, or a combination thereof.
Clause 82: A sweetener composition consisting essentially of: an oligosaccharide component consisting essentially of xylo-oligosaccharides with a degree of polymerization (DP) from two to twelve and cello-oligosaccharides with a DP from two to six, wherein the oligosaccharide component is at least 50% by dry weight of the sweetener composition; and a bulking sweetener, wherein the bulking sweetener is from 5% to 50% by dry weight of the sweetener composition.
Clause 83: A sweetener composition consisting of: xylo-oligosaccharides with a degree of polymerization (DP) of from two to twelve; cellulose-based saccharides; and a bulking sweetener.
Clause 84: A sweetener composition comprising: an oligosaccharide component comprising xylo-oligosaccharides with a degree of polymerization (DP) from two to twelve and cello-oligosaccharides with a DP from two to six, wherein the oligosaccharide component at least 50% by dry weight of the sweetener composition; and a bulking sweetener, wherein the bulking sweetener is from 5% to 50 % by dry weight of the sweetener composition.
Clause 85: A sweetener composition comprising: a first component comprising xylo-oligosaccharides with a degree of polymerization (DP) from two to twelve and cellulose-based saccharides, wherein the sweetener composition comprises at least 50% by dry weight of the first component; and a bulking sweetener, wherein the sweetener composition comprises from 5% to 50% by dry weight of the bulking sweetener.
Clause 86: A sweetener composition comprising: a first component comprising: xylo-oligosaccharides with a degree of polymerization (DP) from two to twelve; and cellulose-based saccharides comprising cello-oligosaccharides with a DP from two to six, cellulose polysaccharides, or a combination thereof, wherein the xylo-oligosaccharides and the cellulose-based saccharides are present at a wt/wt ratio from 19:1 to 1:1; and a second component comprising one of (i) a high-intensity sweetener, wherein the high-intensity sweetener is present at from 0.02% to 2% by dry weight of the first component or (ii) a bulking sweetener, wherein the bulking sweetener is present at from 10% to 100% wt/wt of the first component.
Clause 87: The sweetener composition of clause 86, wherein the first component comprises greater than 1% wt/wt cellobiose.
Clause 88: The sweetener composition of clause 86, wherein the first component comprises less than 50% wt/wt cellobiose.
Clause 89: The sweetener composition of clause 86, wherein the first component comprises less than 35% wt/wt cellulose.
Clause 90: The sweetener composition of clause 86, wherein the first component and the second component constitute from 10% to 75% wt/wt of the sweetener composition.
Clause 91: The sweetener composition of clause 86, comprising less than 1% wt/wt of the bulking sweetener, wherein the bulking sweetener comprises a sugar alcohol, allulose, tagatose, maltodextrin, resistant maltodextrin, erythritol, or any combination thereof.
Clause 92: The sweetener composition of clause 86, comprising less than 20% wt/wt glucose, fructose, and galactose.
Clause 93: The sweetener composition of clause 86, comprising less than 20% wt/wt monosaccharides.
Clause 94: The sweetener composition of clause 86, comprising less than 20% wt/wt sucrose, maltose, and lactose.
Clause 95: The sweetener composition of clause 86, wherein the second component comprises at least one bulking sweetener from 50% to 100% wt/wt of the first component.
Clause 96: The sweetener composition of clause 95, wherein the bulking sweetener comprises a sugar alcohol, a rare sugar, an other saccharide, or any combination thereof.
Clause 97: The sweetener composition of clause 96, wherein the sugar alcohol comprises sorbitol, xylitol, mannitol, maltitol, lactitol, erythritol, or any combination thereof.
Clause 98: The sweetener composition of clause 96, wherein the rare sugar comprises allulose, tagatose, psicose, or any combination thereof.
Clause 99: The sweetener composition of clause 96, wherein the other saccharide comprises inulin/fructo-oligosaccharides.
Clause 100: The sweetener composition of clause 86, wherein the second component comprises at least two bulking sweeteners from 50% to 100% wt/wt of the first component.
Clause 101: The sweetener composition of clause 100, wherein the bulking sweetener comprises a sugar alcohol, a rare sugar, an other saccharide, or any combination thereof.
Clause 102: The sweetener composition of clause 100, wherein the sugar alcohol comprises sorbitol, xylitol, mannitol, maltitol, lactitol, erythritol, or any combination thereof.
Clause 103: The sweetener composition of clause 100, wherein the rare sugar comprises allulose, tagatose, psicose, or any combination thereof.
Clause 104: The sweetener composition of clause 100, wherein the other saccharide comprises inulin/fructo-oligosaccharides.
Clause 105: The sweetener composition of clause 86, wherein the second component comprises at least one high-intensity sweetener from 0.02% to 2% wt/wt of the first component.
Clause 106: The sweetener composition of clause 86, wherein the second component comprises at least two high-intensity sweeteners at 0.001-10% wt/wt of the first component.
Clause 107: The sweetener composition of clause 105 or clause 106, wherein the high-intensity sweetener comprises saccharin, sucralose, a steviol glycoside, a mogroside, aspartame, or any combination thereof.
Clause 108: The sweetener composition of clause 86, wherein the xylo-oligosaccharides are thermochemically modified.
Clause 109: The sweetener composition of clause 108, wherein the xylo-oligosaccharides are thermochemically modified by caramelization or a Maillard reaction.
Clause 110: The sweetener composition of clause 86, wherein the cello-oligosaccharides are thermochemically modified.
Clause 111: The sweetener composition of clause 110, wherein the cello-oligosaccharides are thermochemically modified by caramelization or a Maillard reaction.
Clause 112: A composition comprising: a first component comprising at least two types of oligosaccharides selected from: a) cello-oligosaccharides with a degree of polymerization of from two to six; b) xylo-oligosaccharides with a degree of polymerization of from two to twelve; c) manno-oligosaccharides with a degree of polymerization of from two to twelve; and d) mixed-linkage glucan oligosaccharides with a degree of polymerization of from two to five; e) xyloglucan oligosaccharides with a degree of polymerization of from four to twelve; and a second component comprising a sugar substitute.
Clause 113: The composition of clause 112, wherein an average sweetness level per unit weight of the second component is greater than an average sweetness level of the first component.
Clause 114: The composition of clause 112 or clause 113, wherein an average sweetness level per unit weight of the second component is at least 1.5 times, 2 times, 5 times, 10 times, 20 times, 50 times, 70 times, 90 times, 100 times, 150 times, or 200 times greater than an average sweetness level of the first component.
Clause 115: The composition of clause 112, wherein a relative sweetness level of the sugar substitute versus sucrose is from 20:1 to 20,000:1.
Clause 116: The composition of clause 112, wherein a relative sweetness level of the sugar substitute versus sucrose is from 30:1 to 600:1.
Clause 117: The composition of any one of clauses 113 to 116, wherein the average sweetness is a sweetness perception by a human subject.
Clause 118: The composition of any one of clauses 112 to 117, wherein a weight ratio of the second component to the composition is from 1:300 to 1:25.
Clause 119: The composition of any one of the clauses 112 to 117, wherein a weight ratio of the second component to composition is from 1:250 to 1:50.
Clause 120: The composition of any one of the clauses 112 to 117, wherein a weight ratio of the second component to composition is from 1:200 to 1:100.
Clause 121: The composition of any one of clauses 112 to 120, wherein the first component decreases an average bitterness level per unit weight of the composition as compared to a control composition comprising only the second component.
Clause 122: The composition of any one of clauses 112 to 120, wherein the first component decreases an average bitter aftertaste per unit weight of the composition as compared to a control composition comprising only the second component.
Clause 123: The composition of clause 121 or clause 122, wherein the average bitterness is a bitterness perception by a human subject and wherein the average bitter aftertaste is a bitter aftertaste perception by a human subject.
Clause 124: The composition of any one of clauses 112 to 123, wherein the sugar substitute comprises a natural high-intensity sweetener, an artificial high-intensity sweetener, a plant extract, a protein, a glycoside, a mogroside, or any combination thereof.
Clause 125: The composition of any one of clauses 112 to 123, wherein the sugar substitute comprises a sweetener selected from the group consisting of acesulfame K, advantame, aspartame, cyclamate, glycyrrhizin, monk fruit extract, neohesperidin dihydrochalcone, neotame, saccharin, stevia extract, sucralose, thaumatin, and combinations thereof.
Clause 126: The composition of clause 125, wherein the protein is a sweet protein.
Clause 127: The composition of any one of the clauses 112 to 123, wherein the sugar substitute comprises a steviol glycoside or a functional variant thereof.
Clause 128: The composition of any one of the clauses 112 to 123, wherein the sugar substitute comprises rebaudloside A and stevioside.
Clause 129: The composition of any one of clauses 112 to 128, wherein the composition comprises less than 70%, 60%, 55% ,50%, 45%, 40%, 35%, 30%, 25%, 20%, 10%, 5%, or 1% by dry weight monosaccharides. Clause 130: The composition of any one of clauses 112 to 128, wherein the composition is substantially free of monosaccharides.
Clause 131: The composition of clause 129 or clause 130, wherein the monosaccharides comprise glucose, fructose, galactose, or any combination thereof.
Clause 132: The composition of any one of clauses 112 to 131, wherein the composition comprises less than 70%, 60%, 55% ,50%, 45%, 40%, 30%, 25%, 20%, 10%, 5%, or 1% by dry weight disaccharides.
Clause 133: The composition of clause 132, wherein disaccharides comprise sucrose, lactose, maltose, or any combination thereof.
Clause 134: The composition of any one of clauses 112 to 133, wherein the composition is substantially free of sucrose, lactose, maltose, or any combination thereof.
Clause 135: The composition of any one of clauses 112 to 133, wherein the amount of sucrose, lactose, maltose, or any combination thereof, is less than the amount of cello-oligosaccharides.
Clause 136: The composition of any one of clauses 112 to 133, wherein the amount of sucrose, lactose, maltose, or any combination thereof, is less than the amount of cellobiose.
Clause 137: The composition of any one of clauses 112 to 133, wherein the amount of sucrose, lactose, maltose, or any combination thereof, is less than the amount of xylo-oligosaccharides.
Clause 138: The composition of any one of clauses 112 to 133, wherein the amount of sucrose, lactose, maltose, or any combination thereof, is less than the amount of xylobiose.
Clause 139: The composition of any one of clauses 112 to 133, wherein the amount of sucrose, lactose, maltose, or any combination thereof, is less than the amount of manno-oligosaccharides.
Clause 140: The composition of any one of clauses 112 to 133, wherein the amount of sucrose, lactose, maltose, or any combination thereof, is less than the amount of mannan-derived disaccharide.
Clause 141: The composition of any one of clauses 112 to 140, wherein the composition comprises less than 30%, 25%, 20%, 10%, 5%, or 1% by dry weight maltodextrin.
Clause 142: The composition of any one of clauses 112 to 140, wherein the composition is substantially free of maltodextrin.
Clause 143: The composition of any one of clauses 112 to 141, wherein the composition comprises at least 10%, 20%, 30%, 40%, 50%, or 60% by dry weight of the at least two types of oligosaccharides.
Clause 144: The composition of any one of clauses 112 to 141, wherein the cello-oligosaccharides comprise at least 5%, 10%, 15%, 20%, 25%, 30%, or 35% by dry weight of the first component.
Clause 145: The composition of any one of the clauses 112 to 144, wherein the cello-oligosaccharides comprise at least 40%, at least 50%, at least 60%, at least 70%, at least 80%, or at least 90% cellobiose.
Clause 146: The composition of any one of the clauses 112 to 145, wherein the xylo-oligosaccharides comprise xylo-oligosaccharides with one or more side branches, xylo-oligosaccharides with one or more glucuronosyl side branches, xylo-oligosaccharides with one or more methylglucurosyl side branches, xylo-oligosaccharides with one or more arabinosyl side branches, or combinations thereof.
Clause 147: The composition of any one of clauses 112 to 146, wherein the xylo-oligosaccharides comprise at least 5%, 10%, 15%, 20%, 25%, 30%, or 35% by dry weight of the first component.
Clause 148: The composition of any one of the clauses 112 to 146, wherein the xylo-oligosaccharides comprise at least 40%, at least 50%, at least 60%, at least 70%, at least 80%, or at least 90% xylobiose.
Clause 149: The composition of any one of the clauses 112 to 146, wherein the xylo-oligosaccharides comprise xylose and arabinose monomers collectively at a ratio of between 20:1 and 2:1, 18:1 and 4:1, 16:1 and 6:1.
Clause 150: The composition of any one of clauses 112 to 149, wherein the manno-oligo saccharides comprise at least 5%, 10%, 15%, 20%, 25%, 30%, or 35% by dry weight of the first component.
Clause 151: The composition of any one of the clauses 111 to 148, wherein the cello-oligosaccharides comprise at least 40%, at least 50%, at least 60%, at least 70%, at least 80%, or at least 90% disaccharide.
Clause 152: The composition of any one of clauses 112 to 149, wherein the mixed-linkage glucan oligosaccharides comprise at least 5%, 10%, 15%, 20%, 25%, 30%, or 35% by dry weight of the first component.
Clause 153: The composition of any one of clauses 112 to 149, wherein the xyloglucan oligosaccharides comprise at least 5%, 10%, 15%, 20%, 25%, 30%, or 35% by dry weight of the first component.
Clause 154: The composition of any one of the clauses 112 to 153, wherein the weight/weight ratio of the first component to the second component is from 3000:1 to 2000:1, 2000:1 to 1000:1, 1000:1 to 500:1, 500:1 to 250:1, 250:1 to 125:1, 125:1 to 100:1, or 100:1 to 75:1.
Clause 155: The composition of any one of the clauses 112 to 153, wherein the weight/weight ratio of the cello-oligosaccharides to the second component is from 1000:1 to 666:1, 666:1 to 333:1, 333:1 to 166:1, 166:1 to 83:1, 83:1 to 33:1, 33:1 to 25:1, or 25:1 to 10:1.
Clause 156: The composition of any one of the clauses 112 to 153, comprising cellobiose, wherein the weight/weight ratio of the cellobiose to the second component is from 1000:1 to 666:1, 666:1 to 333:1, 333:1 to 166:1, 166:1 to 83:1, 83:1 to 33:1, 33:1 to 25:1, or 25:1 to 10:1.
Clause 157: The composition of any one of the clauses 112 to 153, wherein the weight/weight ratio of the xylo-oligosaccharides to the second component is from 1000:1 to 666:1, 6661 to 333:1, 333:1 to 166:1, 166:1 to 83:1, 83:1 to 33:1, 33:1 to 25:1, or 25:1 to 10:1.
Clause 158: The composition of any one of the clauses 112 to 153, comprising xylobiose, wherein the weight/weight ratio of the xylobiose to the second component is from 1000:1 to 666:1, 666:1 to 333:1, 333:1 to 166:1, 166:1 to 83:1, 83:1 to 33:1, 33:1 to 25:1, or 25:1 to 10:1.
Clause 159: The composition of any one of the clauses 112 to 153, comprising arabinosylated xylo-oligosaccharides, wherein the weight/weight ratio of the arabinosylated xylo-oligosaccharides to the second component is from 1000:1 to 666:1, 666:1 to 333:1, 333:1 to 166:1, 166:1 to 83:1, 83:1 to 33:1, 33:1 to 25:1, or 25:1 to 10:1.
Clause 160: The composition of any one of the clauses 112 to 153, wherein the weight/weight ratio of the manno-oligo saccharides to the second component is from 1000:1 to 666:1, 666:1 to 333:1, 333:1 to 166:1, 166:1 to 83:1, 83:1 to 33:1, 33:1 to 25:1, or 25:1 to 10:1.
Clause 161: The composition of any one of the clauses 112 to 153, comprising mannan-derived disaccharides, wherein the weight/weight ratio of the mannan-derived disaccharides to the second component is from 1000:1 to 666:1, 666:1 to 333:1, 333:1 to 166:1, 166:1 to 83:1, 83:1 to 33:1, 33:1 to 25:1, or 25:1 to 10:1.
Clause 162: The composition of any one of the clauses 112 to 153, comprising saccharides not digestible by human enzymes *in vitro,* wherein the weight/weight ratio of the saccharides not digestible by human enzymes *in vitro* to the second component is from 3000:1 to 2000:1, 2000:1 to 1000:1, 1000:1 to 500:1, 500:1 to 250:1, 250:1 to 125:1, 125:1 to 100:1, or 100:1 to 75:1.
Clause 163: The composition of any one of the clauses 112 to 153, wherein the weight/weight ratio of the first component to the sugar substitute is from 3000:1 to 2000:1, 2000:1 to 1000:1, 1000:1 to 500:1, 500:1 to 250:1, 250:1 to 125:1, 125:1 to 100:1, or 100:1 to 75:1.
Clause 164: The composition of any one of the clauses 112 to 153, wherein the weight/weight ratio of the cello-oligosaccharides to the sugar substitute is from 1000:1 to 666:1, 666:1 to 333:1, 333:1 to 166:1, 166:1 to 83:1, 83:1 to 33:1, 33:1 to 25:1, or 25:1 to 10:1.
Clause 165: The composition of any one of the clauses 112 to 153, comprising cellobiose, wherein the weight/weight ratio of the cellobiose to the sugar substitute is from 1000:1 to 666:1, 666:1 to 333:1, 333:1 to 166:1, 166:1 to 83:1, 83:1 to 33:1, 33:1 to 25:1, or 25:1 to 10:1.
Clause 166: The composition of any one of the clauses 112 to 153, wherein the weight/weight ratio of the xylo-oligosaccharides to the sugar substitute is from 1000:1 to 666:1, 666:1 to 333:1, 333:1 to 166:1, 166:1 to 83:1, 83:1 to 33:1, 33:1 to 25:1, or 25:1 to 10:1.
Clause 167: The composition of any one of the clauses 112 to 153, comprising xylobiose, wherein the weight/weight ratio of the xylobiose to the sugar substitute is from 1000:1 to 666:1, 666:1 to 333:1, 333:1 to 166:1, 166:1 to 83:1, 83:1 to 33:1, 33:1 to 25:1, or 25:1 to 10:1.
Clause 168: The composition of any one of the clauses 112 to 153, comprising arabinosylated xylo-oligosaccharides, wherein the weight/weight ratio of the arabinosylated xylo-oligosaccharides to the sugar substitute is from 1000:1 to 666:1, 666:1 to 333:1, 333:1 to 166:1, 166:1 to 83:1, 83:1 to 33:1, 33:1 to 25:1, or 25:1 to 10:1.
Clause 169: The composition of any one of the clauses 112 to 153, wherein the weight/weight ratio of the manno-oligo saccharides to the sugar substitute is from 1000:1 to 666:1, 666:1 to 333:1, 333:1 to 166:1, 166:1 to 83:1, 83:1 to 33:1, 33:1 to 25:1, or 25:1 to 10:1.
Clause 170: The composition of any one of the clauses 112 to 153, comprising mannan-derived disaccharides, wherein the weight/weight ratio of the mannan-derived disaccharides to the sugar substitute is from 1000:1 to 666:1, 666:1 to 333:1, 333:1 to 166:1, 166:1 to 83:1, 83:1 to 33:1, 33:1 to 25:1, or 25:1 to 10:1.
Clause 171: The composition of any one of the clauses 112 to 153, comprising saccharides not digestible by human enzymes *in vitro,* wherein the weight/weight ratio of the saccharides not digestible by human enzymes *in vitro* to the sugar substitute is from 3000:1 to 2000:1, 2000:1 to 1000:1, 1000:1 to 500:1, 500:1 to 250:1, 250:1 to 125:1, 125:1 to 100:1, or 100:1 to 75:1.
Clause 172: The composition of any one of clauses 112 to 153, wherein the first component comprises the cello-oligosaccharides and the xylo-oligosaccharides.
Clause 173: The composition of any one of clauses 112 to 153, wherein the first component comprises the cello-oligosaccharides and the manno-oligosaccharides.
Clause 174: The composition of any one of clauses 112 to 173, further comprising less than 1% wt/wt bulking sweetener, wherein the bulking sweetener comprises a sugar alcohol, allulose, tagatose, maltodextrin, resistant maltodextrin, erythritol, or any combination thereof.
Clause 175: The composition of any one of clauses 112 to 174, further comprising a polysaccharide, a cellulosic polysaccharide, cellulose, a hemicellulosic polysaccharide, xylan, a polysaccharide derivative, a cellulose derivative, carboxymethylcellulose, a polysaccharide aggregate, a lignocellulosic material, or any combination thereof.
Clause 176: The composition of clause 175, wherein the composition comprises at most 30% polysaccharides by dry weight.
Clause 177: The composition of any one of the clauses 112 to 176, further comprising a phenolic compound, a lignin, a portion of a lignin, a product of lignin breakdown, ferulic acid, a ferulic acid derivative, or any combination thereof.
Clause 178: The composition of any one of clauses 112 to 177, wherein the first component comprises less than 100, 50, 10, 5 1, 0.5, 0.1, 0.05 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V and/or Zn.
Clause 179: The composition of any one of clauses 112 to 178, wherein the first component comprises more than 0.01 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V and/or Zn.
Clause 180: The composition of any one of clauses 112 to 179, further comprising baking soda.
Clause 181: A foodstuff, a cosmetic, or a nutraceutical comprising the composition of any one of clauses 112 to 180.
Clause 182: A foodstuff of comprising: a first component comprising at least two types of oligosaccharides selected from: a) cello-oligosaccharides with a degree of polymerization of from two to six; b) xylo-oligosaccharides with a degree of polymerization of from two to twelve; c) mixed-linkage glucan oligosaccharides with a degree of polymerization of from two to five; d) manno-oligosaccharides with a degree of polymerization of from two to twelve; and e) xyloglucan oligosaccharides with a degree of polymerization of from four to twelve; and a second component comprising a sugar substitute.
Clause 183: The foodstuff of clause 182, wherein a taste of the foodstuff is substantially free of bitterness.
Clause 184: The foodstuff of clause 182 or clause 183, wherein the foodstuff is a cake, cookie, brownie, brookie, candy, cereal bar, nut bar, pie, cobbler, pastry, bun, scone, bread, roll, Danish, donut, torte, muffin, cupcake, milkshake, ice cream, frozen yogurt, custard, gelato, waffle, pancake, jam, or a combination thereof. Clause 185: The foodstuff of any one of clauses 182 to 184, wherein the foodstuff comprises a polysaccharide, wherein the polysaccharide is a cellulosic polysaccharide, a hemicellulosic polysaccharide, a polysaccharide derivative, or a polysaccharide aggregate.
Clause 186: The foodstuff of clause 185, wherein the polysaccharide is a cellulosic polysaccharide.
Clause 187: The foodstuff of clause 185, wherein the hemicellulosic polysaccharide is xylan.
Clause 188: The foodstuff of clause 185, wherein the hemicellulosic polysaccharide is mannan.
Clause 189: The foodstuff of clause 185, wherein the polysaccharide derivative is carboxymethylcellulose.
Clause 190: The foodstuff of clause 185, wherein the polysaccharide aggregate is lignocellulosic material, preferably partially digested lignocellulosic material, such as from an enzymatic reaction that produced the oligosaccharides.
Clause 191: The foodstuff of any one of clauses 185 to 190, wherein the foodstuff comprises less than about 15%, about 10%, about 5%, about 2.5%, about 1.25% by dry weight of the polysaccharide.
Clause 192: The foodstuff of any one of clauses 185 to 191, wherein the foodstuff comprises oligosaccharides that have been subjected to a browning reaction.
Clause 193: The foodstuff of clause 192, wherein the foodstuff comprises oligosaccharides that have been subjected to a caramelization or a Mailliard reaction.
Clause 194: The foodstuff of any one of clauses 182 to 193, wherein the foodstuff is substantially free of one or more allergens, wherein the one or more allergens are selected from wheat gluten, nuts, dairy, or egg.
Clause 195: A bakery product comprising the composition any one of clauses 112 to 180, wherein the ratio of browning on the surface of the bakery product to the browning internal to the bakery product is greater than a control bakery product that does not comprise the second component.
Clause 196: A bakery product comprising the composition any one of clauses 112 to 180, wherein the springiness of the bakery product is greater than a control bakery product that does not comprise the second component.
Clause 197: A bakery product comprising the composition any one of clauses 112 to 180, wherein the firmness of the bakery product is greater than a control bakery product that does not comprise the second component.
Clause 198: A foodstuff comprising the composition any one of clauses 112 to 180, wherein the composition is a fat-based composition.
Clause 199: A foodstuff comprising the composition comprising the composition any one of clauses 112 to 180, wherein the composition is a water-based composition.

### EXAMPLES

The following illustrative examples are representative of embodiments of the compositions and methods described herein and are not meant to be limiting in any way.

### Example 1 - Stevia boosts sweetness of saccharide solutions without comparable bitterness at stevia : oligosaccharide ratios of between ~1:1000 and ~1:100

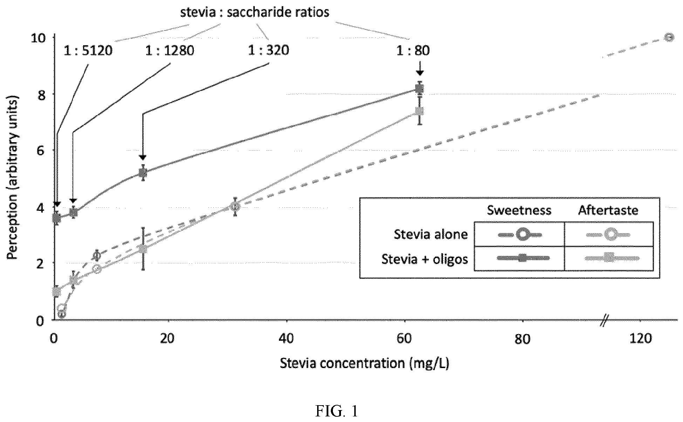

Solutions were prepared and tasted as follows:
1. Solutions comprising 1-128 mg/L stevia +/- 5 g/L oligosaccharides were created
2. Samples were tasted by a 5-person panel who were asked to quantitate sweetness and aftertaste relative to 128 mg/L stevia
3. Data shown as average +/- standard error in FIG. 1
4. Stevia:oligosaccharide ratios above 1:80 had surprisingly superior sweetness:aftertaste ratios compared to Stevia alone. Stevia:oligosaccharide ratios below 1:1280 were not significantly sweeter than oligosaccharide alone. Therefore, surprisingly ratios of stevia:oligosaccharide between ~1:100 and ~1:1000 had increased sweetness without a comparable increase in aftertaste. This allowed greater sweetness for less stevia. This allowed greater sweetness for less indigestible saccharide. This allowed

### Example 2 - Stevia boosts the sweetness of saccharide-containing bakery products without comparable bitterness at stevia : oligosaccharide ratios of between ~1:1500 and ~1:150

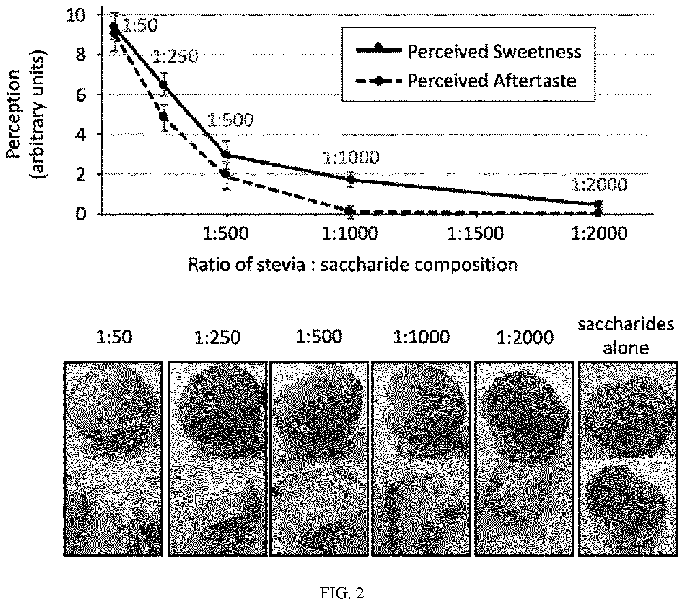

Cakes were prepare and tasted as follows:
1. Whisk 50 g saccharide mixture (comprising 45% (w/w) xylo-oligosaccharide, 40% (w/w) cello-oligosaccharide, 15% (w/w) cellulose) into 50 g butter until creamed. Add 50 g egg and whisk until smooth. Add 15 g milk and 2.5 g vanilla extract and whisk in. Sift in 25 g self-rising flour and 2 g baking powder and whisk until smooth. Bake at 180°C for approximately 15 minutes.
2. Samples were tasted by a 5-person panel who were asked to quantitate sweetness and aftertaste relative to 128 mg/L stevia which was the highest amount of stevia in the composition.
3. Data shown as average +/- standard error in FIG. 2. Surprisingly, stevia:oligosaccharide ratios between ~1:150 and ~1:1500 had the best sweetness:aftertaste numbers.
4. The cakes had a texture of similar to that when using sugar and had a soft, cakey, chewy consistency, was able to hold moisture and had a sugar-like rise and color (yellow/light brown with browned edges and cracks) and a conventional cake-like wrinkling structure as is shown in FIG. 2.

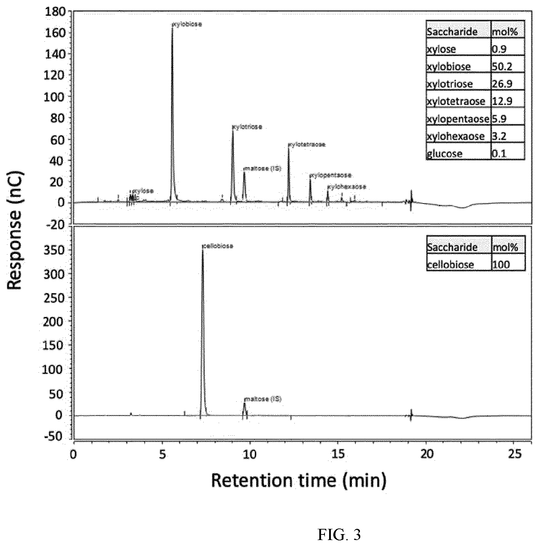

FIG. 3 illustrates the cello-oligosaccharides and xylo-oligosaccharides in the oligosaccharide mixture used in this example.

### Example 3: Effect of different sweeteners in muffins

Cakes were prepared and tasted as follows:
Whisk 66 g saccharide mixture (comprising 75% (w/w) xylo-oligosaccharide, 10% (w/w) cello-oligosaccharide, and 15% (w/w) cellulose), OR whisk 66 g cane sugar for control, into 66 g butter until creamed.

Add 58.5 g egg and whisk until smooth.

Add 3 g vanilla extract and whisk in.

Sift in 66 g self-rising flour and 1.5 g baking powder and whisk until smooth.

For non-control mixtures 0.146 g saccharin, 0.33 g aspartame, 0.264 g monkfruit extract and a 0.132 g stevia and 0.132 g monkfruit extract combination, or no additional ingredient were added.

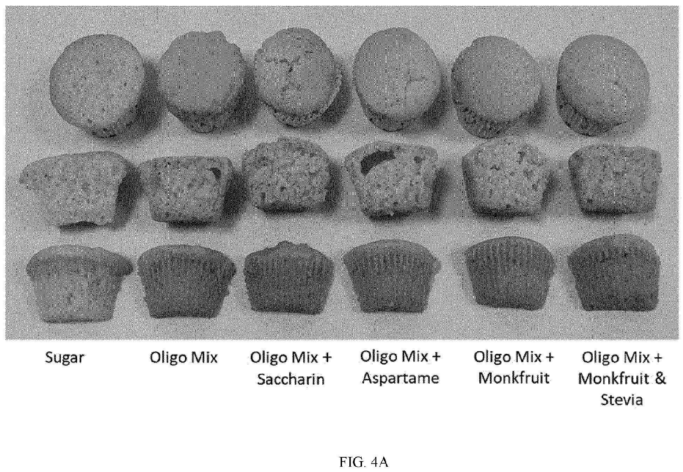

The mixture makes approximately six 40 g portions of dough which were placed into muffin cakes and baked at 180 °C for approximately 15 minutes. FIG. 4A shows the muffins produced using various sweeteners.

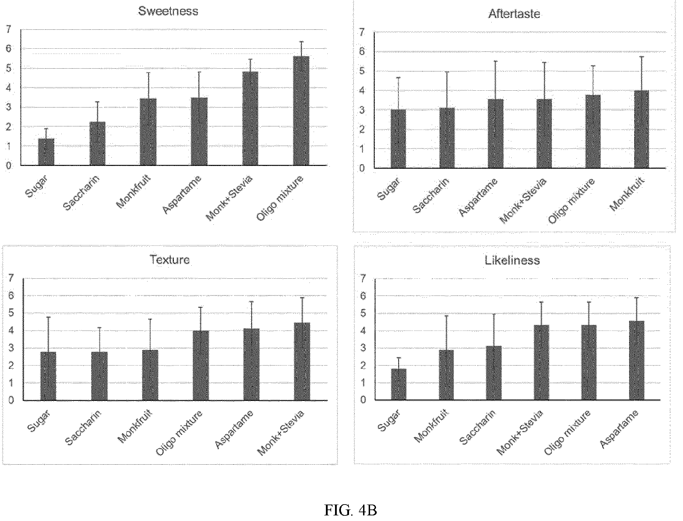

Samples were tasted by a 9-person panel who were asked to rank the muffins according to: sweetness (1=sweetest, 6=least sweet), aftertaste (1=no aftertaste, 6=strongest aftertaste), texture (1=best texture, 6=worst texture), how much they like them (1=best muffin, 6=worst muffin). FIG. 4B shows the results from the tasting.

Sugar muffins were ranked as the sweetest muffins. Oligosaccharide mixture + saccharin muffins were the ranked as the sweetest muffins compared in the group of high-intensity sweeteners + oligosaccharide mixture. Aspartame is known to be heat unstable but oligosaccharide mixture muffins with aspartame taste sweeter than oligosaccharide mixture + monkfruit + stevia.

Texture of sugar muffins were ranked higher than others. Texture of oligosaccharide mixture muffins with saccharin or monkfruit extract were ranked better than oligosaccharide mixture only muffins. Texture of oligosaccharide mixture muffins with aspartame or monkfruit + stevia were ranked lower than pure oligosaccharide mixture muffins. High-intensity sweeteners like saccharin or monkfruit therefore were found to improve the texture of oligosaccharide mixture muffins.

Sugar muffins were found to have the lowest aftertaste. Oligosaccharide mixture muffins with monkfruit have the strongest aftertaste. High-intensity sweeteners like saccharin, aspartame, or monkfruit in combination with stevia were found to improve the aftertaste of oligosaccharide mixture muffins.

Sugar muffins were ranked higher for likeliness. Oligosaccharide mixture muffins with monkfruit, saccharin, monkfruit + stevia were liked more than oligosaccharide mixture on its own. Oligosaccharide mixture muffins with aspartame were ranked lower. High-intensity sweeteners like saccharin, monkfruit, or monkfruit in combination with stevia improves consumer acceptance.

Oligosaccharide mixture muffins with saccharin were ranked higher than other oligosaccharide mixture combinations regarding texture, sweetness, and aftertaste

### Example 4: Effect of saccharin combined with different bulk sweeteners and oligosaccharide mixture in muffins

Cakes were prepared and tasted as follows:
Into 66 g butter, whisk until creamed: 66 g saccharide mixture (comprising 75% (w/w) xylo-oligosaccharide, 10% (w/w) cello-oligosaccharide, and 15% (w/w) cellulose) and one selected from: 6 g maltodextrin, 66 g erythritol, or 66 g allulose.

Add 58.5 g egg and whisk until smooth.

Add 3 g vanilla extract and whisk in.

Sift in 66 g self-rising flour and 1.5 g baking powder and whisk until smooth.

Add 0.146 g Saccharin.

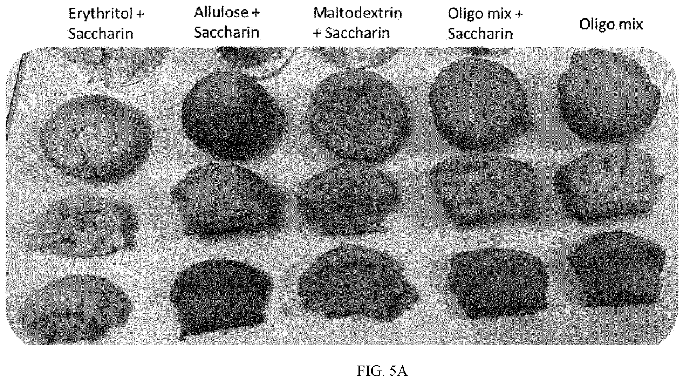

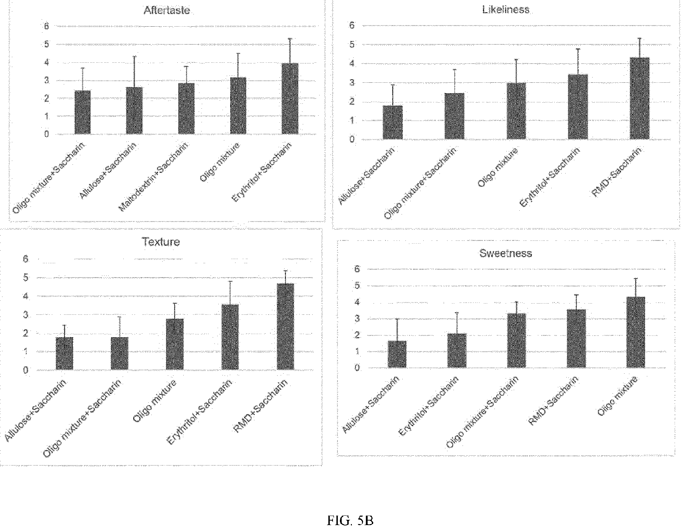

The mixture makes approximately six 40 g portions of dough which were placed into muffin cakes and baked at 180 °C for approximately 15 minutes. FIG. 5A shows the results of the cakes prepared. Cakes made with a combination of erythritol and saccharin were found to be pale and whitish in color. Allulose and saccharin muffins were found to be too dark with a brownish color outside. Maltodextrin and saccharin cakes were found to have an irregular surface and were found to be wet inside as well. The oligosaccharide mixture and saccharin combination cakes had an even surface and a color comparable to the cakes made with the oligosaccharide combination alone. These results show that the non-desirable properties (evenness, color, and texture) of bulking agents such as maltodextrin, erythritol and allulose were reduced when replaced with an oligosaccharide mixture. Tasting was performed as described in Example 3 and results are shown in FIG. 5B.

### Example 5 - Oligosaccharide mixture muffins with different high-intensity sweeteners

Cakes were prepared and tasted as follows:
Whisk 557.7 g saccharide mixture (comprising 75% (w/w) xylo-oligosaccharide, 10% (w/w) cello-oligosaccharide, and 15% (w/w) cellulose), OR whisk 66 g cane sugar for control, into 557.7 g butter until creamed.

Add 494.3 g egg and whisk until smooth.

Add 25.4 g vanilla extract and whisk in.

Sift in 557.7 g self-rising flour and 12.7 g baking powder and whisk until smooth.

The mixture was then split into 5, into which was added 0.146 g saccharin, 0.33 g aspartame, 0.264 g monkfruit extract, 0.132 g stevia and 0.132 g monkfruit extract, or no additional ingredient. Different amounts of high-intensity sweeteners were added based on their known level of sweetness.

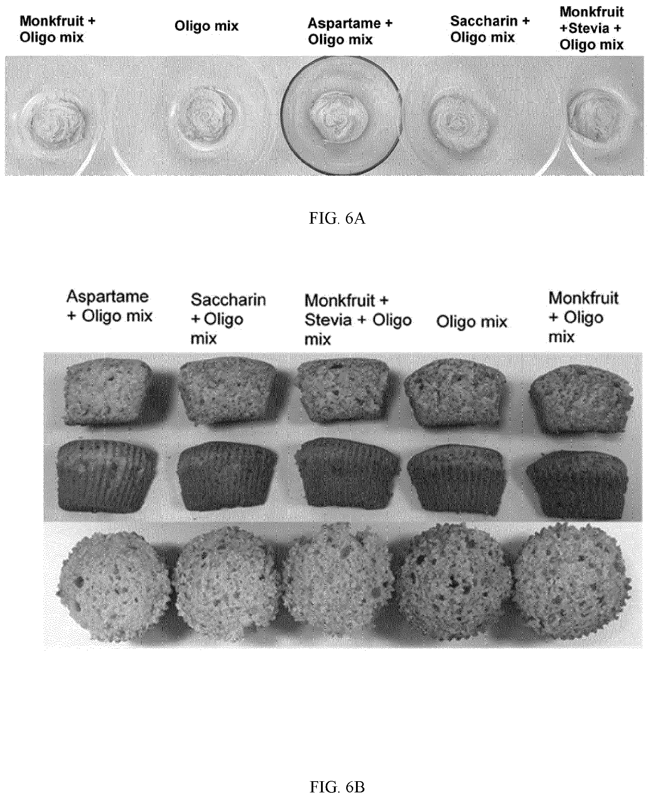

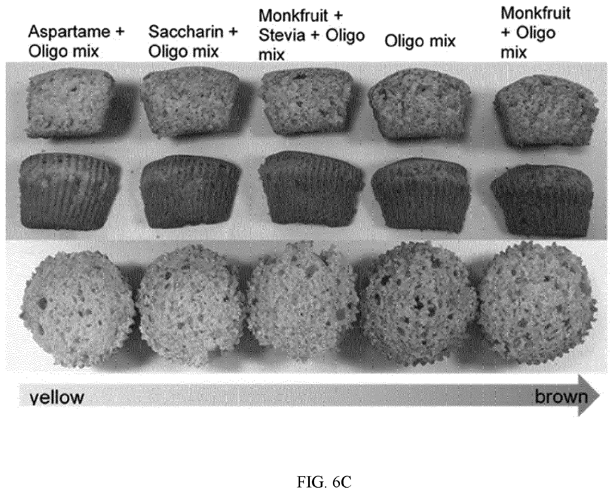

No difference in muffin batters regarding texture, color and spreadability were overserved in doughs following addition of different high-intensity sweeteners (as shown in FIG. 6A).

The mixture made approximately six 40 g portions of dough which were placed into muffin cakes and baked at 180 °C for approximately 15 minutes. (FIG. 6B).

Oligosaccharide mixture in combination with aspartame, saccharin, or stevia lead to brighter muffins from outside and inside. Oligosaccharide mixture in combination with monkfruit was darker than the oligosaccharide mixture muffins. Color of oligosaccharide mixture muffins was therefore changed by adding high-intensity sweeteners. To make the oligosaccharide mixture muffins brighter, oligosaccharide mixture can be combined with saccharin or stevia.

The firmness and springiness of the muffins was measured using the TA-XTPlusC Texture Analyser (Stable Microsystems, UK) using the "ExponentC" software, according to the following parameters in Table 1.

**Table 1: Parameters for texture measurement**

| Parameter | Value |
|---|---|
| Selected Probe | P/2" |
| | 2.0" Cylinder Aluminium |
| Accessory | Using 30 kg load cell |
| Pre-Test Speed | 2.0 mm/s |
| Test Speed | 1.0 mm/s |
| Post-Test Speed | 10.0 mm/s |
| Target Mode | Strain |
| Strain | 25% |
| Time | 30 sec |
| Trigger Type | Auto - 5g |
| Tare Mode | Auto |
| Data Acquisition Rate | 500 pps |

Results are shown in Table 2 below and in FIGS. 6A and 6B. Adding high-intensity sweeteners decreased the firmness of the oligosaccharide mixture muffins. Adding high-intensity sweeteners also increased the springiness of oligosaccharide mixture muffins.

**Table 2: Texture results of muffin samples**

| **Samples + Oligosaccharide mixture** | **Firmness [g]** | **Springiness [%]** |
|---|---|---|
| Monkfruit | 430.96 ± 71.36 | 56.76 ± 0.26 |
| Monkfruit + Stevia | 500.51 ± 84.69 | 56.54 ± 1.90 |
| Aspartame | 543.84 ± 543.84 | 54.96 ± 1.04 |
| Saccharin | 549.77 ± 549.77 | 55.30 ± 0.50 |
| No high-intensity sweetener (HIS) | 606.47 ± 606.47 | 55.16 ± 0.05 |

### Example 6 - Effect of high-intensity sweeteners on oligosaccharide mixture muffins with different oligosaccharide ratios

Cakes were prepared and tasted as follows:
Whisk 557.7 g of one of three different saccharide mixture (comprising 83.6g or 15% microcrystalline cellulose and 474.04g or 85% of xylo-oligosaccharide and cello-oligosaccharide mixture in various ratios) into 557.7 g butter until creamed. 90% (w/w) xylo-oligosaccharide (XOS) and 10% (w/w) cello-oligosaccharide (CB), 70% (w/w) xylo-oligosaccharide and 30% (w/w) cello-oligosaccharide, 50% (w/w) xylo-oligosaccharide, and 50% (w/w) cello-oligosaccharide mixtures were prepared.

Add 494.3 g egg and whisk until smooth.

Add 25.4 g vanilla extract and whisk in.

Sift in 557.7 g self-rising flour and 12.7 g baking powder and whisk until smooth.

Each mixture was then split into 5, into which was added: 0.048 g saccharin, 0.144 g saccharin, 0.043 g monkfruit and 0.043 g stevia, 0.129 g monkfruit and 0.129 g stevia, or no additional ingredient.

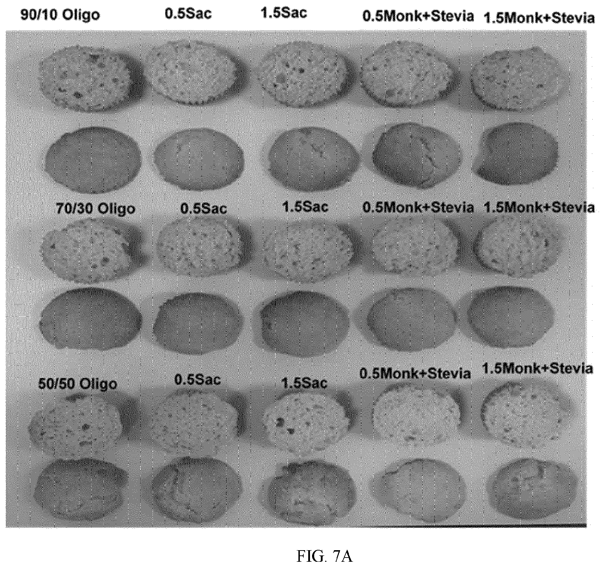

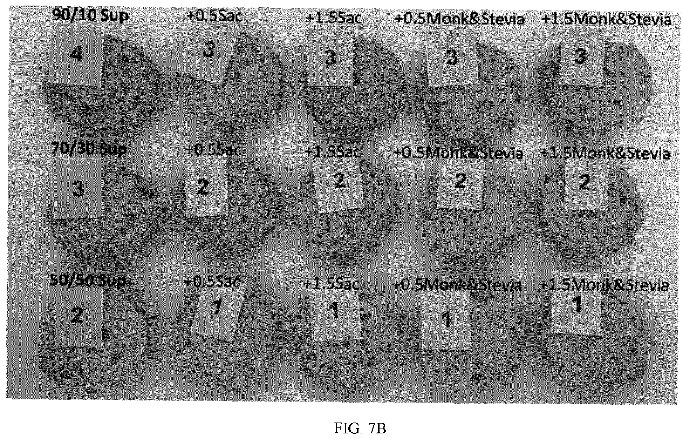

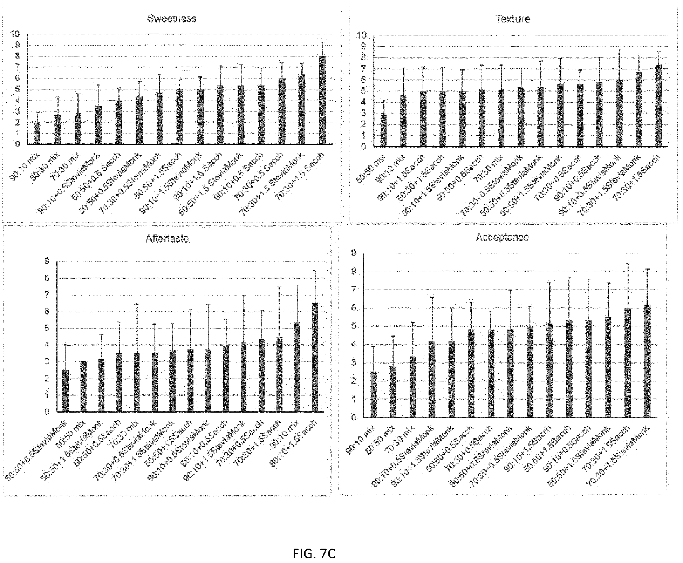

The mixture made approximately six 40 g portions of dough which were placed into muffin cakes and baked at 180 °C for approximately 15 minutes (as shown in FIGS. 7A and B). Tasting results are shown in FIG. 7C.

Adding high-intensity sweeteners had an effect on the color of oligosaccharide mixture muffins. Different XOS:CB ratios were found to affect the color of oligosaccharide mixture muffins. Different XOS:CB ratios were also found to affect spreadability and texture of muffin batter (with more CB, muffin batter was dryer and less spreadable).

90/10 (XOS:CB) - Color of the pure oligosaccharide mixture muffins is the darkest (4). Adding saccharin or monkfruit + stevia made the muffins brighter (from 4 to 3).

70/30 (XOS:CB) - Adding saccharin or monkfruit + stevia made the muffins brighter (from 3 to 2).

50:50 (XOS:CB) - With more CB, muffins became brighter (from 4 to 2). Adding saccharin or monkfruit + stevia made the muffins brighter (from 2 to 1).

### Example 7 - Effect of baking powder on oligosaccharide mixture muffins

Cookies were prepared and tasted as follows:
Whisk 42.9 g saccharide mixture (comprising 75% (w/w) xylo-oligosaccharide, 10% (w/w) cello-oligosaccharide, and 15% (w/w) cellulose), OR whisk 42.9 g cane sugar for control, into 42.9 g butter until creamed.

Add 38 g egg and whisk until smooth.

Add 1.9 g vanilla extract and whisk in.

Sift in 42.9 g self-rising flour and in some batches 1.0 g baking powder and whisk until smooth.

For non-control mixtures 0.047 g saccharin was added.

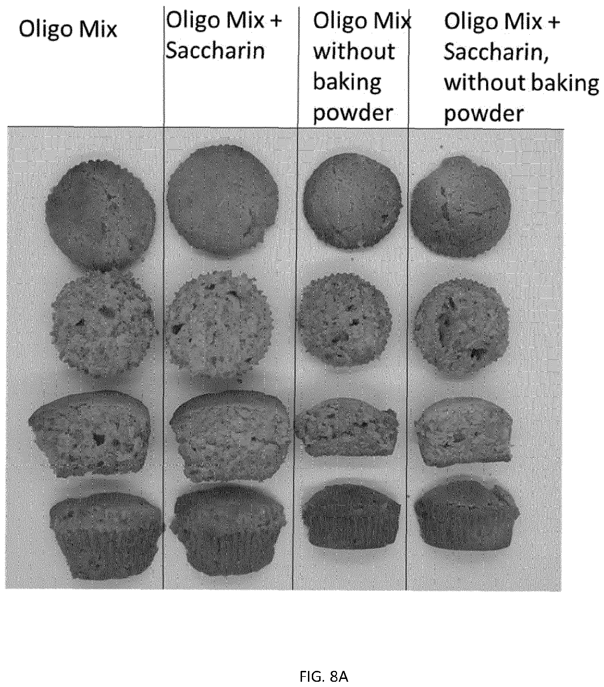

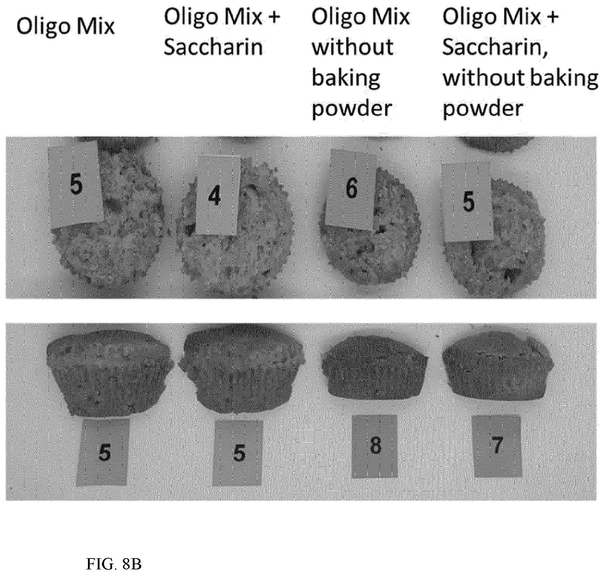

The mixture makes approximately six 40 g portions of dough which were placed into muffin cakes and baked at 180 °C for approximately 15 minutes (as shown in FIGS. 8A and 8B).

Baking powder was found to affect the color of the crust of oligosaccharide mixture muffins. The crust of oligosaccharide mixture muffins without baking powder was found to be darker. Adding saccharin to oligosaccharide mixture was found to change the color of the crumb. With saccharin the color of the crumb was found to be lighter.

### Example 8 - Saccharide mixtures in presence of bulking sweeteners

Cookies were prepared and tasted as follows:
Into eleven samples of 13.5 g butter, whisk until creamed one of each of the following:
**a)** 25 g sugar,
**b)** 25 g saccharide mixture (comprising 75% (w/w) xylo-oligosaccharide, 10% (w/w) cello-oligosaccharide, and 15% (w/w) cellulose),
**c)** 25 g maltodextrins,
**d)** 12.5 g maltodextrins and 12.5 g saccharide mixture (comprising 75% (w/w) xylo-oligosaccharide, 10% (w/w) cello-oligosaccharide, and 15% (w/w) cellulose),
**e)** 25 g allulose,
**f)** 12.5 g allulose and 12.5 g saccharide mixture (comprising 75% (w/w) xylo-oligosaccharide, 10% (w/w) cello-oligosaccharide, and 15% (w/w) cellulose),
**g)** 25 g tagatose,
**h)** 25 g erythritol,
**i)** 12.5 g erythritol and 12.5 g saccharide mixture (comprising 75% (w/w) xylo-oligosaccharide, 10% (w/w) cello-oligosaccharide, and 15% (w/w) cellulose),
**j)** 25 g inulin, or
**k)** 12.5 g inulin and 12.5 g saccharide mixture (comprising 75% (w/w) xylo-oligosaccharide, 10% (w/w) cello-oligosaccharide, 15% (w/w) cellulose).

Add 6.0 g egg and whisk until smooth.

Add 1.0 g vanilla extract and whisk in.

Sift in 18.5 g flour and 0.5 g baking powder and whisk until smooth.

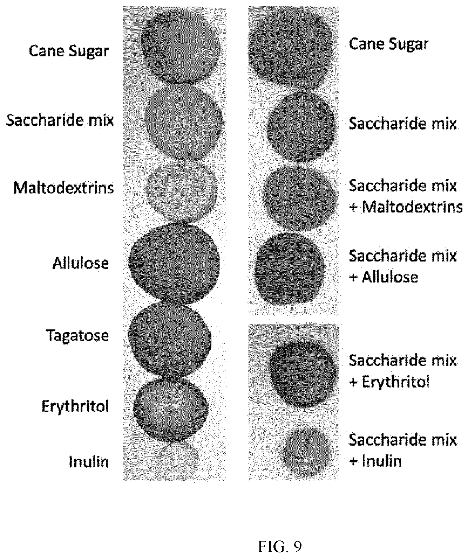

Mixture makes approximately six 40 g portions of dough which were baked at 180° C for 12 mins (results as shown in FIG. 9).

The saccharide mixture product looked and felt most like the sugar cookie and each of the other products was improved when the saccharide mixture was added. Saccharide mix cookies had an even surface, similar color compared to sucrose cookies, slightly darker edges. Spreadability was a bit less compared to sucrose cookies. The product felt chewy and slightly caky when broken apart. It tasted soft and chewy in the inside, while the edges tasted crunchy. Sweetness was lower but was found to be likeable.

Maltodextrin: The product was very dry, with a cavity inside the structure of the cookie. The overall cookie had a deformed shape because the exterior had caved in to close the cavity. The product was brittle and cold not bend without cracking: the texture did not resemble that of a muffin or cake. The colour was very bright, indicative of little browning, such as through Maillard reactions or caramelization. Irregular surface, air was trapped below the crust, pale color on outside and slightly darker inside, very tacky.

Maltodextrin plus saccharides: Irregular surface but less so than maltodextrin alone; air was entrapped below the crust; irregular color, inside was darker than the outside (outside was very pale); very tacky, felt gummy as well. The 'maltodextrin plus saccharides' cookie was preferred over the 'maltodextrin' cookie; the aesthetics, texture and mouthfeel better resembled the aesthetics, texture and mouthfeel of a cookie made with sugar.

Allulose: Texture was spongy, not hard, pliable even after cooling never became crispy, much darker than sucrose in color, tasted sweet.

Allulose plus saccharides: Like the allulose cookie, the 'allulose plus saccharides' cookie had a texture that was spongy, although the texture better resembled the texture of a cookie made with sucrose, for example having crispy edges. Likewise, the color better resembled the color of a sucrose cookie, it was much less dark than the 'allulose' cookie was still darker than the sugar cookie. The cookie tasted sweet. The 'allulose plus saccharides' cookie was preferred over the 'allulose' cookie; the aesthetics, texture and mouthfeel better resembled the aesthetics, texture and mouthfeel of a cookie made with sugar. The 'allulose plus saccharides' cookie was preferred over the 'saccharides' cookie; it was sweeter.

Tagatose: Texture was spongy, not hard, pliable even after cooling never became crispy, much darker than sucrose in color, tasted sweet.

Erythritol: Bumpy surface, surface color: dark brown / black edges and lighter brown in middle; cookies spread but limited rise in height; not chewy when broken apart; dry mouthfeel; profound strange aftertaste and cooling sensation were noticed.

Erythritol plus saccharides: A bit irregular surface; surface color: brown edges, pale in the middle with an appealing color; cookies spread, but also rose in height; not chewy when broken apart; dry mouthfeel; strange aftertaste and cooling sensation were noticed. The 'erythritol plus saccharides' cookie was preferred over the 'erythritol' cookie; the aesthetics, texture and mouthfeel better resembled the aesthetics, texture and mouthfeel of a cookie made with sugar. The 'erythritol plus saccharides' cookie was preferred over the 'saccharides' cookie; it was sweeter.

Inulin had a smooth surface. It was soft inside, dry on the edges. It had a very pale color, did not spread and did not brown. It was chewy when broken. Profound dry mouthfeel was found.

Inulin plus saccharides had a cracked surface. It was soft inside, dry on the edges. It had a pale-yellow color and did not spread. It was not chewy when broken. Dry mouthfeel was also found. The 'inulin plus saccharides' cookie was preferred over the 'inulin cookie'; the aesthetics, texture and mouthfeel better resembled the aesthetics, texture and mouthfeel of a cookie made with sugar; the 'inulin plus saccharides' cookie was sweeter then the 'inulin cookie'. The 'erythritol plus saccharides' cookie was preferred over the 'saccharides' cookie; it was sweeter.

The saccharide mixture was found to improve the qualities of all bulking sugars.

### Example 9 - Saccharide mixtures in presence of bulking sweeteners

Cookies were prepared comprising saccharide mixture (comprising 75% (w/w) xylo-oligosaccharide, 10% (w/w) cello-oligosaccharide, and 15% (w/w) cellulose) and/or bulking sweeteners consisting of allulose, erythritol, maltodextrin and inulin, and tasted as follows:

Into twenty one samples of 13.5 g butter, whisk until creamed one of each of the following:
**a)** 25 g saccharide mixture (comprising 75% (w/w) xylo-oligosaccharide, 10% (w/w) cello-oligosaccharide, and 15% (w/w) cellulose),
**b)** 23.75 g saccharide mixture and 1.25 g bulking sweetener,
**c)** 20 g saccharide mixture and 5 g bulking sweetener,
**d)** 16.25 g saccharide mixture and 8.75 g bulking sweetener,
**e)** 12.5 g saccharide mixture and 12.5 g bulking sweetener,
**f)** 25 g bulking sweetener,

Add 6.0 g egg and whisk until smooth.

Add 1.0 g vanilla extract and whisk in.

Sift in 18.5 g flour and 0.5 g baking powder and whisk until smooth.

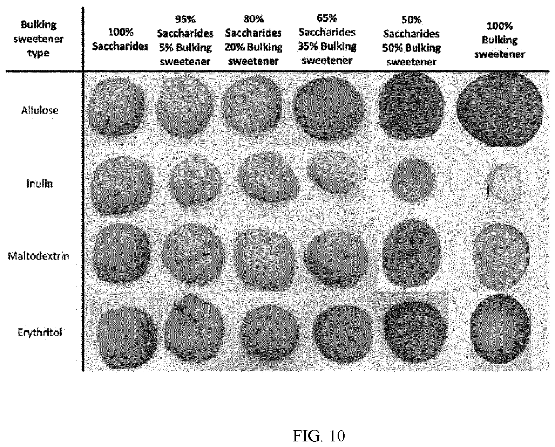

Mixture makes approximately six 40 g portions of dough which were baked at 180° C for 12 mins (results as shown in FIG. 10).

### Allulose-containing cookies:

a. 5 % Allulose cookie: Texture feels chewy and slightly cakey; Bright colour (like saccharide cookie and sugar cookie); Spreadability was a bit less compared to 35 % allulose cookie; tasted soft chewy in the inside, edges tasted crunchy; Sweetness was pleasant.
b. 20 % Allulose cookie: Crispy texture, higher spreadability; Slightly cakey inside; A bit darker than oligosaccharide mix only cookie; tasted a bit sweeter than 5 % Allulose cookie;
c. 35 % Allulose: Texture was crispy, inside was a little bit cakey; good spreadability; darker colour, but still pleasant colour; tasted sweeter, but still pleasant
d. The 50% allulose plus saccharides cookie was preferred over all other combinations of allulose and saccharides.

### Inulin-containing cookies:

a. 5% Inulin: Cracked, uneven surface; did not spread; Soft and cakey inside, dry on the edges; brighter colour than saccharide cookies and sugar cookies; not chewy when broken, sticky mouthfeel.
b. 20% Inulin: Uneven surface; spread the most compared to 5 %, 35 % and 50 % inulin taste a bit crunchy and chewy, but still dry and cakey inside; brighter colour than Oligosaccharide mix only cookies.
c. 35 % inulin: cracked surface; cakey inside, dry on the edges; bright colour; did not spread; not chewy, sticky and dry mouthfeel; tasted sweet
d. The 20% inulin cookie was preferred over all other combinations of inulin and saccharides.

### Maltodextrin-containing cookies

a. 5 % Maltodextrin: even surface; texture feels chewy and slightly caky, crispy edges; regular colour, similar to saccharide cookie and sugar cookie;
b. 20 % Maltodextrin; spread a bit more; texture felt a bit gummy; a bit irregular surface; Regular colour, similar to saccharide cookie and sugar cookie
c. 35 % Maltodextrin: irregular surface; Air was entrapped below the crust (but less compared to 50 % Maltodextrin); regular colour, similar to saccharide cookie and sugar cookie; tacky, feels gummy
d. The 20% maltodextrin cookie was preferred over all other combinations of maltodextrin and saccharides.

### Erythritol-containing cookies

a. 5 % Erythritol: A bit irregular surface; irregular colour, bright in the middle, edges are darker; cookie spreads a bit; inside cakey and dry mouthfeel; strange aftertaste, cooling effect
b. 20 % Erythritol: A bit irregular surface, but regular cookie colour; cookies spread, but also rise; not chewy when broken apart; dry mouthfeel; strange aftertaste, cooling effect
c. 35 % Erythritol: A bit irregular surface, appealing colour; cookies spread, but also rise; not chewy when broken apart, inside cakey; dry mouthfeel; strange aftertaste, cooling effect
d. The 5% erythritol cookie was preferred over all other combinations of erythritol and saccharides.

While preferred embodiments of the present invention have been shown and described herein, it will be obvious to those skilled in the art that such embodiments are provided by way of example only. It is not intended that the invention be limited by the specific examples provided within the specification. While the invention has been described with reference to the aforementioned specification, the descriptions and illustrations of the embodiments herein are not meant to be construed in a limiting sense. Numerous variations, changes, and substitutions will now occur to those skilled in the art without departing from the invention. Furthermore, it shall be understood that all aspects of the invention are not limited to the specific depictions, configurations or relative proportions set forth herein which depend upon a variety of conditions and variables. It should be understood that various alternatives to the embodiments of the invention described herein may be employed in practicing the invention. It is therefore contemplated that the invention shall also cover any such alternatives, modifications, variations or equivalents. It is intended that the following claims define the scope of the invention and that methods and structures within the scope of these claims and their equivalents be covered thereby.

## Claims

1. A sweetener composition comprising:
a first component comprising xylo-oligosaccharides with a degree of polymerization (DP) of from two to twelve and cellulose-based saccharides, wherein the xylo-oligosaccharides and the cellulose-based saccharides are present at a w/w ratio of 19:1 to 1:1; and
a second component comprising one of
(i) a high-intensity sweetener present from 0.02% to 2% by dry weight of the first component, or
(ii) a bulking sweetener present from 10% to 100% by dry weight of the first component.

2. The sweetener composition of claim 1, wherein the cellulose-based saccharides comprise cello-oligosaccharides with a DP from two to six, cellulose polysaccharides, or a combination thereof; preferably cellobiose and/or cellulose; more preferably cellulose.

3. The sweetener composition of claims 1 or 2, wherein the high-intensity sweetener comprises a natural high-intensity sweetener, an artificial high-intensity sweetener, or a combination thereof; preferably wherein the high-intensity sweetener comprises saccharin, sucralose, a steviol glycoside, a mogroside, aspartame, or any combination thereof.

4. The sweetener composition of any one of claims 1 to 3, wherein the weight ratio of the second component to the first component is from 1:1000 to 1:50.

5. The sweetener composition of any one of claims 1 to 4, wherein the bulking sweetener comprises a sugar alcohol, allulose, tagatose, maltodextrin, resistant maltodextrin, erythritol, or any combination thereof.

6. The sweetener composition of any one of claims 1 to 5, comprising less than 20% wt/wt sucrose, maltose and lactose.

7. The sweetener composition of any one of claims 1 to 6, wherein the first component comprises less than 35% wt/wt cellulose.

8. The sweetener composition of any one of claims 1 to 7, wherein an average sweetness level per unit weight of the second component is at least 5 times greater than an average sweetness level of the first component, preferably as determined by the average sweetness perception by a human subject.

9. The sweetener composition of any one of claims 1 to 8, wherein the first component decreases an average bitterness level and/or an average bitter aftertaste per unit weight of the composition as compared to a control composition, wherein the control composition is a composition made using the high-intensity sweetener or the bulking sweetener as the first and second component, preferably as determined by the average bitterness and/or average bitter aftertaste perception by a human subject.

10. The sweetener composition of any one of claims 1 to 9, wherein the sweetener composition comprises less than 40% by dry weight monosaccharides.

11. The sweetener composition of any one of claims 1 to 10, wherein the amount of sucrose, lactose, maltose, fructose, sugar alcohol (polyol), allulose, tagatose, maltodextrin, resistant maltodextrin, erythritol, inulin or any combination thereof is less than the amount of the xylo-oligosaccharides and/or the amount of the cellulose-based saccharides.

12. The sweetener composition of any one of claims 1 to 11, wherein the xylo-oligosaccharides comprise xylose monomers and arabinose monomers collectively at a ratio of from 20:1 to 2:1.

13. The sweetener composition of any one of claims 1 to 12, further comprising a compound selected from a polysaccharide, a cellulosic polysaccharide, cellulose, a hemicellulosic polysaccharide, xylan, a polysaccharide derivative, a cellulose derivative, carboxymethylcellulose, a polysaccharide aggregate, a lignocellulosic material, or any combination thereof;
preferably wherein the sweetener composition comprises the polysaccharides, wherein the sweetener composition comprises at most 30% of the polysaccharides by dry weight.

14. The sweetener composition of any one of claims 1 to 13, further comprising a compound selected from a phenolic compound, a lignin, a portion of a lignin, a product of lignin breakdown, ferulic acid, a ferulic acid derivative, or any combination thereof.

15. A foodstuff comprising from 1% to 50% by dry weight of a sweetener composition according to any one of claims 1 to 14;
preferably wherein the foodstuff is a cake, cookie, brownie, brookie, candy, cereal bar, nut bar, pie, cobbler, pastry, bun, scone, bread, roll, Danish, donut, torte, muffin, cupcake, milkshake, ice cream, frozen yogurt, custard, gelato, waffle, pancake, jam, or a combination thereof.
